(19) Europäisches Patentamt / European Patent Office / Office européen des brevets

(11) **EP 3 550 276 A1**

(12) **EUROPEAN PATENT APPLICATION**
published in accordance with Art. 153(4) EPC

(43) Date of publication:
**09.10.2019 Bulletin 2019/41**

(21) Application number: **18711214.9**

(22) Date of filing: **09.02.2018**

(51) Int Cl.:
*G01L 5/16* (2006.01)     *G01L 1/14* (2006.01)

(86) International application number:
**PCT/JP2018/004518**

(87) International publication number:
**WO 2019/155591 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Tri-Force Management Corporation Ageo-shi, Saitama 362-0003 (JP)**

(72) Inventors:
• **OKADA, Kazuhiro**
  **Saitama 3620003 (JP)**
• **ERA, Satoshi**
  **Saitama 3620003 (JP)**

(74) Representative: **Schmitt-Nilson Schraud Waibel Wohlfrom**
**Patentanwälte Partnerschaft mbB**
**Pelkovenstraße 143**
**80992 München (DE)**

(54) **FORCE SENSOR**

(57)     A force sensor according to the present invention includes a closed loop shaped deformable body and a detection circuit that outputs an electric signal indicating an applied force or a moment on the basis of elastic deformation generated in the deformable body. The deformable body includes at least two fixed portions, at least two force receiving portions adjacent to the fixed portion in a closed loop shaped path of the deformable body, and a deformable portion positioned between the fixed portion and the force receiving portion adjacent to each other in the closed loop shaped path. The deformable portion includes: a main curved portion having a curved main curved surface; a fixed portion-side curved portion connecting the main curved portion to the corresponding fixed portion and having a fixed portion-side curved surface; and a force receiving portion-side curved portion connecting the main curved portion to the corresponding force receiving portion and having a force receiving portion-side curved surface. Both of the curved surfaces are provided on the positive side on the Z-axis or the negative side on the Z-axis of the deformable portion, with mutually different curved directions. The detection circuit outputs an electric signal on the basis of elastic deformation generated in the main curved portion.

FIG. 4

EP 3 550 276 A1

**Description**

Technical Field

The present invention relates to a force sensor, and more particularly to a sensor having a function of outputting a force applied in a predetermined axial direction and a moment (torque) applied around a predetermined rotational axis as an electric signal.

Background Art

For example, Patent Literature 1 describes a force sensor having a function of outputting a force applied in a predetermined axial direction and a moment applied around a predetermined rotational axis as an electric signal, and widely used for force control in industrial robots. In recent years, force sensors are also adopted in life supporting robots. With expansion of the market of the force sensor, there are increased demands for lower prices and higher performance in the force sensors.

Meanwhile, the force sensor includes a capacitance type force sensor that detects one of a force and a moment on the basis of a variation amount of an electrostatic capacitance value of a capacitive element, and a strain gauge type force sensor that detects one of the force and the moment on the basis of a variation amount of an electric resistance value of a strain gauge. Among them, the strain gauge type force sensor includes a strain body (elastic body) having a complicated structure, and further needs a step of attaching the strain gauge to the strain generating body in the manufacturing process. Due to this high manufacturing cost of the strain gauge type force sensor, it is difficult to achieve lower prices.

In contrast, the electrostatic capacitance type force sensor can measure one of a force and a moment applied by a pair of parallel flat plates (capacitive elements), making it possible to simplify the structure of the strain generating body including the capacitive elements. That is, since the capacitance type force sensor needs relatively lower manufacturing cost, there is an advantage of easily lowering the price. Therefore, by further simplifying the structure of the strain generating body including the capacitive elements, it is possible to further lower the price in the capacitance type force sensor.

Under such backgrounds, the applicants proposed in the international patent application PCT/JP 2017/008843 (JP No. 2017-539470 A) a force sensor including an annular deformable body arranged so as to surround an origin O when viewed in the Z-axis direction and configured to generate elastic deformation by action of one of a force and a moment, in which the deformable body includes a curved portion. More specifically, the force sensor includes a deformable body including: two fixed portions fixed with respect to the XYZ three-dimensional coordinate system; two force receiving portions positioned alternately with the two fixed portions in an annular path of the deformable body and configured to receive ation of one of the force and the moment; and four deformable portions positioned between the fixed portion and the force receiving portion adjacent to each other in the annular path, and each of the deformable portions is curved (bulges) in the negative direction on the Z-axis, for example.

The applicants performed intensive studies to further enhance the force sensor as described above and have found that providing a curved portion at a connecting portion between the deformable portion and the fixed portion and the force receiving portion can alleviate stress concentration on the connecting portion to further enhance the reliability of the force sensor.

Citation List

Patent Literature

Patent Literature 1: JP 2004-354049 A

The present invention is on the basis of the above findings. That is, an object of the present invention is to provide a highly reliable capacitance type force sensor including a deformable body having a curved portion.

Summary of Invention

A force sensor according to a first aspect of the present invention detects at least one of a force in each axial direction and a moment around each axis in an XYZ three-dimensional coordinate system, the force sensor including:

a closed loop shaped deformable body configured to generate elastic deformation by action of the force and the moment; and
a detection circuit configured to output an electric signal indicating the applied force and the moment on the basis of the elastic deformation generated in the deformable body,
in which the deformable body includes: at least two fixed portions fixed with respect to the XYZ three-dimensional coordinate system; at least two force receiving portions positioned adjacent to the fixed portions in a closed loop shaped path of the deformable body and configured to receive action of the force and the moment; and a deformable portion positioned between the fixed portion and the force receiving portion adjacent to each other in the closed loop shaped path,
the deformable portion includes:

a main curved portion including a main curved surface curved in the Z-axis direction;
a fixed portion-side curved portion connecting the main curved portion with the corresponding fixed portion and including a fixed portion-side curved surface curved in the Z-axis direction; and
a force receiving portion-side curved portion connecting the main curved portion with the corresponding force receiving portion and including a force receiving portion-side curved surface curved in the Z-axis direction,
the main curved surface and each of the fixed portion-side curved surface and the force receiving portion-side curved surface are provided on one of the positive side on the Z-axis and the negative side on the Z-axis of the deformable portion, the curved surfaces having mutually different curved directions, and
the detection circuit outputs the electric signal on the basis of the elastic deformation generated in the main curved portion.

This force sensor may have a configuration in which
the main curved surface, and the fixed portion-side curved surface and the force receiving portion-side curved surface are provided on the negative side on the Z-axis of the deformable portion,
the main curved surface is curved toward the negative side on the Z-axis, and
the fixed portion-side curved surface and the force receiving portion-side curved surface are curved toward the positive side on the Z-axis.

A force sensor according to a second aspect of the present invention detects at least one of a force in each axial direction and a moment around each axis in an XYZ three-dimensional coordinate system, the force sensor including:

a closed loop shaped deformable body configured to generate elastic deformation by action of the force and the moment; and
a detection circuit configured to output an electric signal indicating the applied force and the moment on the basis of the elastic deformation generated in the deformable body,
in which the deformable body includes: at least two fixed portions fixed with respect to the XYZ three-dimensional coordinate system; at least two force receiving portions positioned adjacent to the fixed portions in a closed loop shaped path of the deformable body and configured to receive action of the force and the moment; and a deformable portion positioned between the fixed portion and the force receiving portion adjacent to each other in the closed loop shaped path,
the deformable portion includes:

a main curved portion including a main curved surface curved toward the inside or outside of the closed loop shaped path;
a fixed portion-side curved portion connecting the main curved portion with the corresponding fixed portion and including a fixed portion-side curved surface curved toward the inside or outside of the closed loop shaped path; and
a force receiving portion-side curved portion connecting the main curved portion with the corresponding force receiving portion and including a force receiving portion-side curved surface curved toward the inside or outside of the closed loop shaped path,
the main curved surface and each of the fixed portion-side curved surface and the force receiving portion-side curved surface are provided on one of an inner peripheral surface and an outer peripheral surface of the deformable body, the curved surfaces having mutually different curved directions, and
the detection circuit outputs the electric signal on the basis of the elastic deformation generated in the main curved portion.

This force sensor may be configured to further include: a fixed body fixed with respect to the XYZ three-dimensional coordinate system; and
a force receiving body configured to move relative to the fixed body by the action of the force and the moment, and may have a configuration
in which the fixed body is connected to each of the fixed portions via a fixed body-side connecting member, and

the force receiving body is connected to each of the force receiving portions via a force receiving body-side connecting member.

This force sensor may be configured to further include: a fixed body fixed with respect to the XYZ three-dimensional coordinate system; and

a force receiving body configured to move relative to the fixed body by the action of the force and the moment, and may have a configuration

in which the fixed body is integrally formed with each of the fixed portions, and

the force receiving body is integrally formed with each of the force receiving portions.

The deformable body may be arranged so as to surround an origin when viewed in the Z-axis direction, and a through hole through which the Z-axis is inserted may be formed in each of the fixed body and the force receiving body.

The deformable body may have a circular shape or rectangular shape about an origin as a center, when viewed in the Z-axis direction.

A force sensor according to a third aspect of the present invention detects at least one of a force in each axial direction and a moment around each axis in an XYZ three-dimensional coordinate system, the force sensor including:

a fixed body fixed with respect to the XYZ three-dimensional coordinate system;
a closed loop shaped deformable body surrounding the Z-axis and configured to be connected to the fixed body to generate elastic deformation by action of the force and the moment;
a force receiving body connected to the deformable body and configured to move relative to the fixed body by the action of the force and the moment; and
a detection circuit configured to output an electric signal indicating the force and the moment applied to the force receiving body on the basis of the elastic deformation generated in the deformable body,
in which the deformable body includes: at least two fixed portions connected to the fixed body; at least two force receiving portions connected to the force receiving body and positioned adjacent to the fixed portions in a circumferential direction of the deformable body; and a deformable portion positioned between the fixed portion and the force receiving portion adjacent to each other,
the deformable portion includes:

a main curved portion including a main curved surface curved in the Z-axis direction;
a fixed portion-side curved portion connecting the main curved portion with the corresponding fixed portion and including a fixed portion-side curved surface curved in the Z-axis direction; and
a force receiving portion-side curved portion connecting the main curved portion with the corresponding force receiving portion and including a force receiving portion-side curved surface curved in the Z-axis direction,
the main curved surface and each of the fixed portion-side curved surface and the force receiving portion-side curved surface are provided on one of the positive side on the Z-axis and the negative side on the Z-axis, the curved surfaces having mutually different curved directions,
the detection circuit outputs the electric signal on the basis of the elastic deformation generated in the main curved portion,
the force receiving body includes a force receiving body surface facing one of the positive direction on the Z-axis and the negative direction on the Z-axis,
the fixed body includes a fixed body surface facing one of the positive direction on the Z-axis and the negative direction on the Z-axis, and
a distance from the deformable body to the force receiving body surface differs from a distance from the deformable body to the fixed body surface.

A force sensor according to a fourth aspect of the present invention detects at least one of a force in each axial direction and a moment around each axis in an XYZ three-dimensional coordinate system, the force sensor including:

a fixed body fixed with respect to the XYZ three-dimensional coordinate system;
a closed loop shaped deformable body surrounding the Z-axis and configured to be connected to the fixed body to generate elastic deformation by action of the force and the moment;
a force receiving body connected to the deformable body and configured to move relative to the fixed body by the actioin of the force and the moment; and
a detection circuit configured to output an electric signal indicating the force and the moment applied to the force receiving body on the basis of the elastic deformation generated in the deformable body,
in which the deformable body includes: at least two fixed portions connected to the fixed body; at least two force receiving portions connected to the force receiving body and positioned adjacent to the fixed portions in a circumferential direction of the deformable body; and a deformable portion positioned between the fixed portion and the force receiving portion adjacent to each other,
the deformable portion includes:

a main curved portion including a main curved surface curved toward the inside or outside of the closed loop shaped path;
a fixed portion-side curved portion connecting the main curved portion with the corresponding fixed portion and including a fixed portion-side curved surface curved toward the inside or outside of the closed loop shaped path; and
a force receiving portion-side curved portion connecting the main curved portion with the corresponding force receiving portion and including a force receiving portion-side curved surface curved toward the inside or outside of the closed loop shaped path,
the main curved surface and each of the fixed portion-side curved surface and the force receiving portion-side curved surface are provided on an inner peripheral surface or an outer peripheral surface of the deformable body, the curved surfaces having mutually different curved directions,
the detection circuit outputs the electric signal on the basis of the elastic deformation generated in the main curved portion,
the force receiving body includes a force receiving body surface facing one of the positive direction on the Z-axis and the negative direction on the Z-axis,
the fixed body includes a fixed body surface facing one of the positive direction on the Z-axis and the negative direction on the Z-axis, and
a distance from the deformable body to the force receiving body surface differs from a distance from the deformable body to the fixed body surface.

The force sensor according to the third and fourth aspects may have a configuration in which the force receiving body surface and the fixed body surface are parallel to the XY plane, and
a Z-coordinate value of the force receiving body surface differs from a Z-coordinate value of the fixed body surface.

The deformable body may surround one of the fixed body and the force receiving body, and
the other of the fixed body and the force receiving body may surround the deformable body.

Each of the fixed body, the force receiving body, and the deformable body may have a circular shape or a rectangular shape about the origin as a center, when viewed in the Z-axis direction.

The at least two fixed portions may be integrally formed with the fixed body, and
the at least two force receiving portions may be integrally formed with the force receiving body.

In each of the force sensor described above, the at least two force receiving portions and the at least two fixed portions may be each provided in the number of n (n is a natural number of 2 or more), being alternately positioned along the closed loop shaped path of the deformable body, and
the deformable portions may be provided in the number of 2n (n is a natural number of 2 or more) and each of the deformable portions may be arranged between the force receiving portion and the fixed portion adjacent to each other.

Moreover, in each of the force sensors described above, the detection circuit may include a displacement sensor arranged in the main curved portion and may output an electric signal indicating the applied force and the moment on the basis of a measurement value of the displacement sensor.

The displacement sensor may include a capacitive element having a displacement electrode arranged in the main curved portion and a fixed electrode arranged to face the displacement electrode and connected to the at least two fixed portions, and
the detection circuit may output an electric signal indicating the applied force and the moment on the basis of a variation amount of an electrostatic capacitance value of the capacitive element.

Alternatively, it is allowable to have a configuration in which
the at least two force receiving portions and the at least two fixed portions are provided in the number of two for each,
each of the fixed portions is arranged symmetrically with each other about the Y-axis at a site where the deformable body overlaps with the X-axis when viewed in the Z-axis direction,
each of the force receiving portions is arranged symmetrically about the X-axis at a site where the deformable body overlaps with the Y-axis when viewed in the Z-axis direction,
four deformable portions are provided, one each being arranged between the force receiving portion and the fixed portion adjacent to each other,
the displacement sensor includes four capacitive elements having four displacement electrodes each arranged at each of the main curved portions of each of the deformable portions and having four fixed electrodes each arranged to face each of the displacement electrodes and connected to each of the corresponding fixed portions,
each of the four capacitive elements is arranged at each of four sites at which the deformable body intersects the V-axis and the W-axis when viewed in the Z-axis direction, and

the detection circuit outputs an electric signal indicating the applied force and the moment on the basis of the variation amount of the electrostatic capacitance value of the four capacitive elements.

A deformable body-side support may be connected to each of the main curved portions of the deformable body, and

the displacement electrodes may be supported by the corresponding deformable body-side support.

A force sensor according to a fifth aspect of the present invention detects at least one of a force in each axial direction and a moment around each axis in an XYZ three-dimensional coordinate system, the force sensor including:

a closed loop shaped deformable body configured to generate elastic deformation by action of the force and the moment; and
a detection circuit configured to output an electric signal indicating the applied force and the moment on the basis of the elastic deformation generated in the deformable body,
in which the deformable body includes: four fixed portions fixed with respect to the XYZ three-dimensional coordinate system; four force receiving portions positioned adjacent to the fixed portions in a closed loop shaped path of the deformable body and configured to receive action of the force and the moment; and a deformable portion positioned between each of the fixed portions and each of the force receiving portions adjacent to each other in the closed loop shaped path,
the deformable portion includes:

a main curved portion including a main curved surface curved in the Z-axis direction;
a fixed portion-side curved portion connecting the main curved portion with the corresponding fixed portion and including a fixed portion-side curved surface curved in the Z-axis direction; and
a force receiving portion-side curved portion connecting the main curved portion with the corresponding force receiving portion and including a force receiving portion-side curved surface curved in the Z-axis direction,
the main curved surface and each of the fixed portion-side curved surface and the force receiving portion-side curved surface are provided on one of the positive side on the Z-axis and the negative side on the Z-axis of each of the deformable portions, the curved surfaces having mutually different curved directions, and
the detection circuit outputs the electric signal on the basis of the elastic deformation generated in the main curved portion.

A force sensor according to a sixth aspect of the present invention detects at least one of a force in each axial direction and a moment around each axis in an XYZ three-dimensional coordinate system, the force sensor including:

a closed loop shaped deformable body configured to generate elastic deformation by action of the force and the moment; and
a detection circuit configured to output an electric signal indicating the applied force and the moment on the basis of the elastic deformation generated in the deformable body,
in which the deformable body includes: four fixed portions fixed with respect to the XYZ three-dimensional coordinate system; four force receiving portions positioned adjacent to the fixed portions in a closed loop shaped path of the deformable body and configured to receive action of the force and the moment; and a deformable portion positioned between the fixed portion and the force receiving portion adjacent to each other in the closed loop shaped path,
the deformable portion includes:

a main curved portion including a main curved surface curved toward the inside or outside of the closed loop shaped path;
a fixed portion-side curved portion connecting the main curved portion with the corresponding fixed portion and including a fixed portion-side curved surface curved toward the inside or outside of the closed loop shaped path; and
a force receiving portion-side curved portion connecting the main curved portion with the corresponding force receiving portion and including a force receiving portion-side curved surface curved toward the inside or outside of the closed loop shaped path,
the main curved surface and each of the fixed portion-side curved surface and the force receiving portion-side curved surface are provided on one of an inner peripheral surface and an outer peripheral surface of the deformable body, the curved surfaces having mutually different curved directions, and
the detection circuit outputs the electric signal on the basis of the elastic deformation generated in the main curved portion.

In each of the above force sensor according to the fifth and sixth aspects, the four force receiving portions and the four fixed portions may be alternately positioned along the closed loop shaped path of the deformable body, and the deformable portions may be provided in the number of eight, each being arranged between the force receiving portion and the fixed portion adjacent to each other.

This force sensor may be configured to further include: a fixed body fixed with respect to the XYZ three-dimensional coordinate system; and
a force receiving body configured to move relative to the fixed body by the action of the force and the moment, and may have a configuration
in which the four fixed bodies are connected to the fixed portions via a fixed body-side connecting member, and
the four force receiving portions are connected to the force receiving bodies via a force receiving body-side connecting member.

Alternatively, this force sensor may be configured to further include: a fixed body fixed with respect to the XYZ three-dimensional coordinate system; and
a force receiving body configured to move relative to the fixed body by the action of the force and the moment, and may have a configuration
in which the four fixed bodies are integrally formed with the fixed portions, and
the four force receiving bodies are integrally formed with the force receiving portions.

The closed loop shaped deformable body may have a circular shape or a rectangular shape.

The detection circuit may include a displacement sensor arranged in the main curved portion and may output an electric signal indicating the applied force and the moment on the basis of a measurement value of the displacement sensor.

The displacement sensor may include a capacitive element having a displacement electrode arranged in the main curved portion and a fixed electrode arranged to face the displacement electrode and connected to at least one of the four fixed portions, and
the detection circuit may output an electric signal indicating the applied force and the moment on the basis of a variation amount of the electrostatic capacitance value of the capacitive element.

It is allowable to have a configuration in which
two of the four force receiving portions are arranged symmetrically about an origin on the X-axis when viewed in the Z-axis direction,
the remaining two of the four force receiving portions are arranged symmetrically about the origin on the Y-axis when viewed in the Z-axis direction, and
in a case where the V-axis and W-axis passing through the origin and forming an angle of 45° with respect to the X-axis and the Y-axis are defined on the XY plane,
two of the four fixed portions are arranged symmetrically about the origin on the V-axis when viewed in the Z-axis direction, and
the remaining two of the four fixed portions are arranged symmetrically about the origin on the W-axis when viewed in the Z-axis direction,
the deformable portions are provided in the number of eight, each being arranged between the force receiving portion and the fixed portion adjacent to each other,
the displacement sensor includes eight capacitive elements having eight displacement electrodes each arranged at each of the main curved portions of each of the deformable portions and having eight fixed electrodes each arranged to face each of the displacement electrodes and connected to each of the corresponding fixed portions, and
the detection circuit outputs an electric signal indicating the applied force and the moment on the basis of the variation amount of the electrostatic capacitance value of the eight capacitive elements.

In each of the force sensors described above, the main curved surface of the main curved portion may be formed with a smooth curved surface having no inflection point when observed along the closed loop shaped path.

Alternatively, in each of the force sensors described above, the main curved surface of the main curved portion may be formed with a curved surface along an arc when observed along the closed loop shaped path.

Alternatively, in each of the force sensors described above, the main curved surface of the main curved portion may be configured by a curved surface along an arc of an ellipse when observed along the closed loop shaped path.

In each of the force sensors described above, the main curved portion may have a non-curved linear section in at least one end region when observed along the closed loop shaped path.

A force sensor according to a seventh aspect of the present invention detects at least one of a force in each axial direction and a moment around each axis in an XYZ three-dimensional coordinate system, the force sensor including:

a fixed body surrounding the Z-axis and fixed with respect to the XYZ three-dimensional coordinate system;
a closed loop shaped deformable body surrounding the Z-axis and connected to the fixed body and configured to generate elastic deformation by action of the force and the moment;
a force receiving body surrounding the Z-axis and connected to the deformable body, and configured to move relative to the fixed body by the action of the force and the moment; and

a detection circuit configured to output an electric signal indicating the force and the moment applied to the force receiving body on the basis of elastic deformation generated in the deformable body,

in which the deformable body includes: at least two fixed portions connected to the fixed body; at least two force receiving portions connected to the force receiving body and positioned adjacent to the fixed portion in a circumferential direction of the deformable body; and a deformable portion positioned between the fixed portion and the force receiving portion adjacent to each other,

the deformable portion includes a curved portion curved in a predetermined direction,

the detection circuit outputs the electric signal on the basis of elastic deformation generated in the curved portion,

the force receiving body includes a force receiving body surface facing one of the positive direction on the Z-axis and the negative direction on the Z-axis, and

the deformable body includes a deformable body surface facing the same direction as the force receiving body surface, with the Z-coordinate of the deformable body surface being different from the Z-coordinate of the force receiving body surface.

The fixed body may have a fixed body surface facing the same direction as the force receiving body surface, and the Z-coordinate of the fixed body surface may differ from the Z-coordinate of the deformable body surface and from the Z-coordinate of the force receiving body surface.

Alternatively, a force sensor according to an eighth aspect of the present invention detects at least one of a force in each axial direction and a moment around each axis in an XYZ three-dimensional coordinate system, the force sensor including:

a fixed body surrounding the Z-axis and fixed with respect to the XYZ three-dimensional coordinate system;

a closed loop shaped deformable body surrounding the Z-axis and connected to the fixed body, and configured to generate elastic deformation by action of the force and the moment;

a force receiving body surrounding the Z-axis and connected to the deformable body, and configured to move relative to the fixed body by the action of the force and the moment; and

a detection circuit configured to output an electric signal indicating the force and the moment applied to the force receiving body on the basis of elastic deformation generated in the deformable body,

in which the deformable body includes: at least two fixed portions connected to the fixed body; at least two force receiving portions connected to the force receiving body and positioned adjacent to the fixed portion in a circumferential direction of the deformable body; and a deformable portion positioned between the fixed portion and the force receiving portion adjacent to each other,

the deformable portion includes a curved portion curved in a predetermined direction,

the detection circuit outputs the electric signal on the basis of elastic deformation generated in the curved portion,

the fixed body includes a fixed body surface facing one of the positive direction on the Z-axis and the negative direction on the Z-axis, and

the deformable body includes a deformable body surface facing the same direction as the fixed body surface, with the Z-coordinate of the deformable body surface being different from the Z-coordinate of the fixed body surface.

In the above force sensor according to the seventh and eighth aspects, each of the fixed body, the force receiving body, and the deformable body may have a circular or rectangular shape about an origin as a center, when viewed in the Z-axis direction.

Moreover, the force receiving body and the fixed body may be arranged so as to sandwich the deformable body.

Alternatively, the force receiving body and the fixed body may be arranged on the same side with respect to the deformable body.

Moreover, it is allowable to have a configuration,

in which one of the fixed body and the force receiving body includes a sensor-side projection in a region facing an attachment object to which the force sensor is attached,

the sensor-side projection is accommodated in an attachment recess formed in the attachment object when the force sensor is attached to the attachment object, and

the sensor-side projection is pressed toward the inside of the attachment recess by an inner peripheral surface of the attachment recess.

Alternatively, it is allowable to have a configuration,

in which one of the fixed body and the force receiving body includes a sensor-side recess in a region facing an attachment object to which the force sensor is attached,

the sensor-side recess accommodates an attachment projection formed in the attachment object when the force sensor is attached to the attachment object, and

an inner peripheral surface of the sensor-side recess presses the attachment projection toward the inside of the sensor-side recess.

A force sensor according to a ninth aspect of the present invention is attached to an attachment object having an attachment recess and configured to detect at least one of a force in each axial direction and a moment around each axis in the XYZ three-dimensional coordinate system, the force sensor including:

a deformable body configured to generate elastic deformation by the action of the force and the moment;
a fixed body connected to the deformable body and fixed with respect to XYZ three-dimensional coordinates; and
a force receiving body connected to the deformable body and configured to move relative to the fixed body by the action of the force and the moment,
in which one of the fixed body and the force receiving body includes a sensor-side projection to be accommodated in the attachment recess, in a region facing the attachment object, and
the sensor-side projection is pressed toward the inside of the attachment recess by an inner peripheral surface of the attachment recess when the sensor-side projection is accommodated in the attachment recess.

An acute angle formed by an outer peripheral surface of the sensor-side projection with respect to an attachment direction when the force sensor according to the ninth aspect is attached to the attachment object may be smaller than an acute angle formed by the inner peripheral surface of the attachment recess with respect to the attachment direction.

The sensor-side projection may be provided to face each other with an interval when viewed in an attachment direction when the force sensor is attached to the attachment object, or may be provided continuously or intermittently along a closed loop shaped path.

A force sensor according to a tenth aspect of the present invention is attached to an attachment object having an attachment projection and configured to detect at least one of a force in each axial direction and a moment around each axis in the XYZ three-dimensional coordinate system, the force sensor including:

a deformable body configured to generate elastic deformation by action of the force and the moment;
a fixed body connected to the deformable body and fixed with respect to XYZ three-dimensional coordinates; and
a force receiving body connected to the deformable body and configured to move relative to the fixed body by the action of the force and the moment,
in which one of the fixed body and the force receiving body includes a sensor-side recess to be accommodated in the attachment projection, in a region facing the attachment object, and
an inner peripheral surface of the sensor-side recess presses the attachment projection toward the inside of the sensor-side recess when the sensor-side recess accommodates the attachment projection.

The acute angle formed by the inner peripheral surface of the sensor-side recess with respect to the attachment direction when the force sensor is attached to the attachment object may be greater than the acute angle formed by the outer peripheral surface of the attachment projection with respect to the attachment direction.

Moreover, the attachment projection is provided to face each other with an interval when viewed in an attachment direction when the force sensor is attached to the attachment object, or may be provided continuously or intermittently along a closed loop shaped path.

Note that a combination body including the force sensor according to the tenth aspect and the attachment object to which the force sensor is attached is also within the scope of the present invention.

Alternatively, a force sensor according to an eleventh aspect of the present invention is attached to an attachment object having an attachment hole and configured to detect at least one of a force in each axial direction and a moment around each axis in an XYZ three-dimensional coordinate system, the force sensor including:

a deformable body configured to generate elastic deformation by action of the force and the moment;
a fixed body connected to the deformable body and fixed with respect to XYZ three-dimensional coordinates; and
a force receiving body connected to the deformable body and configured to move relative to the fixed body by the action of the force and the moment,
in which one of the fixed body and the force receiving body includes a through hole through which a fixture for attaching the force sensor to the attachment object passes,
an attachment object-side edge of the through hole includes a protrusion protruding toward the attachment object, and
the protrusion presses an edge of the attachment hole when the force sensor is attached to the attachment object.

In the force sensor according to the eleventh aspect described above, it is allowable to have a configuration in which
a cone-shaped attachment-side tapered surface is formed at the edge of the attachment hole,

a sensor-side tapered surface tapered toward the attachment object is formed on an outer peripheral surface of the protrusion,

the sensor-side tapered surface presses the attachment-side tapered surface when the force sensor is attached to the attachment object, and

an acute angle formed by the sensor-side tapered surface with respect to an attachment direction when the force sensor is attached to the attachment object is smaller than an acute angle formed by the attachment-side tapered surface with respect to the attachment direction.

Note that a combination body including the force sensor according to the eleventh aspect and the attachment object to which the force sensor is attached is also within the scope of the present invention.

Brief Description of Drawings

FIG. 1 is a schematic perspective view illustrating a basic structure of a force sensor according to an embodiment of the present invention.

FIG. 2 is a schematic plan view illustrating the basic structure of FIG. 1.

FIG. 3 is a cross-sectional view taken along line [3]-[3] in FIG. 2.

FIG. 4 is an enlarged view of a rectangular region R indicated by a one-dot chain line in FIG. 3.

FIG. 5 is a schematic plan view for illustrating elastic deformation generated in each of deformable portions when a moment +Mx around the positive X-axis is applied to the basic structure in FIG. 1.

FIG. 6 is a schematic cross-sectional view of FIG. 5. FIG. 6(a) is a cross-sectional view taken along line [6a]-[6a] of FIG. 5, and FIG. 6(b) is a cross-sectional view taken along line [6b]-[6b] of FIG. 5.

FIG. 7 is a schematic plan view for illustrating elastic deformation generated in each of deformable portions when a moment +My around the positive Y-axis is applied to the basic structure in FIG. 1.

FIG. 8 is a schematic cross-sectional view of FIG. 7. FIG. 8(a) is a cross-sectional view taken along line [8a]-[8a] of FIG. 7, and FIG. 8(b) is a cross-sectional view taken along line [8b]-[8b] of FIG. 7.

FIG. 9 is a schematic plan view for illustrating elastic deformation generated in each of deformable portions when a moment +Mz around the positive Z-axis is applied to the basic structure in FIG. 1.

FIG. 10 is a schematic cross-sectional view of FIG. 9. FIG. 10(a) is a cross-sectional view taken along line [10a]-[10a] of FIG. 9, and FIG. 10(b) is a cross-sectional view taken along line [10b]-[10b] of FIG. 9.

FIG. 11 is a schematic plan view for illustrating elastic deformation generated in each of the deformable portions when a force +Fz in the positive direction on the Z-axis is applied to the basic structure in FIG. 1.

FIG. 12 is a schematic cross-sectional view of FIG. 11. FIG. 12(a) is a cross-sectional view taken along line [12a]-[12a] of FIG. 11, and FIG. 12(b) is a cross-sectional view taken along line [12b]-[12b] of FIG. 11.

FIG. 13 is a schematic plan view illustrating a force sensor using the basic structure of FIG. 1.

FIG. 14 is a cross-sectional view taken along line [14]-[14] in FIG. 13.

FIG. 15 is a table illustrating variations of the electrostatic capacitance values generated in each of capacitive elements when a force and a moment are applied to the force sensor in FIG. 13.

FIG. 16 is a schematic plan view illustrating a basic structure of a force sensor according to a second embodiment of the present invention.

FIG. 17 is a cross-sectional view taken along line [17]-[17] in FIG. 16.

FIG. 18 is a schematic plan view illustrating a rectangular deformable body.

FIG. 19 is a schematic cross-sectional view of FIG. 18. FIG. 19(a) is a cross-sectional view taken along line [19a]-[19a] of FIG. 18, and FIG. 19(b) is a cross-sectional view taken along line [19b]-[19b] of FIG. 18.

FIG. 20 is a schematic plan view of a square-shaped rectangular deformable body applicable to the present invention.

FIG. 21 is a schematic cross-sectional view of FIG. 20. FIG. 21(a) is a cross-sectional view taken along line [21a]-[21a] of FIG. 20, FIG. 21(b) is a cross-sectional view taken along line [21b]-[21b] of FIG. 20, FIG. 21(c) is a cross-sectional view taken along line [21c]-[21c] in FIG. 20, and FIG. 21(d) is a cross-sectional view taken along line [21d]-[21d] of FIG. 20.

FIG. 22 is a schematic cross-sectional view illustrating a basic structure of the force sensor according to the present embodiment adopting the rectangular deformable body of FIG. 20.

FIG. 23 is a diagram for illustrating the displacement generated at each of detection points of the rectangular deformable body illustrated in FIG. 20 when the force +Fx in the positive direction on the X-axis is applied to the force receiving body.

FIG. 24 is a diagram for illustrating the displacement generated at each of detection points of the rectangular deformable body illustrated in FIG. 20 when the force +Fz in the positive direction on the Z-axis is applied to the force receiving body.

FIG. 25 is a diagram for illustrating the displacement generated at each of detection points of the rectangular deformable body illustrated in FIG. 20 when the moment +Mx in the positive direction on the X-axis is applied to the force receiving body.

FIG. 26 is a diagram for illustrating the displacement generated at each of detection points of the rectangular deformable body illustrated in FIG. 20 when the moment +Mz in the positive direction on the Z-axis is applied to the force receiving body.

FIG. 27 is a table listing an increase or decrease in a separation distance between each of the detection points of the rectangular deformable body in FIG. 20 and the fixed body when the force in each axial direction and the moment in each axial direction on the XYZ three-dimensional coordinate system is applied to the force receiving body.

FIG. 28 is a schematic plan view illustrating the force sensor according to the present embodiment adopting the basic structure of FIG. 22.

FIG. 29 is a cross-sectional view taken along line [29]-[29] in FIG. 28.

FIG. 30 is a table illustrating variations of the electrostatic capacitance values generated in each of capacitive elements when a force and a moment are applied to the force sensor in FIG. 28.

FIG. 31 is a table listing a cross-axis sensitivity of a force in each axial direction and a moment around each axis in a force sensor 301c illustrated in FIG. 28.

FIG. 32 is a schematic plan view illustrating a basic structure adopted as a force sensor according to a fourth embodiment of the present invention.

FIG. 33 is a table listing an increase or decrease in a separation distance between each of the detection points of the basic structure in FIG. 32 and the fixed body when the force in each of the axial directions and the moment in each of the axis directions on the XYZ three-dimensional coordinate system is applied to the force receiving body.

FIG. 34 is a schematic plan view of the force sensor according to the fourth embodiment of the present invention.

FIG. 35 is a table illustrating variations of the electrostatic capacitance values generated in each of capacitive elements when a force and a moment are applied to the force sensor in FIG. 34.

FIG. 36 is a table illustrating the variation of the electrostatic capacitance value generated in each of the capacitive elements when the force in each of the axial directions and the moment in each of the axial directions of the XYZ three-dimensional coordinate system is applied to the force receiving body.

FIG. 37 is a table listing cross-axis sensitivity of the force sensor of FIG. 34 calculated on the basis of variations of each of the electrostatic capacitance values illustrated in FIG. 36.

FIG. 38 is a table illustrating an inverse matrix of a matrix corresponding to cross-axis sensitivity illustrated in FIG. 37.

FIG. 39 is a schematic side view illustrating a deformable body according to a modification of FIG. 4.

FIG. 40 is a schematic side view illustrating a deformable body according to a further modification of FIG. 4.

FIG. 41 is a schematic cross-sectional view illustrating a combination body obtained by a force sensor according to a modification of FIG. 1 and an attachment object to which the force sensor is attached.

FIG. 42 is a schematic bottom view illustrating a sensor-side projection of the force sensor illustrated in FIG. 41.

FIG. 43 is a schematic bottom view illustrating another example of the attachment projection of the force sensor, illustrating attachment projections continuously provided along an annular path.

FIG. 44 is a schematic bottom view illustrating another example of the attachment projection of the force sensor, illustrating attachment projections intermittently provided along the annular path.

FIG. 45 is a schematic cross-sectional view illustrating another combination body obtained by the force sensor according to the modification of FIG. 1 and the attachment object to which the force sensor is attached.

FIG. 46 is a schematic side view illustrating an exemplary method of manufacturing a deformable body, illustrating a second deformable portion before the force receiving portion-side curved portion and the fixed portion-side curved portion are formed.

FIG. 47 is a diagram for illustrating an example of a method of manufacturing a deformable body, and is a schematic side view illustrating a second deformable portion after the force receiving portion-side curved portion and the fixed portion-side curved portion are formed.

FIG. 48 is a schematic plan view illustrating a modification of the basic structure of FIG. 1.

FIG. 49 is a cross-sectional view taken along line [48]-[48] in FIG. 48.

FIG. 50 is a schematic cross-sectional view illustrating a modification of the basic structure of FIG. 1.

Description of Embodiments

<<< § 1. Force sensor according to first embodiment of the present invention >>>

Hereinafter, a force sensor according to a first embodiment of the present invention will be described in detail with reference to the accompanying drawings.

<1-1. Basic structure>

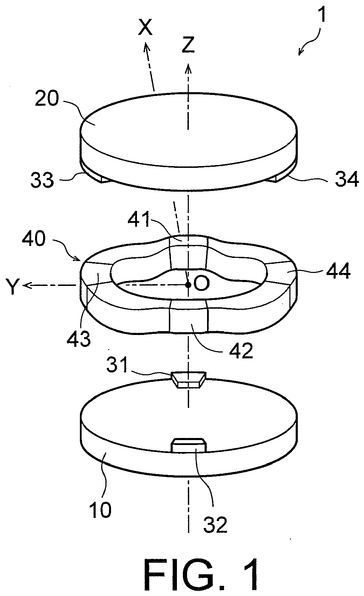

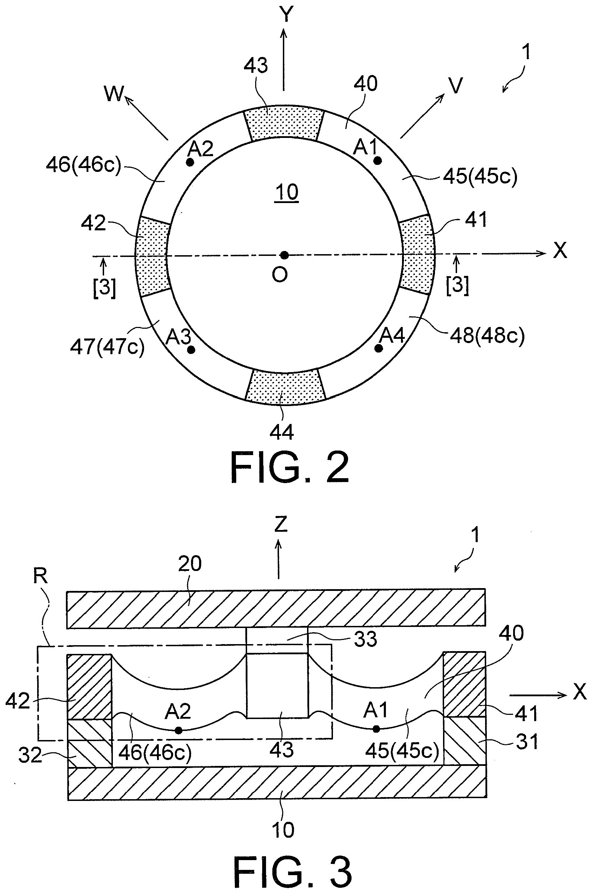

FIG. 1 is a schematic perspective view illustrating a basic structure 1 of a force sensor according to the first embodiment of the present invention. FIG. 2 is a schematic plan view illustrating the basic structure 1 of FIG. 1. FIG. 3 is a cross-sectional view taken along line [3]-[3] in FIG. 2. In FIG. 2, a left-right direction is defined as an X-axis, an up-down direction is defined as a Y-axis, and a depth direction is defined as a Z-axis (not illustrated). In the present description, the positive direction on the Z-axis will be referred to as an upper or upward direction, and the negative direction on the Z-axis will be referred to as a lower or downward direction, as illustrated in FIG. 1. In addition, the terms related to the direction of moment are defined such that "around the positive X-axis" represents a rotational direction of rotating a right screw to advance the right screw in the positive direction on the X-axis, and the "around the negative X-axis" represents the reversed rotational direction. The definition of the direction of moment is similarly applied to the Y-axis and the Z-axis.

As illustrated in FIGS. 1 to 3, the basic structure 1 includes a disk-shaped fixed body 10 having an upper surface parallel to the XY plane, a force receiving body 20 that moves relative to the fixed body 10 upon action of one or both of a force and a moment, and an annular deformable body 40 connected to the fixed body 10 and the force receiving body 20 and configured to generate elastic deformation by the movement of the force receiving body 20 relative to the fixed body 10. The fixed body 10, the force receiving body 20 and the deformable body 40 may be concentric with each other with a same outer diameter. In FIG. 2, in order to clearly illustrate the deformable body 40, illustration of the force receiving body 20 is omitted.

In the basic structure 1 according to the present embodiment, a capacitive element is arranged at a predetermined position of a gap formed between the deformable body 40 and the fixed body 10, and functions as a force sensor by connecting a predetermined detection circuit 50 to the capacitive element. The detection circuit 50 is provided for measuring one or both of the applied force and the moment on the basis of a variation amount in the electrostatic capacitance value of the capacitive element. A specific arrangement mode of the capacitive element and a specific method applied to measure the applied force and the moment will be described below.

As illustrated in FIGS. 1 and 2, the deformable body 40 is arranged with an origin O of the XYZ three-dimensional coordinate system as a center so as to be in parallel with the XY plane. Herein, it is assumed that the XY plane exists at a position half the thickness in the Z-axis direction of the deformable body 40 as illustrated in FIG. 3. As the material of the deformable body 40, for example, a metal can be adopted.

As illustrated in FIG. 2, the deformable body 40 includes a first fixed portion 41 located on the positive X-axis, a second fixed portion 42 located on the negative X-axis, and a first force receiving portion 43 located on the positive Y-axis, and a second force receiving portion 44 located on the negative Y-axis. As will be described below, each of the fixed portions 41 and 42 and each of the force receiving portions 43 and 44 are regions to which the fixed body 10 and the force receiving body 20 of the deformable body 40 are connected, and they not sites having characteristics different from the other regions of the deformable body 40. Accordingly, the material of each of the fixed portions 41 and 42 and the force receiving portions 43 and 44 is the same as the material of the other regions of the deformable body 40. Note that, for convenience of explanation, the individual fixed portions 41 and 42 and the individual force receiving portions 43 and 44 are indicated by different symbols from the other regions of the deformable body 40.

As illustrated in FIG. 2, the deformable body 40 includes: a first deformable portion 45 located between the first fixed portion 41 and the first force receiving portion 43 (first quadrant I of the XY plane); a second deformable portion 46 located between the first force receiving portion 43 and the second fixed portion 42 (second quadrant II of the XY plane); a third deformable portion 47 located between the second fixed portion 42 and the second force receiving portion 44 (third quadrant III of the XY plane); and a fourth deformable portion 48 located between the second force receiving portion 44 and the first fixed portion 41 (fourth quadrant IV of the XY plane). Both ends of each of the deformable portions 45 to 48 are respectively integrally coupled to the fixed portions 41 and 42 and the force receiving portions 43 and 44, adjacent to each other along a closed loop shaped path. With this structure, the forces and the moments applied to the force receiving portions 43 and 44 are reliably transmitted to the individual deformable portions 45 to 48, thereby generating elastic deformation corresponding to the applied force and the moment in the deformable portions 45 to 48.

As illustrated in FIGS. 1 and 3, the basic structure 1 further includes a first connecting member 31 and a second connecting member 32 connecting the fixed body 10 to the deformable body 40, and a third connecting member 33 and a fourth connecting member 34 connecting the force receiving body 20 to the deformable body 40. The first connecting member 31 connects a lower surface (lower surface in FIG. 3) of the first fixed portion 41 to an upper surface of the fixed body 10. The second connecting member 32 connects a lower surface of the second fixed portion 42 to an upper surface of the fixed body 10. The third connecting member 33 connects an upper surface (upper surface in FIG. 3) of the first force receiving portion 43 to a lower surface of the force receiving body 20. The fourth connecting member 34 connects an upper surface of the second force receiving portion 44 to the lower surface of the force receiving body 20. Each of the connecting members 31 to 34 has rigidity enough to be regarded as substantially a rigid body. This causes the force and a moment applied to the force receiving body 20 to effectively generate elastic deformation on each of the deformable portions 45 to 48.

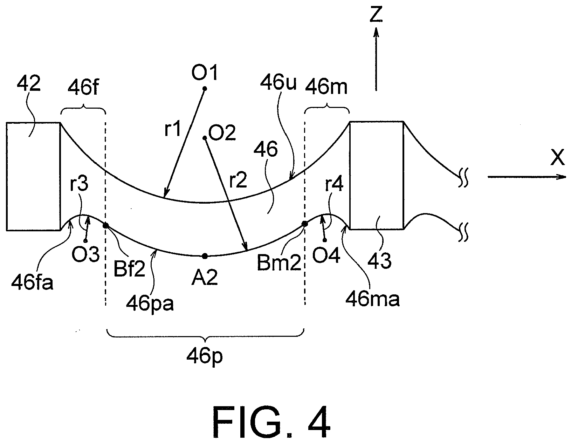

Next, each of the deformable portions 45 to 48 of the deformable body 40 will be described in detail with reference to FIG. 4. Since each of the deformable portions 45 to 48 has the same structure, the second deformable portion 46 will be described as a representative.

FIG. 4 is an enlarged view of a rectangular region R indicated by a one-dot chain line in FIG. 3, and illustrates a second deformable portion 46. The second deformable portion 46 includes: a main curved portion 46p having a main curved surface 46pa curved in a negative direction on the Z-axis (downward direction in FIG. 4); a fixed portion-side curved portion 46f connecting the main curved portion 46p with the fixed portion 42 and having a fixed portion-side curved surface 46fa curved in the positive direction on the Z-axis; and a force receiving portion-side curved portion 46m connecting the main curved portion 46p with the force receiving portion 43 and having a force receiving portion-side curved surface 46ma curved in the Z-axis direction. As illustrated in FIG. 4, the main curved surface 46pa together with the fixed portion-side curved surface 46fa and the force receiving portion-side curved surface 46ma constitute a Z-axis negative-side surface of the second deformable portion 46. In the present embodiment, the main curved surface 46pa is curved toward the negative direction on the Z-axis, while the fixed portion-side curved surface 46fa and the force receiving portion-side curved surface 46ma are curved toward the positive direction on the Z-axis.

More specifically, as illustrated in FIG. 4, a Z-axis positive-side surface 46u on the Z-axis positive side of the second deformable portion 46 is a curved surface along an arc having a radius r1 about a point O1 as a center, while the main curved surface 46pa of the second deformable portion 46 is a curved surface along an arc having a radius r2 about a point O2 as a center. Both of these curved surfaces 46u and 46pa are curved toward the negative side of the Z-axis. The fixed portion-side curved surface 46fa is a curved surface along an arc having a radius r3 with about a point O3 as a center and the force receiving portion-side curved surface 46ma is a curved surface along an arc having a radius r4 about a point O4 as a center. These curved surfaces 46fa and 46ma are curved toward the positive side on the Z-axis. In the illustrated example, the points O1 and O2 and the second measurement site A2 are arranged on a straight line parallel to the Z-axis, with a relationship r1 = r2 and r3 = r4 being satisfied. Of course, there is no need to satisfy such a relationship. Moreover, the shape of each of the curved surfaces 46u, 46pa, and 46ma is not limited to the shape along an arc of a perfect circle, and may have a shape along an arc of an elliptic or oblong shape, for example. This also applies to other embodiments and modifications described below.

Furthermore, as illustrated in FIG. 4, in the second deformable portion 46, the fixed portion-side curved portion 46f is smoothly connected to the main curved portion 46p via a fixed portion-side inflection point Bf2, and furthermore, the main curved portion 46p is smoothly connected to the force receiving portion-side curved portion 46m via a force receiving portion-side inflection point Bm2.

In contrast, as illustrated in FIG. 4, the Z-axis positive-side surface (upper surface in FIG. 4) of the second deformable portion 46 is formed by a curved surface curved simply in the negative direction on the Z-axis. This curved surface has a certain radius of curvature in the present embodiment.

With the above configuration, the second deformable portion 46 is formed to have a center of the closed loop shaped path from the second fixed portion 42 to the first force receiving portion 43 to be on the most toward the negative side on the Z-axis when observed along the path. As illustrated in FIG. 4, a second measurement site A2 used for detecting elastic deformation generated in the second deformable portion 46 is defined in the site located on the most toward the negative side. Accordingly, the second deformable portion 46 is configured symmetrically about the second measurement site A2 when observed along a closed loop shaped path.

Furthermore, although not illustrated, the first, third and fourth deformable portions 45, 47, and 48 are also configured similarly to the second deformable portion 46. That is, each of the first, third and fourth deformable portions 45, 47, and 48 includes a fixed portion-side curved portion and a force receiving portion-side curved portion having the curvature as described above, and includes a main curved portion sandwiched between these portions. In each of the deformable portions 45, 47, and 48, first, third, and fourth measurement sites are defined at individual sites located on the most toward the negative side on the Z-axis when observed along the closed loop shaped path. As a result, as illustrated in FIG. 2, when the V-axis and the W-axis passing through the origin O and forming an angle of 45° with respect to the X-axis and the Y-axis are defined on the XY plane, the first deformable portion 45 is symmetrical about the positive V-axis, the second deformable portion 46 is symmetrical about the positive W-axis, the third deformable portion 47 is symmetrical about the negative V-axis, and the fourth deformable portion 48 is symmetrical about the negative W-axis. In addition, the first to fourth measurement sites A1 to A4 of the deformable portions 46 to 48 are respectively arranged on the positive V-axis, the positive W-axis, the negative V-axis and the negative V-axis when viewed in the Z-axis direction, each one on each of the axes.

<1-2. Application of basic structure>

Next, application of the basic structure 1 will be described.

(1-2-1. Case where moment Mx around X-axis is applied to basic structure 1)

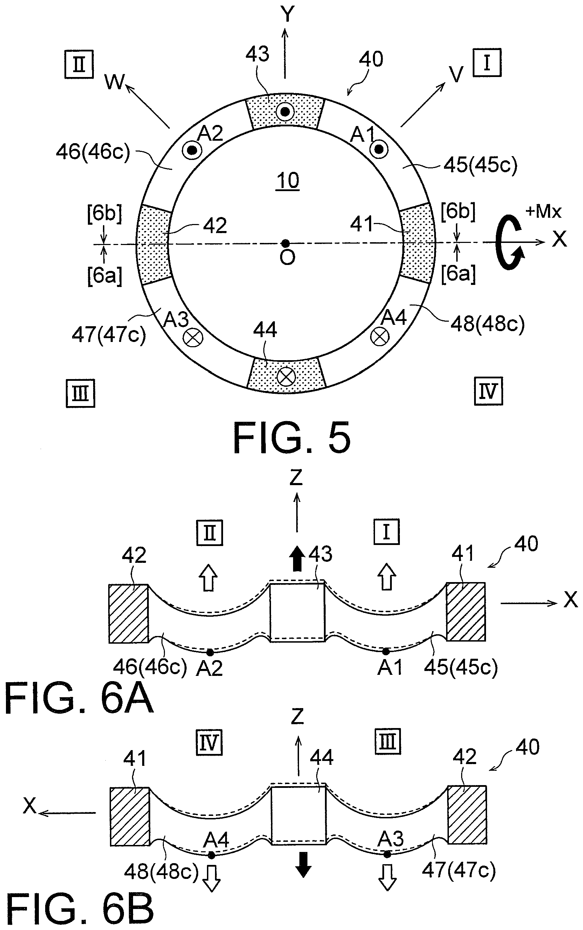

FIG. 5 is a schematic plan view for illustrating elastic deformation generated in each of the deformable portions 45 to 48 when a moment +Mx around the positive X-axis is applied to the basic structure 1 in FIG. 1. FIG. 6 is a schematic cross-sectional view of FIG. 5. FIG. 6(a) is a cross-sectional view taken along line [6a]-[6a] of FIG. 5, and FIG. 6(b) is a cross-sectional view taken along line [6b]-[6b] of FIG. 5. In FIG. 5 and FIG. 6, thick solid arrows indicate applied one of a force and a moment, and thick outlined arrows indicate directions of displacement of the measurement sites A1 to A4. This similarly applies to the other figures.

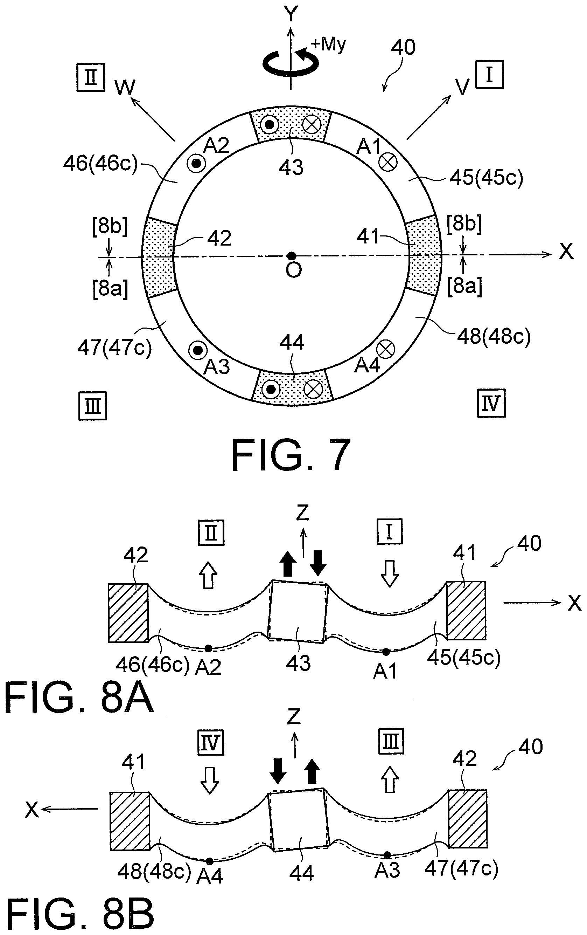

As illustrated in FIG. 5, when the moment +Mx around the positive X-axis is applied to the basic structure 1 via the force receiving body 20 (refer to FIGS. 1 and 3), a force in the positive direction on the Z-axis (upward direction in FIG. 6(a)) is applied to the first force receiving portion 43 of the deformable body 40, while a force in the negative direction on the Z-axis (downward direction in FIG. 6(b)) is applied to the second force receiving portion 44. In FIG. 5, the symbol of a circled black point attached to the first force receiving portion 43 indicate that a force is applied from the negative direction on the Z-axis to the positive direction on the Z-axis. The symbol of a circled x attached to the second force receiving portion 44 indicates that a force is applied from the positive direction on the Z-axis to the negative direction on the Z-axis. Representation of these symbols similarly applies to FIGS. 7, 9 and 11.

At this time, as illustrated in FIG. 6(a) and FIG. 6(b), the following elastic deformation is generated in the first to fourth deformable portions 45 to 48. That is, the first force receiving portion 43 is moved upward by the force in the positive direction on the Z-axis applied to the first force receiving portion 43, and thus, the end portion coupled to the first force receiving portion 43 among the first deformable portion 45 and the second deformable portion 46 is also moved upward. As a result, as illustrated in FIG. 6(a), the first deformable portion 45 and the second deformable portion 46 are generally moved upward except for the end portions coupled to the first and second fixed portions 41 and 42. That is, the first measurement site A1 and the second measurement site A2 move upward together. Meanwhile, the second force receiving portion 44 is moved downward by the force in the negative direction on the Z-axis applied to the second force receiving portion 44, and thus, the end portion coupled to the second force receiving portion 44 among the third deformable portion 47 and the fourth deformable portion 48 is moved downward. As a result, as illustrated in FIG. 6(b), the third deformable portion 47 and the fourth deformable portion 48 are generally moved downward except for the end portions coupled to the first and second fixed portions 41 and 42. That is, the third measurement site A3 and the fourth measurement site A4 move downward together.

In FIG. 5, such movement is represented by the symbol of a circled "+" or "-" attached to the positions of the measurement sites A1 to A4. Specifically, the measurement site having the symbol of circled point is displaced in the positive direction on the Z-axis by the elastic deformation of the deformable portion, while the measurement site having the circled x is displaced in the negative direction on the Z-axis by the elastic deformation of the deformable portion. This similarly applies to FIGS. 7, 9, and 11.

As a result, when the moment +Mx around the positive X-axis is applied to the force receiving body 20 of the basic structure 1, the separation distances between each of the first and second measurement sites A1 and A2 and the upper surface of the fixed body 10 (refer to FIG. 3) both increase, and the separation distance between each of the third and fourth measurement sites A3 and A4 and the upper surface of the fixed body 10 both decrease.

Although not illustrated, in a case where the moment -Mx around the negative X-axis is applied to the force receiving body 20 of the basic structure 1, the moving direction of each of the measurement sites A1 to A4 is opposite to the above-described direction. That is, due to the action of the moment -Mx around the negative X-axis, the separation distances between each of the first and second measurement sites A1 and A2 and the upper surface of the fixed body 10 (refer to FIG. 2) both decrease, and the separation distance between each of the third and fourth measurement sites A3 and A4 and the upper surface of the fixed body 10 both increase.

(1-2-2. Case where moment My around Y-axis is applied to basic structure 1)

FIG. 7 is a schematic plan view for illustrating elastic deformation generated in each of the deformable portions 45 to 48 when a moment +My around the positive Y-axis is applied to the basic structure 1 in FIG. 1. FIG. 8 is a schematic cross-sectional view of FIG. 7. FIG. 8(a) is a cross-sectional view taken along line [8a]-[8a] of FIG. 7, and FIG. 8(b) is a cross-sectional view taken along line [8b]-[8b] of FIG. 7.

As illustrated in FIGS. 7 and 8, when the moment +My around the positive Y-axis is applied to the basic structure 1 via the force receiving body 20 (refer to FIGS. 1 and 3), a force in the positive direction on the Z-axis is applied to the regions of the first and second force receiving portions 43 and 44 of the deformable body 40 on the negative side on the X-axis, while a force in the negative direction on the Z-axis is applied to the regions of the first and second force receiving portions 43 and 44 in the positive side on the X-axis.

At this time, as illustrated in FIG. 8(a) and FIG. 8(b), the following elastic deformation is generated in the first to fourth deformable portions 45 to 48. That is, the region on the positive side on the X-axis is moved downward by the force in the negative direction on the Z-axis applied to the first force receiving portion 43 on the positive side on the X-axis (right side in FIG. 8(a)), and thus, the end portion coupled to the first force receiving portion 43 among the first deformable portion 45 moves downward. As a result, as illustrated in FIG. 8(a), the first deformable portion 45 generally moves downward except for the end portion coupled to the first fixed portion 41. That is, the first measurement site A1 moves downward. Meanwhile, the region on the negative side on the X-axis is moved upward by the force in the positive direction on the Z-axis applied to the first force receiving portion 43 on the negative side on the X-axis (left side in FIG. 8(a), and thus, the end portion coupled to the first force receiving portion 43 among the second deformable portion 46 also moves upward. As a result, as illustrated in FIG. 8(a), the second deformable portion 46 generally moves upward except for the end portion coupled to the second fixed portion 42. That is, the second measurement site A2 moves upward.

Moreover, as illustrated in FIG. 8(b), the region on the negative side on the X-axis is moved upward by the force in the positive direction on the Z-axis applied to the second force receiving portion 44 on the negative side on the X-axis (right side in FIG. 8(b)), and thus, the end portion coupled to the second force receiving portion 44 among the third deformable portion 47 moves upward. As a result, as illustrated in FIG. 8(b), the third deformable portion 47 generally moves upward except for the end portion coupled to the second fixed portion 42. That is, the third measurement site A3 moves upward.

Meanwhile, as illustrated in FIG. 8(b), the region on the positive side on the X-axis is moved downward by the force in the negative direction on the Z-axis applied to the second force receiving portion 44 on the positive side on the X-axis (left side in FIG. 8(b)), and thus, the end portion coupled to the second force receiving portion 44 among the fourth deformable portion 48 moves downward. As a result, as illustrated in FIG. 8(b), the fourth deformable portion 48 moves downward as a whole, except for the end portion coupled to the first fixed portion 41. That is, the fourth measurement site A4 moves downward.

As a result, when a moment +My around the positive Y-axis is applied to the force receiving body 20 of the basic structure 1, the separation distances between each of the first and fourth measurement sites A1 and A4 and the upper surface of the fixed body 10(refer to FIG. 3) both decrease, while the separation distance between each of the second and third measurement sites A2 and A3 and the upper surface of the fixed body 10 both increase.

Although not illustrated, in a case where the moment -My around the negative Y-axis is applied to the force receiving body 20 of the basic structure 1, the moving direction of each of the measurement sites A1 to A4 is opposite to the above-described direction. That is, due to the action of the moment -My around the negative Y-axis, the separation distances between each of the first and fourth measurement sites A1 and A4 and the upper surface of the fixed body 10 (refer to FIG. 3) both increase, while the separation distance between each of the second and third measurement sites A2 and A3 and the upper surface of the fixed body 10 both decrease.

(1-2-3. Case where moment Mz around Z-axis is applied to basic structure 1)

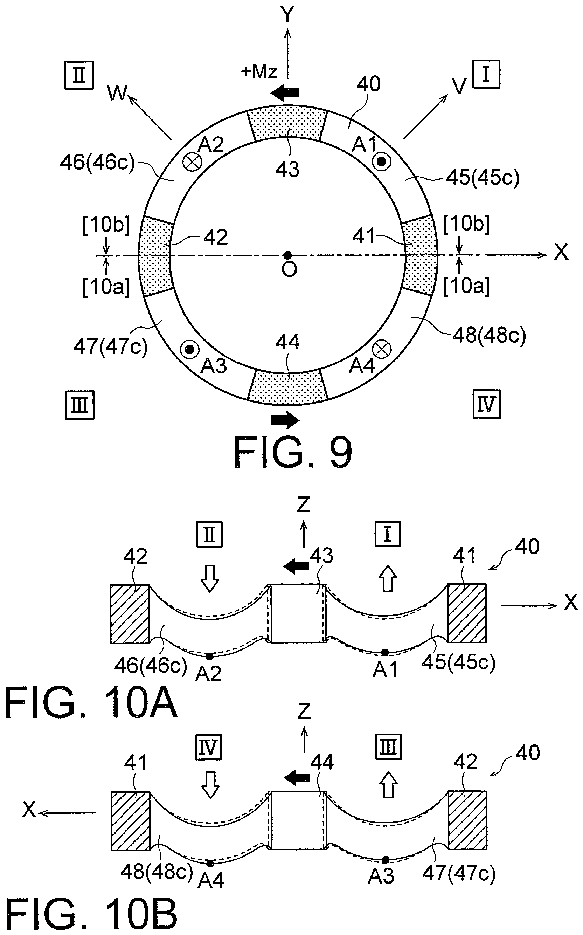

FIG. 9 is a schematic plan view for illustrating elastic deformation generated in each of the deformable portions 45 to 48 when a moment +Mz around the positive Z-axis is applied to the basic structure 1 in FIG. 1. FIG. 10 is a schematic cross-sectional view of FIG. 9. FIG. 10(a) is a cross-sectional view taken along line [10a]-[10a] of FIG. 9, and FIG. 10(b) is a cross-sectional view taken along line [10b]-[10b] of FIG. 9.

As illustrated in FIG. 9, when the moment +Mz around the positive Z-axis is applied to the basic structure 1 via the force receiving body 20 (refer to FIGS. 1 and 3), a force in the negative direction on the X-axis (left direction in FIG. 9) is applied to the first force receiving portion 43 of the deformable body 40, while a force in the positive direction on the X-axis (right direction in FIG. 9) is applied to the second force receiving portion 44.

At this time, as illustrated in FIG. 10(a) and FIG. 10(b), the following elastic deformation is generated in the first to fourth deformable portions 45 to 48. That is, since the first force receiving portion 43 moves in the negative direction on the X-axis due to the force in the negative direction on the X-axis applied to the first force receiving portion 43, a tensile force along the X-axis direction is applied to the first deformable portion 45. As a result, a first main curved portion 45p elastically deforms so as to increase the radius of curvature while maintaining the Z-coordinate values of the both end portions. That is, the first measurement site A1 moves upward. Meanwhile, the movement of the first force receiving portion 43 in the negative direction on the X-axis causes a compressive force along the X-axis direction to be applied to the second deformable portion 46. As a result, a second main curved portion 46p elastically deforms so as to decrease the radius of curvature while maintaining the Z-coordinate values of the both end portions. That is, the second measurement site A2 moves downward.

Moreover, since the second force receiving portion 44 moves in the positive direction on the X-axis due to the force in the positive direction on the X-axis applied to the second force receiving portion 44, a tensile force along the X-axis direction is applied to the third deformable portion 47. As a result, a third main curved portion 47p elastically deforms so as to increase the radius of curvature while maintaining the Z-coordinate values of the both end portions. That is, the third measurement site A3 moves upward. Meanwhile, the movement of the second force receiving portion 44 in the positive direction on the X-axis causes a compressive force along the X-axis direction to be applied to the fourth deformable portion 48. As a result, a fourth main curved portion 48p elastically deforms so as to decrease the radius of curvature while maintaining the Z-coordinate values of the both end portions. That is, the fourth measurement site A4 moves downward.

As a result, when a moment +Mz around the positive Z-axis is applied to the force receiving body 20 of the basic structure 1, the separation distances between each of the first and third measurement sites A1 and A3 and the upper surface of the fixed body 10 both increase, and the separation distance between each of the second and fourth measurement sites A2 and A4 and the upper surface of the fixed body 10 (refer to FIG. 2) both decrease.

Although not illustrated, in a case where the moment -Mz around the negative Z-axis is applied to the force receiving body 20 of the basic structure 1, the moving direction of each of the measurement sites A1 to A4 is opposite to the above-described direction. That is, due to the action of the moment -Mz around the negative Z-axis, the separation distances between each of the first and third measurement sites A1 and A3 and the upper surface of the fixed body 10 both decrease, and the separation distance between each of the second and fourth measurement sites A2 and A4 and the upper surface of the fixed body 10 (refer to FIG. 2) both increase.

(1-2-4. Case where force Fz in Z direction is applied to basic structure 1)

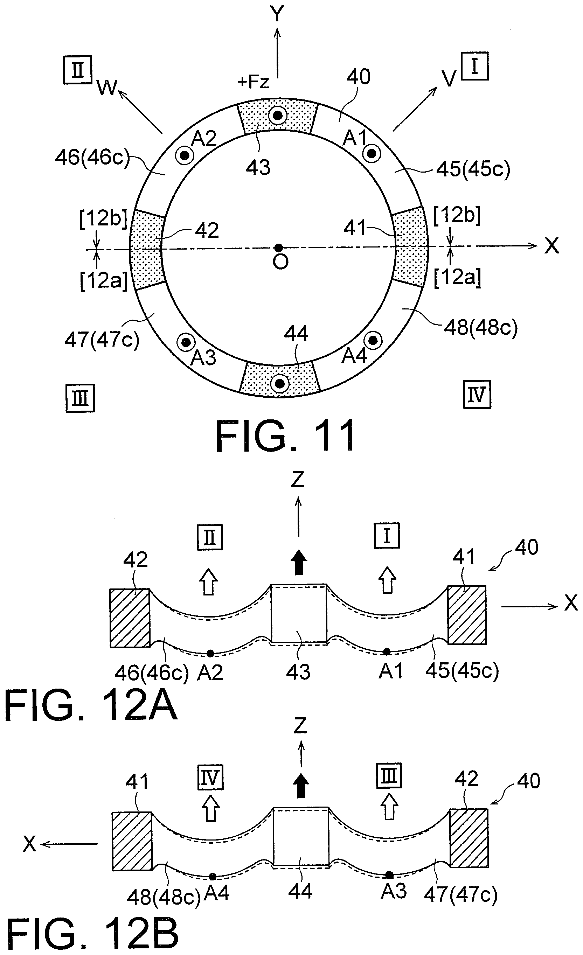

FIG. 11 is a schematic plan view for illustrating elastic deformation generated in each of the deformable portions 45 to 48 when a force +Fz in the positive direction on the Z-axis is applied to the basic structure 1 in FIG. 1. FIG. 12 is a schematic cross-sectional view of FIG. 11. FIG. 12(a) is a cross-sectional view taken along line [12a]-[12a] of FIG. 11, and FIG. 12(b) is a cross-sectional view taken along line [12b]-[12b] of FIG. 11.

As illustrated in FIG. 11 and FIG. 12, when the force +Fz in the positive direction on the Z-axis is applied to the basic structure 1 via the force receiving body 20 (refer to FIGS. 1 and 3), the force in the positive direction on the Z-axis is applied to the first and second force receiving portions 43 and 44 of the deformable body 40.

At this time, as illustrated in FIG. 12(a) and FIG. 12(b), the following elastic deformation is generated in the first to fourth deformable portions 45 to 48. That is, each of the force receiving portions 43 and 44 is moved upward by the force in the positive direction on the Z-axis applied to the first and second force receiving portions 43 and 44, and thus, end portions coupled to the first and second force receiving portion 43 and 44 among the deformable portions 45 to 48 are also moved upward. As a result, as illustrated in FIGS. 11(a) and 11(b), each of the measurement sites A1 to A4 moves upward.

As a result, when the force +Fz in the positive direction on the Z-axis is applied to the force receiving body 20 of the basic structure 1, the separation distance between the first to fourth measurement sites A1 to A4 and the upper surface of the fixed body 10 (refer to FIG. 2) all increase.

Although not illustrated, in a case where the force -Fz in the negative direction on the Z-axis is applied to the force receiving body 20 of the basic structure 1, the moving direction of each of the measurement sites A1 to A4 is opposite to the above-described direction. That is, due to the action of the force -Fz in the negative direction on the Z-axis, the separation distance between each of the first to fourth measurement sites A1 to A4 and the upper surface of the fixed body 10 (refer to FIG. 2) all decrease.

<1-3. Capacitive element type force sensor>

(1-3-1. Configuration of force sensor)

The basic structure 1 described in detail in § 1-1 and § 1-2 can be suitably used as a capacitive element type force sensor 1c. Herein, this force sensor 1c will be described in detail below.

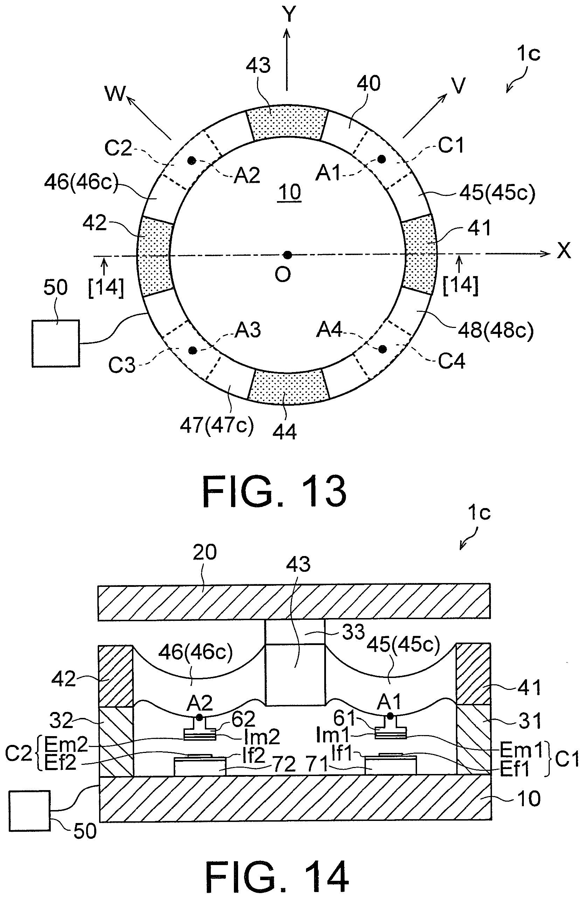

FIG. 13 is a schematic plan view illustrating the force sensor 1c using the basic structure 1 of FIG. 1, and FIG. 14 is a cross-sectional view taken along line [14]-[14] of FIG. 13. In FIG. 14, in order to clearly illustrate the deformable body 40, illustration of the force receiving body 20 is omitted.

As illustrated in FIG. 13 and FIG. 14, the force sensor 1c has a configuration in which one of capacitive element C1 to C4 is arranged in one of the measurement sites A1 to A4 of the basic structure 1 of FIG. 1, respectively. Specifically, as illustrated in FIG. 14, the force sensor 1c includes a first displacement electrode Em1 arranged at the first measurement site A1 and a first fixed electrode Ef1 arranged to face the first displacement electrode Em1 and configured to not move relative to the fixed body 10. These electrodes Em1 and Ef1 constitute the first capacitive element C1. Furthermore, as illustrated in FIG. 14, the force sensor 1c includes a second displacement electrode Em2 arranged at the second measurement site A2 and a second fixed electrode Ef2 arranged to face the second displacement electrode Em2 and configured not to move relative to the fixed body 10. The electrodes Em2 and Ef2 constitute a second capacitive element C2.

Although not illustrated, the force sensor 1c includes a third displacement electrode Em3 arranged at the third measurement site A3 and a third fixed electrode Ef3 arranged to face the third displacement electrode Em3 and configured not to move relative to the fixed body 10, and also includes a fourth displacement electrode Em4 arranged at the fourth measurement site A4 and a fourth fixed electrode Ef4 arranged to face the fourth displacement electrode Em4 and configured not to move relative to the fixed body 10. The electrode Em3 and the electrode Ef3 constitute the third capacitive element C3, and the electrode Em4 and the electrode Ef4 constitute the fourth capacitive element C4.

Specifically, as illustrated in FIG. 14, each of the displacement electrodes Em1 to Em4 is supported on the lower surface of each of the first to fourth deformable body-side supports 61 to 64 supported by the corresponding measurement sites A1 to A4 via first to fourth displacement substrates Im1 to Im4. Furthermore, each of the fixed electrodes Ef1 to Ef4 is respectively supported on the upper surface of each of the first to fourth fixed body side supports 71 to 74 fixed to the upper surface of the fixed body 10 via first to fourth fixed substrates If1 to If4. Each of the displacement electrodes Em1 to Em4 has a same area, and each of the fixed electrodes Ef1 to Ef4 has a same area. However, in order to maintain a certain value of an effective facing area of each of the capacitive elements C1 to C4 by the action of the one or both of a force and a moment, the electrode areas of the displacement electrodes Em1 to Em4 are configured to be larger than the electrode areas of the fixed electrodes Ef1 to Ef4. This point will be described in detail below. In the initial state, the effective facing area and the separation distance of each set of electrodes constituting the capacitive elements C1 to C4 are all the same.

Furthermore, as illustrated in FIGS. 13 and 14, the force sensor 1c includes a detection circuit 50 that outputs an electric signal indicating a force and a moment applied to the force receiving body 20 on the basis of the elastic deformation generated in each of the deformable portions 45 to 48 of the deformable body 40. In FIGS. 13 and 14, illustration of the wiring for electrically connecting each of the capacitive elements C1 to C4 to the detection circuit 50 is omitted.

Note that in a case where the fixed body 10, the force receiving body 20, and the deformable body 40 are formed of a conductive material such as a metal, the first to fourth displacement substrates Im1 to Im4 and the first to fourth fixed substrates If1 to If4 need to be formed of an insulator so as to prevent short-circuit in each of the electrodes.

(1-3-2. Variation in electrostatic capacitance value of each of capacitive elements when moment Mx around X-axis is applied to force sensor 1c)

Next, FIG. 14 is a table illustrating variations of the electrostatic capacitance values generated in each of capacitive elements C1 to C4 when a force and a moment is applied to the force sensor 1c in FIG. 13.

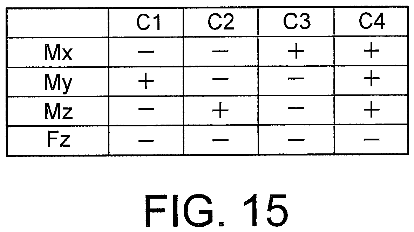

First, when the moment +Mx around the positive X-axis is applied to the force sensor 1c according to the present embodiment, as observed from the behaviors of the measurement sites A1 to A4 described in § 1-2-1, the separation distance between the electrodes constituting the first capacitive element C1 and the second capacitive element C2 both increase. Due to this, the electrostatic capacitance values of the first capacitive element C1 and the second capacitive element C2 both decrease. In contrast, the separation distance between the electrodes constituting the third capacitive element C3 and the fourth capacitive element C4 both decrease. Therefore, the electrostatic capacitance values of the third capacitive element C3 and the fourth capacitive element C4 both increase. The variation of the electrostatic capacitance value of each of the capacitive elements C1 to C4 is summarized in the column of "Mx" in FIG. 15. In this table, "+" indicates an increase in the electrostatic capacitance value, and "-" indicates a decrease in the electrostatic capacitance value. Note that when the moment -Mx around the negative X-axis is applied to the force sensor 1c, the variation of the electrostatic capacitance value of each of the capacitive elements C1 to C4 is opposite to the above-described variation (signs illustrated in the column of Mx in FIG. 15 are all reversed).

(1-3-3. Variation in electrostatic capacitance value of each of capacitive elements when moment My around the Y-axis is applied to force sensor 1c)

Next, when a moment +My around the positive Y-axis is applied to the force sensor 1c according to the present embodiment, as observed from the behaviors of the measurement sites A1 to A4 described in §1-2-2, the separation distance between the electrodes constituting the first capacitive element C1 and the fourth capacitive element C4 both decrease. Therefore, the electrostatic capacitance values of the first capacitive element C1 and the fourth capacitive element C4 both increase. In contrast, the separation distance between the electrodes constituting the second capacitive element C2 and the third capacitive element C3 both increase. Therefore, the electrostatic capacitance values of the second capacitive element C2 and the third capacitive element C3 both decrease. The variation of the electrostatic capacitance value of each of the capacitive elements C1 to C4 is summarized in the column of "My" in FIG. 15. Note that when the moment -My around the negative Y-axis is applied to the force sensor 1c, the variation of the electrostatic capacitance value of each of the capacitive elements C1 to C4 is opposite to the above-described variation (signs illustrated in the column of My in FIG. 15 are all reversed).

(1-3-4. Variation in electrostatic capacitance value of each of capacitive elements when moment Mz around the Z-axis is applied to force sensor 1c)

First, when a moment +Mz around the positive Z-axis is applied to the force sensor 1c according to the present embodiment, as observed from the behaviors of the measurement sites A1 to A4 described in § 1-2-3, the separation distance between the electrodes constituting the first capacitive element C1 and the third capacitive element C3 both increase. Therefore, the electrostatic capacitance values of the first capacitive element C1 and the third capacitive element C3 both decrease. In contrast, the separation distance between the electrodes constituting the second capacitive element C2 and the fourth capacitive element C4 both decrease. Therefore, the electrostatic capacitance values of the second capacitive element C2 and the fourth capacitive element C4 both increase. The variation of the electrostatic capacitance value of each of the capacitive elements C1 to C4 is summarized in the column of "Mz" in FIG. 15. Note that when the moment -Mz around the negative Z-axis is applied to the force sensor 1c, the variation of the electrostatic capacitance value of each of the capacitive elements C1 to C4 is opposite to the above-described variation (signs illustrated in the column of Mz in FIG. 15 are all reversed).

(1-3-5. Variation in electrostatic capacitance value of each of capacitive elements when force Fz in Z-axis direction is applied to force sensor 1c)

Next, when the force +Fz about the positive direction on the Z-axis is applied to the force sensor 1c according to the present embodiment, as observed from the behaviors of the measurement sites A1 to A4 described in § 1-2-4, the separation distance between the electrodes constituting each of the capacitive elements C1 to C4 all increase. Therefore, the electrostatic capacitance values of the capacitive elements C1 to C4 all decrease. The variation of the electrostatic capacitance value of each of the capacitive elements C1 to C4 is summarized in the column of "Fz" in FIG. 15. Note that when the force -Fz in the negative direction on the Z-axis is applied to the force sensor 1c, the variation of the electrostatic capacitance value of each of the capacitive elements C1 to C4 is opposite to the above-described variation (signs illustrated in the column of Fz in FIG. 15 are all reversed).

(1-3-6. Calculation method of applied force and moment)

In view of the variation of the electrostatic capacitance values of the capacitive elements C1 to C4 as described above, the detection circuit 50 calculates the moments Mx, My, and Mz and the force Fz applied to the force sensor 1c using the following [Expression 1] calculate. In [Expression 1], symbols C1 to C4 indicate the variation amounts in electrostatic capacitance values of the first to fourth capacitive elements C1 to C4, respectively.

$$
\begin{aligned}
& [\text{Expression 1}] \\
& Mx = -\ C1\ -\ C2\ +\ C3\ +\ C4 \\
& My = C1\ -\ C2\ -\ C3\ +\ C4 \\
& Mz = -\ C1\ +\ C2\ -\ C3\ +\ C4 \\
& Fz = -\ (C1\ +\ C2\ +\ C3\ +\ C4)
\end{aligned}
$$

In a case where the force and the moment applied to the force sensor 1c is in the negative direction, Mx, My, Mz and Fz on the left side may be substituted by -Mx, -My, -Mz and -Fz. In this case, however, the signs of C1 to C4 on the right side are also reversed, leading to measurement of the force and moment applied by [Expression 1] regardless of whether the applied force and moment are positive or negative.

According to the force sensor 1c of the present embodiment as described above, the fixed portion-side curved portions 45f to 48f and the force receiving portion-side curved portions 45m to 48m are respectively interposed between the main curved portions 45p to 48p and the adjacent portions, namely, the fixed portions 41 and 42 and the force receiving portions 43 and 44. With this configuration, it is possible to avoid stress concentration to the connecting portions between the main curved portions 45p to 48p and the adjacent portions, namely, the fixed portions 41 and 42 and the force receiving portions 43 and 44. Accordingly, with the present embodiment, it is possible to provide the highly reliable capacitance type force sensor 1c.

Moreover, the force sensor 1c further includes the fixed body 10 fixed with respect to the XYZ three-dimensional coordinate system and the force receiving body 20 configured to move relative to the fixed portions 41 and 42 by the action of one or both of a force and a moment, and the fixed portions 41 and 42 of the deformable body 40 are connected to the fixed body 10, while the force receiving portions 43 and 44 of the deformable body 40 are connected to the force receiving body 20. This makes it easy to apply the force and the moment to the deformable body 40.

In addition, since the fixed body 10 and the force receiving body 20 includes the through holes through which the Z-axis passes, it is possible to reduce the weight of the force sensor 1c and to enhance the flexibility in installation of the force sensor 1c.

In the force sensor 1c according to the present embodiment, in a case where the V-axis and the W-axis passing through the origin O and forming an angle of 45° with respect to the X-axis and the Y-axis are defined on the XY plane, the four sets of capacitive elements C1 to C4 are arranged at each of the four sites overlapping with the V-axis and the W-axis when viewed in the Z-axis direction. This results in arranging the capacitive elements C1 to C4 symmetrically about the X-axis and the Y-axis, the electrostatic capacitance values of the capacitive elements C1 to C4 vary with high symmetry. This makes it possible to measure the applied force and the moment on the basis of the variation amount in the electrostatic capacitance values of the capacitive elements C1 to C4 very easily.

In the above description, the four capacitive elements C1 to C4 have the individual fixed substrates If1 to If4 and individual fixed electrodes Ef1 to Ef4. Alternatively, however, it is allowable in another embodiment to configure the fixed substrate to be common to the four capacitive elements and configure to provide individual fixed electrodes on the fixed substrate. Alternatively, the fixed substrate and the fixed electrode may be configured to be common to the four capacitive elements. Even with such a configuration, it is possible to measure the force and the moment similarly to the above-described force sensor 1c. Note that these configurations are also available for each of the embodiments described below.

In addition, sensitivity of the force sensor 1c to the applied force and the moment changes with a change in the cross-sectional shape of the deformable body 40. Specific description will be given as follows. While the radial sectional shape of the deformable body 40 in the present embodiment is a square (refer to FIG. 3), forming this cross-sectional shape into a vertically elongated rectangle elongated in the Z-axis direction would make each of the sensitivity toward the moment Mx and My around the X and Y axes, and the sensitivity to the force Fz in Z-axis direction to be lower relative to the sensitivity to the moment Mz around the Z-axis. In contrast, forming the cross-sectional shape of the deformable body 40 in a horizontally elongated rectangle that is long in the radial direction of the deformable body 40 makes the sensitivity toward the moments Mx and My around the X and Y axes and the force Fz in the Z-axis direction to be higher relative to the sensitivity to the moment Mz around the Z-axis.

Alternatively, the sensitivity to the applied force and the moment in the force sensor 1c also changes together with the radius of curvature (degree of curvature) of the main curved portions 45p to 48p. Specifically, decreasing the radius of curvature of the main curved portions 45p to 48p (increasing the degree of curvature) increases the sensitivity to the applied force and the moment. In contrast, increasing the radius of curvature of the main curved portions 45p to 48p (decreasing the degree of curvature) decreases the sensitivity to the applied force and the moment.

In consideration of the relationship between the cross-sectional shape of the deformable body 40 and the radius of curvature of the main curved portions 45p to 48p, and the sensitivity to the force and the moment as described above, it is possible to optimize the sensitivity of the force sensor 1c for the use environment. Of course, the above description also applies to each of embodiments described below.

<<< §2. Force sensor according to second embodiment of the present invention >>>

Next, a force sensor 201c according to a second embodiment of the present invention will be described.

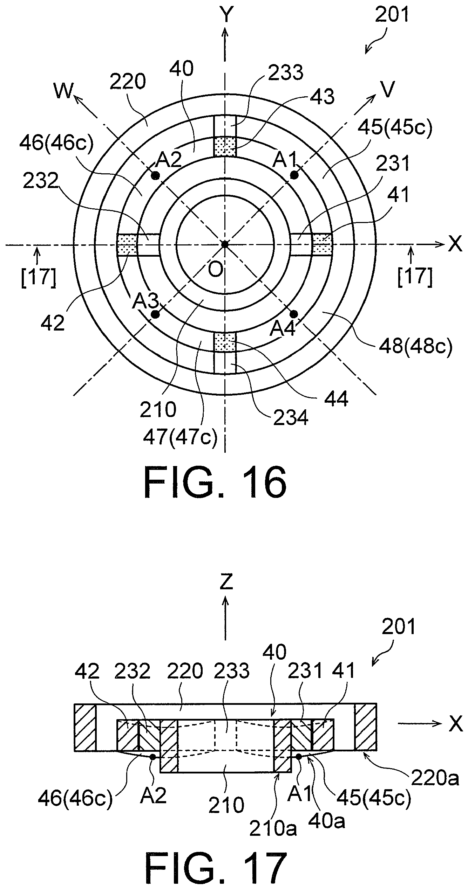

FIG. 16 is a schematic plan view illustrating a basic structure 201 of a force sensor 201c according to the second embodiment of the present invention, and FIG. 17 is a cross-sectional view taken along line [17]-[17] in FIG. 16.

As illustrated in FIGS. 16 and 17, the basic structure 201 includes a structure of a fixed body 210 and a force receiving body 220 different from the basic structure 1 of the force sensor 1c according to the first embodiment. Specifically, each of the fixed body 210 and the force receiving body 220 of the basic structure 201 has an annular (cylindrical) shape. As illustrated in FIGS. 16 and 17, the fixed body 210 is arranged inside the deformable body 40 when viewed in the Z-axis direction, and the force receiving body 220 is arranged outside the deformable body 40. The fixed body 210, the force receiving body 220, and the deformable body 40 have their center axes overlapped with the Z-axis and are concentric with each other. Of course, the fixed body 210 may be arranged outside the deformable body 40, and the force receiving body 220 may be arranged inside the deformable body 40.

As illustrated in FIG. 17, the force receiving body 220 has a force receiving body surface 220a facing the negative direction (downward) on the Z-axis. Moreover, the fixed body 210 has a fixed body surface 210a facing the negative direction (downward) on the Z-axis. Both the force receiving body surface 220a and the fixed body surface 210a are surfaces parallel to the XY plane. Furthermore, the deformable body 40 has a deformable body surface 40a facing downward similarly to the force receiving body surface 220a. In the present embodiment, the Z-coordinate of the force receiving body surface 220a, the Z-coordinate of the fixed body surface 210a, and the Z-coordinate of the deformable body surface 40a are different from each other as illustrated in FIG. 17. More specifically, the Z-coordinate of the fixed body surface 210a is smaller than the Z-coordinate of the deformable body surface 40a, and the Z-coordinate of the deformable body surface 40a is smaller than the Z-coordinate of the force receiving body surface 220a. Note that the Z-coordinate of the deformable body surface 40a represents a coordinate having a maximum absolute value of the Z-coordinate on the deformable body surface 40a. Accordingly, the Z-coordinate of the deformable body surface 40a according to the present embodiment is the Z-coordinate of each of the measurement sites A1 to A4. In another embodiment, one of the coordinates of the force receiving body surface 220aZ and the Z-coordinate of the fixed body surface 210a may be set to be different from the Z-coordinate of the deformable body surface 40a.

Together with the arrangement of the fixed body 210, the force receiving body 220, and the deformable body 40 as described above, the arrangement of the first to fourth connecting members 231 to 234 is also different from the case of the force sensor 1c according to the first embodiment. That is, as illustrated in FIGS. 16 and 17, the first connecting member 231 connects the outer side surface of the fixed body 210 (side surface facing the positive direction on the X-axis) and the inner side surface of the deformable body 40 (side surface facing the negative direction on the X-axis) with each other on the positive X-axis. In contrast, the second connecting member 232 connects the outer side surface of the fixed body 210 (side surface facing the negative direction on the X-axis) and the inner side surface of the deformable body 40 (side surface facing the positive direction on the X-axis) with each other on the negative X-axis. Furthermore, as illustrated in FIG. 16, the inner side surface of the force receiving body 220 (side surface facing the negative direction on the Y-axis) is connected with the outer side surface of the deformable body 40 (side surface facing the positive direction on the Y-axis) by a third connecting member 233, on the positive Y-axis. The inner side surface of the force receiving body 220 (side surface facing the positive direction on the Y-axis) is connected with the outer side surface of the deformable body 40 (side surface facing the negative direction on the Y-axis) by a fourth connecting member 234, on the negative Y-axis. The other configuration is similar to the basic structure 1 of the force sensor 1c according to the first embodiment. For this reason, corresponding components are denoted by the similar reference numerals in the drawings, and a detailed description thereof will be omitted.

Although not illustrated, the force sensor 201c can be configured by arranging four capacitive elements in an arrangement similar to the force sensor 1c according to the first embodiment in the basic structure 201 as described above. Although a member for arranging the fixed electrode is not illustrated in FIG. 17, a fixed electrode may be appropriately arranged at a site to which the force sensor 201c is attached, or an additional member may be fixed to the fixed body 210 and the fixed electrode may be arranged on this member.

The force sensor 201c as described above can be suitably installed in a mechanism formed with a first member and a second member that move relative to each other, for example, a joint of a robot. That is, by coupling the fixed body 210 to the first member and coupling the force receiving body 220 to the second member, it is possible to arrange the force sensor 201c in a limited space in a mode of avoiding interference with other members.

The method for measuring the force and the moment applied to the force sensor 201c is similar to the method for the force sensor 1c according to the first embodiment, and thus, a detailed description thereof will be omitted here.

The basic structure 201 as described above includes the force receiving body 220, the deformable body 40, and the fixed body 210 being concentrically arranged along the XY plane. Therefore, each of components of the basic structures 201 and 202 can be integrally formed by cutting working. With this processing, the force sensor 201c without hysteresis can be provided.

<<< § 3. Modifications of § 1 and § 2 >>>

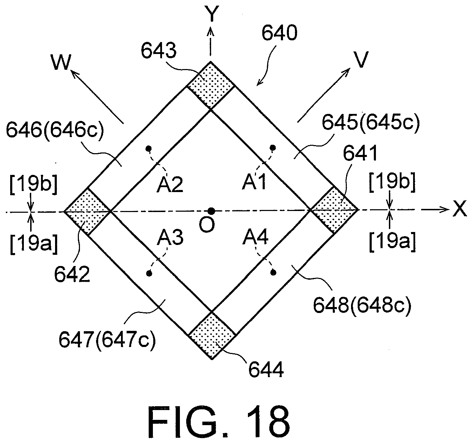

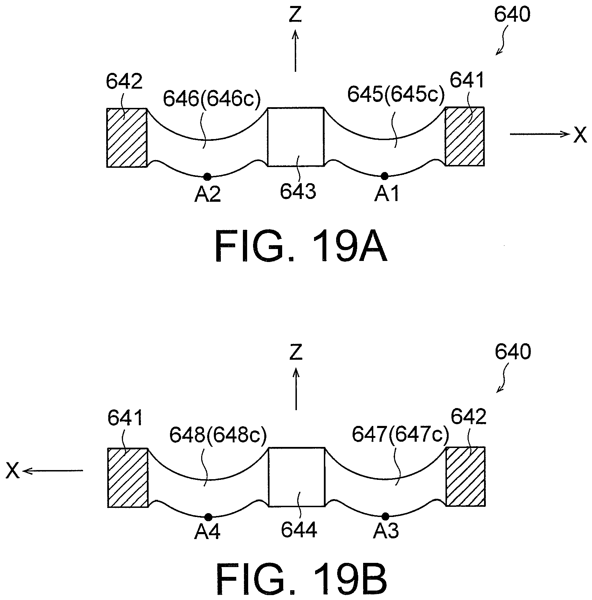

Next, with reference to FIGS. 18 and 19, modifications using a deformable body 640 applicable to the force sensors 1c and 201c according to each of the embodiments described above will be described.

While the annular deformable body 40 illustrated in FIG. 2 is a doughnut-shaped structure having a circular inner periphery outline and a circular outer periphery outline, the annular deformable body applied in the present invention may be a structure in any other shapes such as an elliptic shape, a rectangular shape, and a triangular shape. In short, an annular deformable body in any shape may be used as long as it is a structure along a closed loop shaped path.

FIG. 18 is a schematic plan view illustrating the rectangular deformable body 640. FIG. 19 is a schematic cross-sectional view of FIG. 18, FIG. 19(a) is a cross-sectional view taken along line [19a]-[19a] of FIG. 18, and FIG. 19(b) is a cross-sectional view taken along line [19b]-[19b] of FIG. 18.

The deformable body 640 according to the present modification has a rectangular shape as a whole. Herein, as illustrated in FIG. 18, explanation will be given by taking the deformable body 640 with a square shape as an example. The deformable body 640 includes a first fixed portion 641 located on the positive X-axis, a second fixed portion 642 located on the negative X-axis, and a first force receiving portion 643 located on the positive Y-axis, and a second force receiving portion 644 located on the negative Y-axis. Each of the fixed portions 641 and 642 and each of the force receiving portions 643 and 644 are regions to which the fixed body 10 and the force receiving body 20 of the deformable body 640 are connected, and they are not sites having characteristics different from the other regions of the deformable body 640. Accordingly, the material of each of the fixed portions 641 and 642 and the force receiving portions 643 and 644 is the same as the material of the other regions of the deformable body 640.

As illustrated in FIG. 18, the deformable body 640 further includes: a first deformable portion 645 located between the first fixed portion 641 and the first force receiving portion 643 (first quadrant of the XY plane); a second deformable portion 646 located between the first force receiving portion 643 and the second fixed portion 642 (second quadrant of the XY plane); a third deformable portion 647 located between the second fixed portion 642 and the second force receiving portion 644 (third quadrant of the XY plane); and a fourth deformable portion 648 located between the second force receiving portion 644 and the first fixed portion 641 (fourth quadrant of the XY plane). Both ends of each of the deformable portions 645 to 648 are integrally coupled to the adjacent fixed portions 641 and 642 and the force receiving portions 643 and 644, respectively. With this structure, the forces and the moments applied to the force receiving portions 643 and 644 are reliably transmitted to the individual deformable portions 645 to 648, thereby generating elastic deformation corresponding to the applied force and the moment in the deformable portions 645 to 648.

As illustrated in FIG. 19, the first to fourth deformable portions 645 to 648 are all formed in linear shapes when viewed in the Z-axis direction. Moreover, since distances from the origin O to each of the fixed portions 641 and 642 and each of the force receiving portions 643 and 644 are all equal, each of the deformable portions 645 to 648 is arranged to form one side of a square.

Furthermore, as illustrated in FIGS. 19(a) and 19(b), each of the deformable portions 645 to 648 of the deformable body 640 has a structure similar to the structure of each of the deformable portions 45 to 48 described in §1. Note that in the deformable body 640 of this modification, each of the deformable portions 645 to 648 is formed in a linear shape instead of an arc shape when viewed in the Z-axis direction. In this modification, since the first deformable portion 645 is also symmetrically formed about the positive V-axis, the site located at the lowermost position (negative direction on the Z-axis) of the first main curved portion 645p exists on the positive V-axis.

Such a configuration is also adopted in the remaining three deformable portions 646, 647, and 648. That is, the second deformable portion 646 has a configuration in which the lowermost site of a second main curved portion 646p exists on the positive W-axis and has a symmetrical shape about the positive W-axis. The third deformable portion 647 has a configuration in which the lowermost site of a third main curved portion 647p exists on the negative V-axis and has a symmetrical shape about the negative V-axis. The fourth deformable portion 648 has a configuration in which the lowermost site of a fourth main curved portion 648p exists on the negative W-axis and has a symmetrical shape about the negative V-axis.

As illustrated in FIGS. 19(a) and 19(b), the deformable body 640 defines measurement sites A1 to A4 for detecting elastic deformation generated in each of the deformable portions 645 to 648, at the lowermost site of each of the first to fourth main curved portions 645p to 648p, that is, at the sites in which each of the main curved portions 645p to 648p overlaps with the V-axis and the W-axis when viewed in the Z-axis direction. In FIG. 18, while the measurement sites A1 to A4 are illustrated as being provided on the upper surface (front surface) of the deformable body 640, the measurement sites A1 to A4 are actually provided on the lower surface (back surface) of the deformable body 640 (refer to FIG. 19).

Consequently, the deformable body 640 is a modification of the annular deformable body 40 of the force sensor 1c and 201c described in §1 and §2, in which simply the entire shape has been changed to a rectangular shape while substantially maintaining the structure of each of the deformable portions. Therefore, even when the annular deformable body 40 of the force sensor 1c and 201c is replaced with the deformable body 640 described above, it is possible to achieve operational effects similar to the cases of the force sensor 1c and 201c.

<<< §4. Force sensor according to third embodiment of the present invention >>>

Next, a force sensor according to a third embodiment of the present invention will be described.

<4-1. Structure of basic structure>

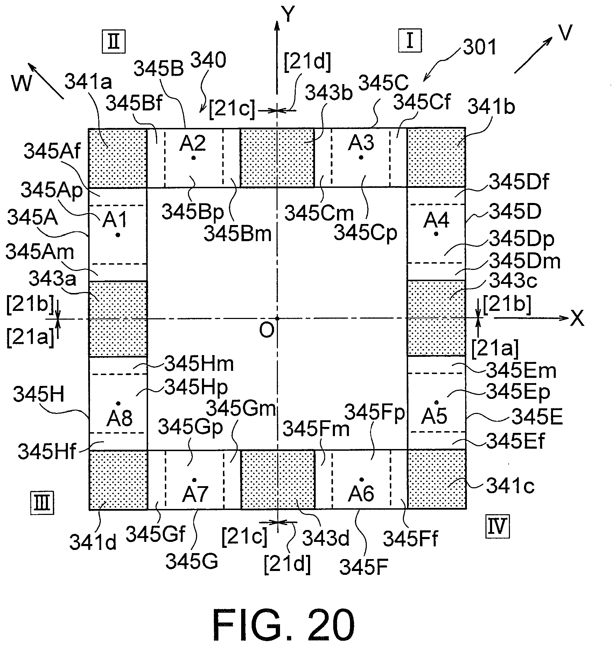

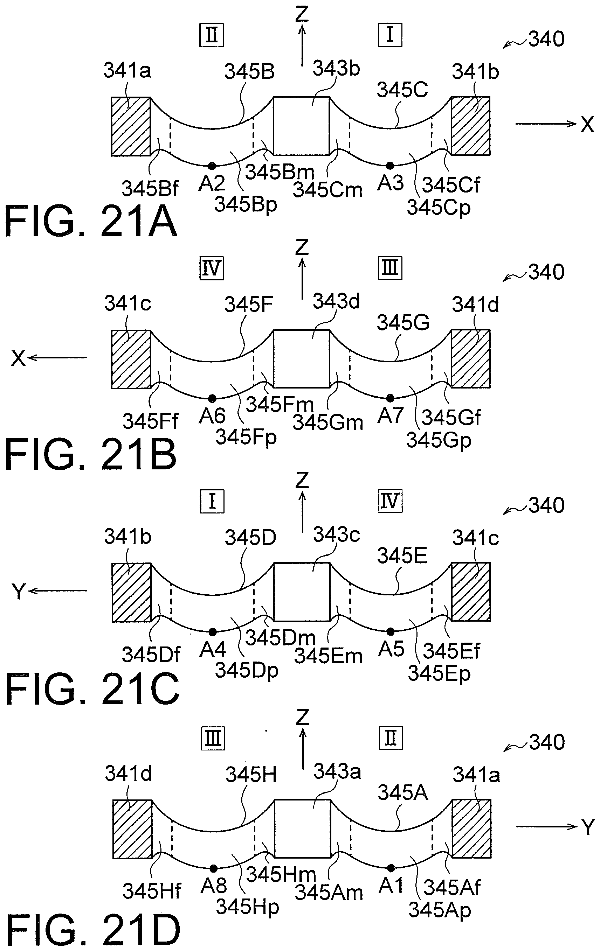

FIG. 20 is a plan view of a square-shaped rectangular deformable body 340 applicable to the present invention. FIG. 21(a) is a cross-sectional view taken along line [21a]-[21a] of FIG. 20, FIG. 21(b) is a cross-sectional view taken along line [21b]-[21b] of FIG. 20, FIG. 21(c) is a cross-sectional view taken along line [21c]-[21c] in FIG. 20, and FIG. 21(d) is a cross-sectional view taken along line [21d]-[21d] of FIG. 20. The rectangular deformable body 340 according to the present embodiment is a structure in which the outline of the inner periphery and the outline of the outer periphery are both square and individual sides are arranged in parallel with the X-axis or the Y-axis about the origin O as a center when viewed in the Z-axis direction. The rectangular deformable body 340 includes: four fixed portions 341a to 341d fixed with respect to the XYZ three-dimensional coordinate system along a square closed loop shaped path; four force receiving portions 343a to 343d are alternately positioned with the fixed portions 341a to 341d in a closed loop shaped path of the rectangular deformable body 340 and that receives action of the force and the moment; and a total of eight deformable portions 345A to 345H positioned one for each of portions between the fixed portions 341a to 341d and the force receiving portions 343a to 343d adjacent to each other in the closed loop shaped path.

Specifically, as illustrated in FIG. 20, the rectangular deformable body 340 includes the first fixed portion 341a arranged in the second quadrant, the second fixed portion 341b arranged in the first quadrant, the third fixed portion 341c arranged in the fourth quadrant, and the fourth fixed portion 341d arranged in the third quadrant. In a case where the V-axis and the W-axis passing through the origin O and forming an angle of 45° with respect to the X-axis and the Y-axis are defined on the XY plane, the second and fourth fixed portions 341b and 341d are arranged on the V-axis and the first and the third fixed portions 341a and 341c are arranged on the W-axis, each being symmetrically arranged about the origin O. The first force receiving portion 343a is arranged on the negative X-axis at an intermediate point between the first fixed portion 341a and the fourth fixed portion 341d. Furthermore, the second force receiving portion 343b is arranged on the positive Y-axis at an intermediate point between the first fixed portion 341a and the second fixed portion 341b, the third force receiving portion 343c is arranged on the positive X-axis at an intermediate point between the second fixed portion 341b and the third fixed portion 341c, and the fourth force receiving portion 343d is arranged on the negative Y-axis at an intermediate point between the third fixed portion 341c and the fourth fixed portion 341d.

The first deformable portion 345A is arranged between the first force receiving portion 343a and the first fixed portion 341a in parallel with the Y-axis. The second deformable portion 345B is arranged between the first fixed portion 341a and the second force receiving portion 343b in parallel with the X-axis. The third deformable portion 345C is arranged between the second force receiving portion 343b and the second fixed portion 341b in parallel with the X-axis. The fourth deformable portion 345D is arranged between the second fixed portion 341b and the third force receiving portion 343c in parallel with the Y-axis. The fifth deformable portion 345E is arranged between the third force receiving portion 343c and the third fixed portion 341c in parallel with the Y-axis. The sixth deformable portion 345F is arranged between the third fixed portion 341c and the fourth force receiving portion 343d in parallel with the X-axis. The seventh deformable portion 345G is arranged between the fourth force receiving portion 343d and the fourth fixed portion 341d in parallel with the X-axis. The eighth deformable portion 345H is arranged between the fourth fixed portion 341d and the first force receiving portion 343a in parallel with the Y-axis. Specifically, the structure of each of the deformable portions 345A to 345H is a curved structure similar to each of the deformable portions 45 to 48 respectively in the first embodiment (refer to FIG. 21).

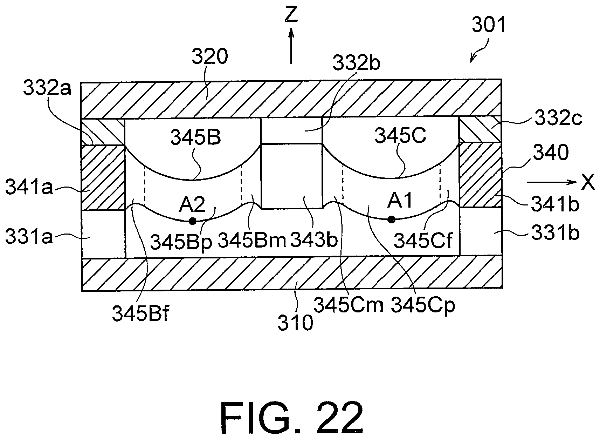

FIG. 22 is a schematic cross-sectional view illustrating a basic structure 301 of the force sensor according to the present embodiment, adopting the rectangular deformable body 340 of FIG. 20. As illustrated in FIG. 22, the basic structure 301 includes: a rectangular deformable body 340 described with reference to FIGS. 20 and 21; a fixed body 310 arranged on the negative side on the Z-axis with respect to the rectangular deformable body 340 and fixed with respect to the XYZ three-dimensional coordinate system; and a force receiving body 320 arranged on the positive side on the Z-axis with respect to the rectangular deformable body 340 and configured to receive the applied force and the moment. The fixed body 310 and the rectangular deformable body 340 are connected to each other in the four fixed portions 341a to 341d of the rectangular deformable body 340 by four fixed portion-side connecting members 331a to 331d. Specifically, the first fixed portion-side connecting member 331a connects the first fixed portion 341a of the rectangular deformable body 340 to the fixed body 310, and the second fixed portion-side connecting member 331b connects the second fixed portion 341b of the rectangular deformable body 340 to the fixed body 310, the third fixed portion-side connecting member 331c connects the third fixed portion 341c of the rectangular deformable body 340 to the fixed body 310, and the fourth fixed portion-side connecting member 331d connects the fourth fixed portion 341d of the rectangular deformable body 340 to the fixed body 310.

The force receiving body 320 and the rectangular deformable body 340 are connected to each other in the four force receiving portions 343a to 343d of the rectangular deformable body 340 by four force receiving portion-side connecting members 332a to 332d. Specifically, the first force receiving portion-side connecting member 332a connects the first force receiving portion 343a of the rectangular deformable body 340 to the force receiving body 320, the second force receiving portion-side connecting member 332b connects the second force receiving portion 343b of the rectangular deformable body 340 to the force receiving body 320, the third force receiving portion-side connecting member 332c connects the third force receiving portion 343c of the rectangular deformable body 340 to the force receiving body 320, and the fourth force receiving portion-side connecting member 332d connects the fourth force receiving portion 343d of the rectangular deformable body 340 to the force receiving body 320. With the above configuration, the force and moment applied to the force receiving body 320 are reliably transmitted to the rectangular deformable body 340. In FIG. 22, the cross-sectional view corresponding to FIG. 21(a) is representatively illustrated for the basic structure 301 of the present embodiment, and illustration of the cross-sectional views corresponding to FIGS. 21 (c) to 21(d) are omitted since they are substantially similar to the case of FIG. 22.

<4-2. Application of basic structure>

Next, application of the basic structure 301 will be described.

(4-2-1. Case where force +Fx in positive direction on X-axis +Fx is applied)

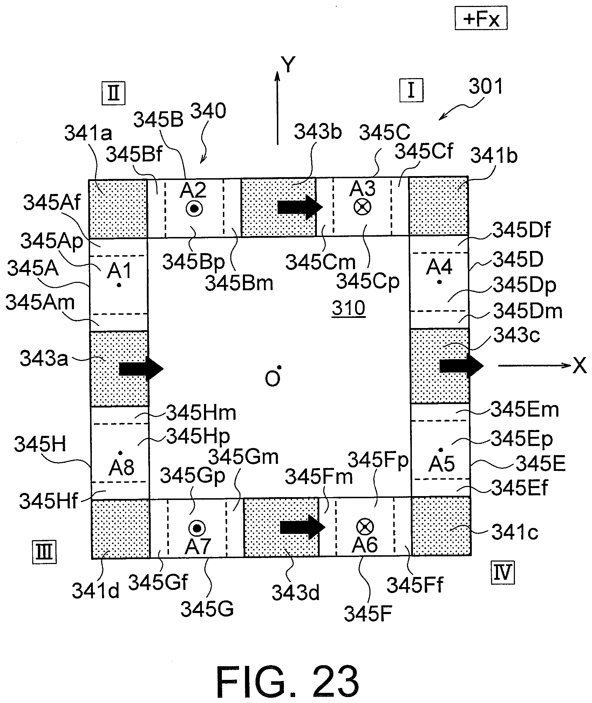

FIG. 23 is a diagram for illustrating the displacement generated at each of detection points A1 to A8 of the rectangular deformable body 340 illustrated in FIG. 20 when the force +Fx in the positive direction on the X-axis is applied to the force receiving body 230. The meanings of the symbols such as arrows in the figure are as described in §1.

The force +Fx in the positive direction on the X-axis is applied to the force receiving portions 343a to 343d via the force receiving body 320, such that each of the force receiving portions 341a to 341d is displaced in the positive direction on the X-axis. As a result, the third deformable portion 345C and the sixth deformable portion 345F receive action of a compressive force. In this case, as observed from 1-2 above, the third deformable portion 345C and the sixth deformable portion 345F elastically deform so as to decrease the radius of curvature of each of curved portions 345Cp and 345Fp. Therefore, each of the detection points A3 and A6 is displaced in the negative direction on the Z-axis. Meanwhile, as illustrated in FIG. 23, the second deformable portion 345B and the seventh deformable portion 345G receive action of a tensile force. In this case, as observed from the above-described 1-2., the second deformable portion 345B and the seventh deformable portion 345G elastically deform so as to increase the radius of curvature of each of curved portions 345Bp and 345Gp. Therefore, each of the detection points A2 and A7 is displaced in the positive direction on the Z-axis.

Moreover, the two force receiving portions 343a and 343c located on the X-axis move in a direction (X-axis direction) orthogonal to an alignment direction (Y-axis direction) of the first, fourth, fifth, and eighth deformable portions 345A, 345D, 345E, and 345H. Therefore, there is substantially no displacement in the Z-axis direction at the detection points A1, A4, A5, and A8 corresponding to the four deformable portions 345A, 345D, 345E, and 345H, respectively.

The application of the basic structure 301 when the force +Fy in the positive direction on the Y-axis is applied to the force receiving portions 343a to 343d of the basic structure 301 corresponds to the application of the basic structure 301 when the force +Fx in the positive direction on the X-axis is applied while being rotated by 90° counterclockwise around the origin O as a center. Therefore, a detailed description thereof will be omitted here.

(4-2-2. Case where force +Fz in positive direction on Z-axis is applied)

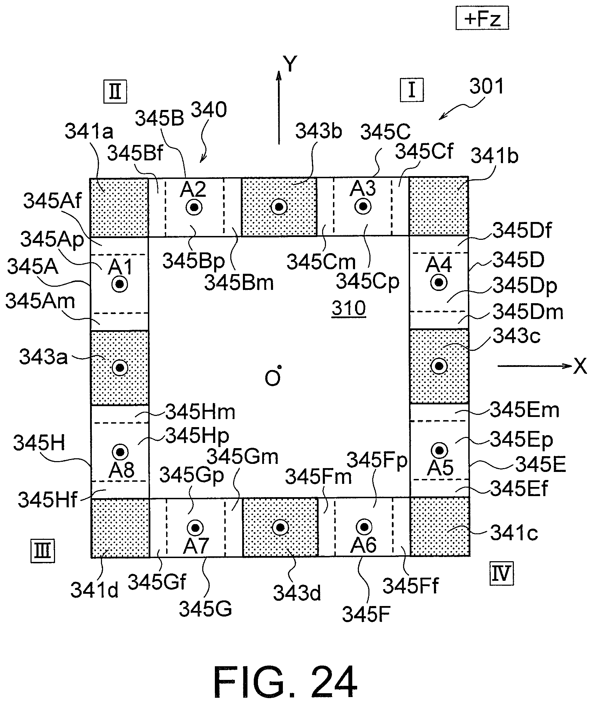

Next, FIG. 24 is a diagram for illustrating displacement generated in each of the individual detection points A1 to A8 of the rectangular deformable body 340 illustrated in FIG. 20 when a force +Fz in the positive direction on the Z-axis is applied to the force receiving body 320. The meanings of the symbols such as arrows in the figure are as described in §1.

The force +Fz in the positive direction on the Z-axis is applied to the force receiving portions 343a to 343d via the force receiving body 320, such that each of the force receiving portions 343a to 343d is displaced in the positive direction on the Z-axis. As a result, as illustrated in FIG. 24, in the first to eighth deformable portions 345A to 345H, the side of the force receiving portions 343a to 343d is pulled in the positive direction on the Z-axis. As a result, each of the detection points A1 to A8 is displaced in the positive direction on the Z-axis.

(4-2-3. Case where moment +Mx around positive X-axis is applied)

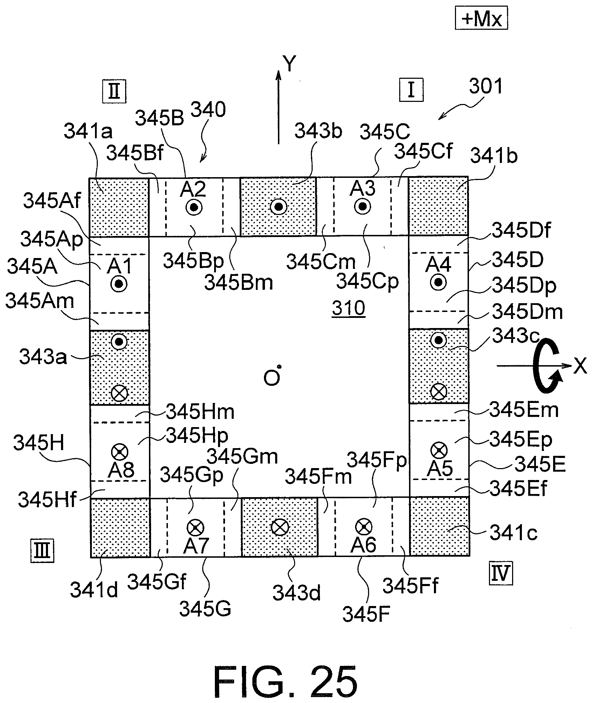

Next, FIG. 25 is a diagram for illustrating the displacement generated at each of the detection points A1 to A8 when a moment +Mx in the positive direction on the X-axis is applied to the rectangular deformable body 340 in FIG. 20. The meanings of the symbols such as arrows in the figure are as described in §1.

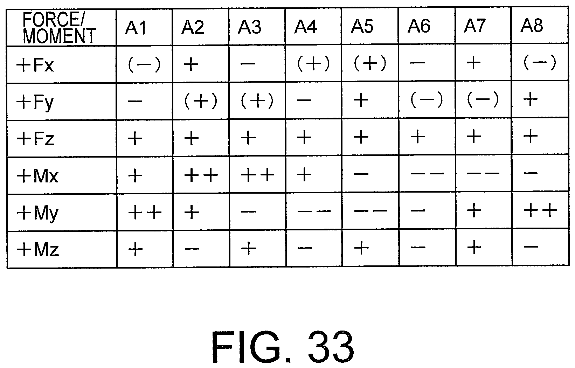

When the moment +Mx around the positive X-axis is applied to the force receiving body 320, the second force receiving portion 343b located on the positive Y-axis is displaced in the positive direction on the Z-axis (front direction in FIG. 25), while the fourth force receiving portion 343d located on the negative Y-axis is displaced in the negative direction on the Z-axis (the depth direction in FIG. 25). Therefore, as illustrated in FIG. 33, the second and third deformable portions 345B and 345C receive action of the force in the positive direction on the Z-axis similarly to the case where the force +Fz is applied. That is, as described in 3-2-2, the second and third detection points A2 and A3 are displaced in the positive direction on the Z-axis. In contrast, as illustrated in FIG. 25, the sixth and seventh deformable portions 345F and 345G receive action of the force in the negative direction on the Z-axis, contrary to the case where the force +Fz is applied. In this case, the sixth and seventh detection points A6 and A7 are displaced in the negative direction on the Z-axis.

Furthermore, as illustrated in FIG. 25, the first force receiving portion 343a and the third force receiving portion 343c are displaced such that an end portion in the positive side on the Y-axis (front side in FIG. 25) is displaced in the positive direction on the Z-axis while an end portion in the negative side on the Y-axis is displaced in the negative direction on the Z-axis (back side in FIG. 25). Together with these displacements, the first and fourth measurement sites A1 and A4 are displaced in the positive direction on the Z-axis, while the fifth and the eighth measurement sites A5 and A8 are displaced in the negative direction on the Z-axis. Note that, as apparent from the distance from the X-axis as a rotation center axis to each of the measurement sites A1 to A8, an absolute value of the displacement in the Z-axis direction generated in each of the first, fourth, fifth and eight measurement sites A1, A4, A5, and A8 is smaller than the case of the displacement in the Z-axis direction generated in each of the second, third, sixth and seventh measurement sites A2, A3, A6, and A7.

The application of the basic structure 301 when the moment +My around the positive Y-axis is applied to the force receiving portions 343a to 343d of the basic structure 301 corresponds to the application in the case where the moment +Mx around the positive X-axis is applied while being rotated 90° counterclockwise about the origin O as a center. Therefore, a detailed description thereof will be omitted here.

(4-2-4. Case where the moment around the positive Z-axis +Mz is applied)

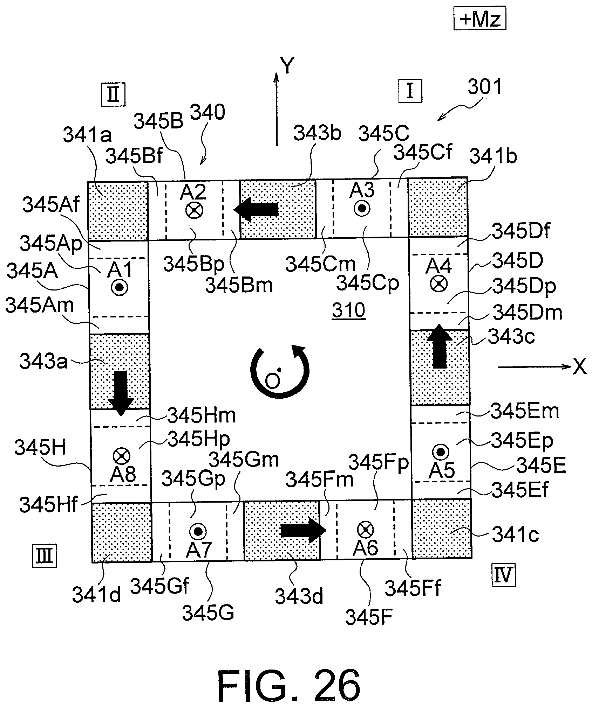

Next, FIG. 26 is a diagram for illustrating the displacement generated at each of the detection points A1 to A8 when the moment +Mz in the positive direction on the Z-axis is applied to the rectangular deformable body 340 in FIG. 20. The meanings of the symbols such as arrows in the figure are as described in §2.

When the moment +Mz around the positive Z-axis is applied to the force receiving body 320, displacement occurs as illustrated in FIG. 26. Specifically, the first force receiving portion 343a located on the negative X-axis is displaced in the negative direction on the X-axis, the second force receiving portion 343b located on the positive Y-axis is displaced in the negative direction on the X-axis, the third force receiving portion 343c located on the positive X-axis is displaced in the positive direction on the Y-axis, and the fourth force receiving portion 343d located on the negative Y-axis is displaced in the positive direction on the X-axis. Therefore, as illustrated in FIG. 26, the second, fourth, sixth and eighth deformable portions 345B, 345D, 345F, and 345H receive action of a compressive force. In this case, as observed from the above-described 1-2., the second, fourth, sixth and eighth deformable portions 345B, 345D, 345F, and 345H elastically deform so as to decrease the radius of curvature of each of curved portions 345Bp, 345Dp, 345Fp, and 345Hp. Therefore, each of the detection point A2, A4, A6, and A8 is displaced in the negative direction on the Z-axis.

Meanwhile, as illustrated in FIG. 26, the first, third, fifth and seventh deformable portions 345A, 345C, 345E, and 345G receive action of a tensile force. In this case, as observed from the above-described 1-2, the first, third, fifth and seventh deformable portions 345A, 345C, 345E, and 345G elastically deform so as to decrease the radius of curvature of each of curved portions 345Ap, 345Cp, 345Ep, and 345Gp. Therefore, each of the detection points A1, A3, A5, and A7 is displaced in the positive direction on the Z-axis.

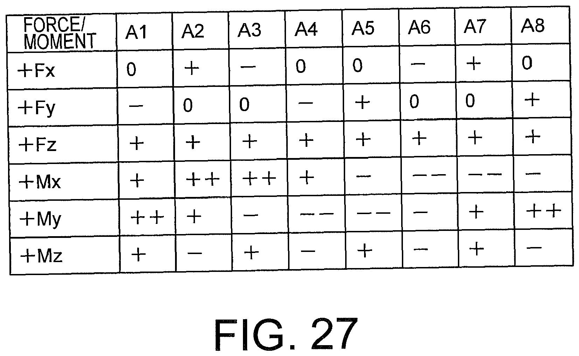

FIG. 27 summarizes the above description as a table listing an increase or decrease in separation distances from each of the detection points A1 to A8 of the rectangular deformable body 340 of FIG. 20 to the fixed body 310 when the forces +Fx, +Fy, and +Fz in each axial direction and the moments +Mx, +My, and +Mz in each axial direction, on the XYZ three-dimensional coordinate system, are applied to the force receiving body 320. In FIG. 27, the sign "+" written in the fields of the detection points A1 to A8 signifies that the separation distance between the detection point and the fixed body 310 increases, while the sign "-" indicates that the separation distance decreases, and "0" signifies that there is no change in the separation distance. The signs "++" and "--" signify a wide increase or decrease in the separation distance between the detection point and the fixed body 310, respectively.

In a case where the forces and moments applied to the force receiving body 320 are in the negative direction or around the negative axis, the directions of the forces applied to the deformable portions 345A to 345H are reversed. Accordingly, the increase and decrease of the separation distance between the detection points A1 to A8 listed in FIG. 27 and the fixed body 310 are all reversed.

(4-3. Configuration of force sensor)

Next, a configuration of the force sensor 301c having the basic structure 301 described in 4-1 and 4-2 will be described.

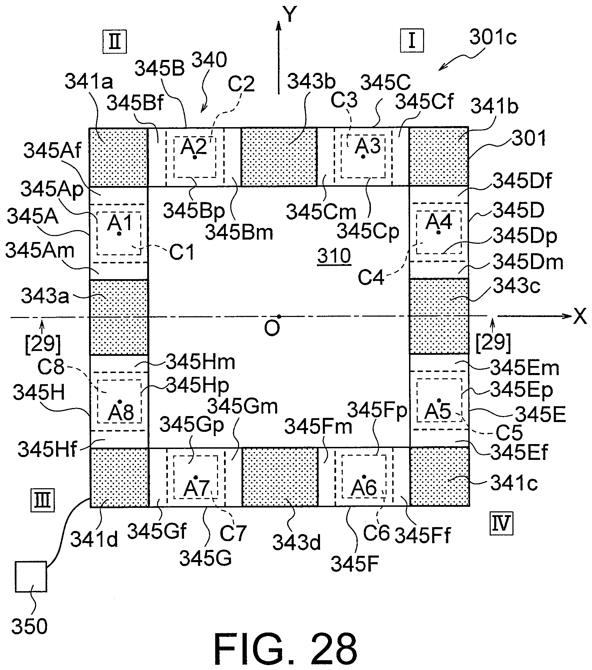

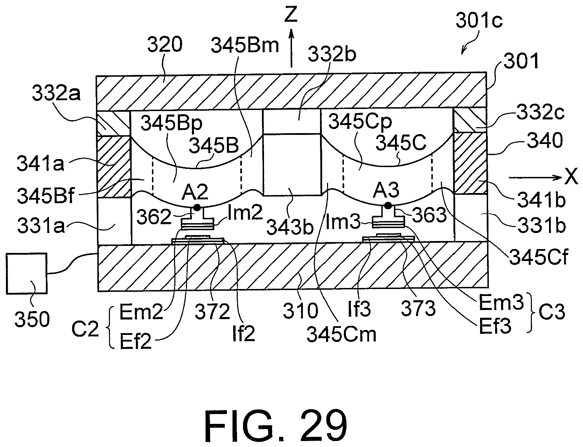

FIG. 28 is a schematic plan view illustrating a force sensor 301c according to the present embodiment using the basic structure 301 of FIG. 22, and FIG. 29 is a cross-sectional view taken along line [29]-[29] in FIG. 28. In FIG. 28, for the sake of convenience of explanation, illustration of the force receiving body 320 is omitted.

As illustrated in FIGS. 28 and 29, the force sensor 301c includes the above-described basic structure 301, and a detection circuit 350 that detects the applied force and the moment on the basis of the displacement generated in each of the detection points A1 to A8 of the deformable portions 345A to 315H of the basic structure 301. As illustrated in FIGS. 28 and 29, the detection circuit 350 according to the present embodiment includes a total of eight capacitive elements C1 to C8 each being arranged at each of the detection points A1 to A8 of the deformable portions 345A to 345H, and a measuring unit (not illustrated) connected to the capacitive elements C1 to C8 to measure the applied force on the basis of the variation amount in the electrostatic capacitance values of the capacitive elements C1 to C8.

The specific configuration of the eight capacitive elements C1 to C8 is similar to the case of the first embodiment. That is, as illustrated in FIG. 29, the basic structure 301 has a configuration in which the second displacement electrode Em2 is provided at the second detection point A2, with the second fixed electrode Ef2 being arranged on the fixed body 310 so as to face the second displacement electrode Em2. The electrodes Em2 and Ef2 constitute a second capacitive element C2. Similarly, the basic structure 301 has a configuration in which the third displacement electrode Em3 is provided at the third detection point A3, with the third fixed electrode Ef3 being arranged on the fixed body 310 so as to face the third displacement electrode Em3. The electrodes Em3 and Ef3 constitute the third capacitive element C3.

Furthermore, although not illustrated in detail, the basic structure 301 has a configuration in which the first and fourth to eighth displacement electrodes Em1 and Em4 to Em8 are respectively provided for the first, fourth to eighth detection points A1 and A4 to A8, with the first and fourth to eighth fixed electrodes Ef1 and Ef4 to Ef8 being provided on the fixed body 310 so as to face these displacement electrodes Em1, Em4 to Em8, respectively. The displacement electrodes Em1, Em4 to Em8 and the fixed electrodes Ef1 and Ef4 to Ef8, facing each other respectively, constitute the first and fourth to eighth capacitive elements C1 and C4 to C8, respectively.

Specifically, as illustrated in FIG. 29, each of the displacement electrodes Em1 to Em8 is supported on the lower surface of each of the first to eighth deformable body-side supports 361 to 368 supported by the corresponding measurement sites A1 to A8 via first to eighth displacement substrates Im1 to Im8. Furthermore, each of the fixed electrodes Ef1 to Ef8 is respectively supported on the upper surface of each of the first to eighth fixed body-side supports 371 to 378 fixed to the upper surface of the fixed body 310 via first to eighth fixed substrates If1 to If8. Each of the displacement electrodes Em1 to Em8 has a same area, and each of the fixed electrodes Ef1 to Ef8 has a same area. Note that the electrode area of each of the displacement electrodes Em1 to Em8 is set to be larger than the electrode area of each of the fixed electrodes Ef1 to Ef8 similarly to the first embodiment. In the initial state, the effective facing area and the separation distance of each set of electrodes constituting the capacitive elements C1 to C8 are all the same.

Furthermore, as illustrated in FIGS. 28 and 29, the force sensor 301c includes the detection circuit 350 that outputs an electric signal indicating the force and the moment applied to the force receiving body 320 on the basis of the elastic deformation generated in each of the deformable portions 345A to 345H of the deformable body 340. In FIGS. 28 and 29, illustration of the wiring for electrically connecting each of the capacitive elements C1 to C8 to the detection circuit 350 is omitted.

Note that in a case where the fixed body 310, the force receiving body 320, and the deformable body 340 are formed of a conductive material such as a metal, the first to eighth displacement substrates Im1 to Im8 and the first to eighth fixed substrates If1 to If8 need to be formed of an insulator so as to prevent short-circuit in each of the electrodes. This point is similar to the case of the first embodiment.

<4-4. Application of force sensor>

Next, application of the force sensor 301c when the force Fx, Fy, and Fz in each of the axial directions and the moments Mx, My, and Mz around the each of the axes, in the XYZ three-dimensional coordinate system, are applied to the force sensor 301c will be described.

(4-4-1. Case where force +Fx in the positive direction on X-axis is applied)

First, when the force +Fx in the positive direction on the X-axis is applied to the force sensor 301c, the separation distance between the electrodes increases in both the second and seventh capacitive elements C2 and C7, leading to a decrease in the electrostatic capacitance value as observed from the fields of +Fx in FIG. 27. In contrast, the separation distance between the electrodes decreases in the third and sixth capacitive elements C3 and C6, leading to an increase in the electrostatic capacitance value. There is no substantial change in the separation distance between the electrodes in the remaining first, fourth, fifth and eighth capacitive elements C1, C4, C5, and C8, causing no change in the electrostatic capacitance value. Note that when the force -Fx in the negative direction on the X-axis is applied to the force sensor 301c, the increase or decrease in the electrostatic capacitance values of the second, third, sixth and seventh capacitive elements C2, C3, C6, and C7 are reversed.

(4-4-2. Case where force +Fy in positive direction on Y-axis is applied)

Next, when the force +Fy in the positive direction on the Y-axis is applied to the force sensor 301c, the separation distance between the electrodes increases in both the fifth and eighth capacitive elements C5 and C8, leading to a decrease in the electrostatic capacitance value as observed from the fields of +Fy in FIG. 27. In contrast, the separation distance between the electrodes decreases in the firth and fourth capacitive elements C1 and C4, leading to an increase in the electrostatic capacitance value. There is no substantial change in the separation distance between the electrodes in the remaining second, third, sixth and seventh capacitive elements C2, C3, C6, and C7, causing no change in the electrostatic capacitance value. Note that when the force -Fy in the negative direction on the Y-axis is applied to the force sensor 301c, the increase or decrease in the electrostatic capacitance values of the first, fourth, fifth, and eighth capacitive elements C1, C4, C5, and C8 are reversed.

(4-4-3. Case where force +Fz in positive direction on Z-axis is applied)

Next, when the force +Fz in the positive direction on the Z-axis is applied to the force sensor 301c, the separation distance between the electrodes increases in all the capacitive elements C1 to C8, leading to a decrease in the electrostatic capacitance value as observed from the fields of +Fz in FIG. 27. Note that when the force -Fz in the negative direction on the Z-axis is applied to the force sensor 301c, the separation distance between the electrodes decreases in all the capacitive elements C1 to C8, leading to an increase in the electrostatic capacitance value.

(4-4-4. Case where moment +Mx around positive X-axis is applied)

Next, when the moment +Mx around the positive X-axis is applied to the force sensor 301c, the separation distance between the electrodes increases in each of the first to fourth capacitive elements C1 to C4, leading to a decrease in the electrostatic capacitance value as observed from the fields of +Mx in FIG. 27. Note that, due to a difference in the amount of change in the separation distance between the electrodes, the electrostatic capacitance values in the second and third capacitive elements C2 and C3 are more largely decreased than in the first and fourth capacitive elements C1 and C4. In contrast, since the separation distance between the electrodes is decreased in the fifth to eighth capacitive elements C5 to C8, leading to an increase in the electrostatic capacitance value. Note that, due to a difference in the amount of change in the separation distance between the electrodes, the electrostatic capacitance values in the sixth and seventh capacitive elements C6 and C7 are more widely increased than in the fifth and eight capacitive elements C5 and C8. Note that when the moment - Mx around the negative X-axis is applied to the force sensor 301c, the increase and decrease in the electrostatic capacitance values of the capacitive elements C1 to C8 is reversed.

(4-4-5. Case where moment +My around positive Y-axis is applied)

Next, when the moment +My around the positive Y-axis is applied to the force sensor 301c, the separation distance between the electrodes increases in each of the first, second, seventh, and eighth capacitive elements C1, C2, C7, C8, leading to a decrease in the electrostatic capacitance value as observed from the fields of +My in FIG. 27. Note that, due to a difference in the amount of change in the separation distance between the electrodes, the electrostatic capacitance values in the first and eighth capacitive elements C1 and C8 are more largely decreased than in the second and seventh capacitive elements C2 and C7. In contrast, since the separation distance between the electrodes is decreased in the third to sixth capacitive elements C3 to C6, leading to an increase in the electrostatic capacitance value. Note that, due to a difference in the amount of change in the separation distance between the electrodes, the electrostatic capacitance values in the fourth and fifth capacitive elements C4 and C5 are more widely increased than in the third and sixth capacitive elements C3 and C6. Note that when the moment -My around the negative Y-axis is applied to the force sensor 301c, the increase or decrease in the electrostatic capacitance values of the capacitive elements C1 to C8 is reversed.

(4-4-6. Case where moment +Mz around positive Z-axis is applied)

Next, when the moment +Mz around the positive Z-axis is applied to the force sensor 301c, the separation distance between the electrodes increases in each of the first, third, fifth, and seventh capacitive elements C1, C3, C5, and C7, leading to a decrease in the electrostatic capacitance value as observed from the fields of +Mz in FIG. 27. In contrast, the separation distance between the electrodes decreases in the second, fourth, sixth, and eighth capacitive elements C2, C4, C6, and C8, leading to an increase in the electrostatic capacitance value. Note that when the moment -Mz around the negative Z-axis is applied to the force sensor 301c, the increase or decrease in the electrostatic capacitance values of the capacitive elements C1 to C8 are reversed.

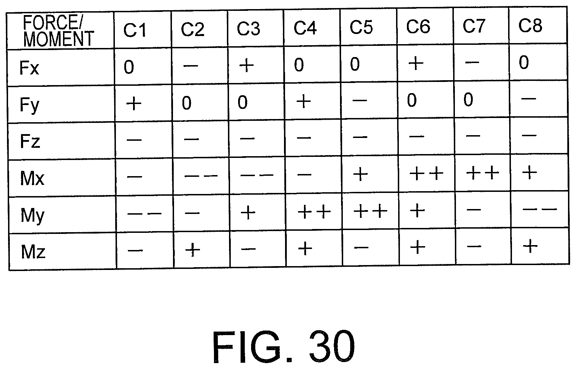

The increase or decrease of the electrostatic capacitance values of the capacitive elements C1 to C8 described above are summarized in FIG. 30. In FIG. 30, the sign "+" indicates an increase in the electrostatic capacitance value, and "-" indicates a decrease in the electrostatic capacitance value. In addition, the sign "++" signifies that the electrostatic capacitance value greatly increases, while the sign "-" signifies that the electrostatic capacitance value greatly decreases. On the other hand, the numeral "0" signifies that the electrostatic capacitance value does not substantially change.

(4-4-7. Calculation method of applied force and moment)

In view of the variation of the electrostatic capacitance values of the capacitive elements C1 to C8 as described above, the detection circuit 350 calculates the forces Fx, Fy, and Fz and the moments Mx, My, and Mz, applied to the force sensor 301c, using the following [Expression 2]. In [Expression 2], symbols C1 to C8 indicate the variation amounts in electrostatic capacitance values of the first to eighth capacitive elements C1 to C8, respectively.

[Expression 2]

$$Fx = -C2 + C3 + C6 - C7$$
$$Fy = C1 + C4 - C5 - C8$$
$$Fz = -C1 - C2 - C3 - C4 - C5 - C6 - C7 - C8$$
$$Mx = -C1 - C2 - C3 - C4 + C5 + C6 + C7 + C8$$
$$My = -C1 - C2 + C3 + C4 + C5 + C6 - C7 - C8$$
$$Mz = -C1 + C2 - C3 + C4 - C5 + C6 - C7 + C8$$

In a case where the force and the moment applied to the force sensor 301c are in the negative direction, Fx, Fy, Fz, Mx, My, and Mz on the left side may be substituted by -Fx, -Fy, -Fz, -Mx, -My, and -Mz. In this case, however, the signs of C1 to C4 on the right side are also reversed, leading to measurement of the force and moment applied by [Expression 2] regardless of whether the applied force and moment are positive or negative.

Note that with [Expression 2], the force Fz in the Z-axis direction is obtained by the sum of -C1 to -C8. For this reason, it is necessary to pay attention to the fact that the force Fz is susceptible to the influence of a temperature change and common mode noise in the use environment of the force sensor 301c.

<4-5. Cross-axis sensitivity of force sensor>

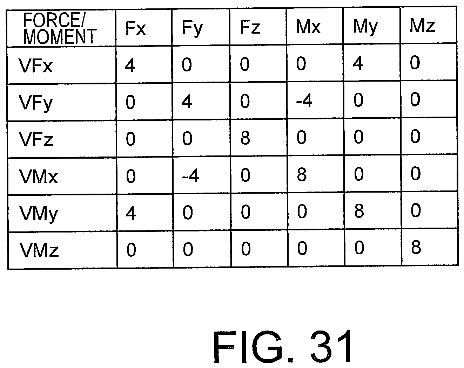

Next, cross-axis sensitivity of the force sensor 301c according to the present embodiment will be described with reference to FIG. 31. FIG. 31 is a table listing cross-axis sensitivities VFx to VMz of the forces Fx, Fy, and Fz in each axial direction and the moments Mx, My, and Mz around each axis in the force sensor 301c illustrated in FIG. 28.

The numbers given in the table of FIG. 31 are values obtained by substituting numbers in each of right sides of the above-described [Expression 2] when a capacitive element denoted by the symbol "+" is defined as +1 and the capacitive element denoted by the symbol "-" is defined as -1 for each of the force Fx, Fy, and Fz and each of the moments Mx, My, and Mz in the table illustrated in FIG. 30. That is, the numeral "8" written in the cell at an intersection of the row VFx and the column Fx is a value obtained by substituting C2 = C7 = -1, and C3 = C6 = +1 in the expression indicating Fx (first expression of [Expression 2] on the basis of the row of Fx in FIG. 30. Moreover, the numeral "0" written in the cell at an intersection of the row VFx and the column Fy is a value obtained by substituting C1 = C4 = +1, and C5 = C8 = -1 in the expression indicating Fx on the basis of the row of Fy in FIG. 30. The similar applies to the numbers of the other cells.

In the absence of cross-axis sensitivity, all the cells other than the six cells located on a diagonal line from the upper left to the lower right in the table of FIG. 31 become zero. There is, however, cross-axis sensitivity of My exists in Fx as illustrated in FIG. 31, for example, and thus, Fx and My influence each other. In this state, it is difficult to detect accurate force and moment. In this case, however, by obtaining an inverse matrix of an actual matrix of cross-axis sensitivity (matrix of 6 rows and 6 columns corresponding to the table of FIG. 31) and by multiplying an output of the force sensor 301c by the inverse matrix using correction calculation, it is possible to reduce the cross-axis sensitivity to zero.

According to the force sensor 301c of the present embodiment as described above, the fixed portion-side curved portions 345Af to 345Hf and the force receiving portion-side curved portions 345Am to 345Hm are respectively interposed between the main curved portions 345Ap to 345Hp and the adjacent fixed portions 341a to 341d and the force receiving portions 343a to 343d. With this configuration, it is possible to avoid stress concentration to the connecting portions between the main curved portions 345Ap to 345Hp and the adjacent fixed portions 341a to 341d and the force receiving portions 343a to 343d. Accordingly, with the present embodiment, it is possible to provide the highly reliable capacitance type force sensor 301c.

In addition, the force sensor 301c according to the present embodiment can measure all six components of the forces Fx, Fy, and Fz in each of the axial directions and the moments Mx, My, and Mz around each of the axes, of the XYZ three-dimensional coordinate system. Furthermore, the force sensor 301c can detect five components except the force Fz in the Z-axis direction by the difference between the electrostatic capacitance values of the eight capacitive elements C1 to C8. That is, according to the present embodiment, it is possible to provide the force sensor 301c not easily influenced by a temperature change and common mode noise of the use environment in measuring the five components Fx, Fy, Mx, My, and Mz excluding the force Fz.

In addition, since the deformable body is provided as the rectangular deformable body 340 having a square shape symmetrical with respect to the X-axis and the Y-axis, the rectangular deformable body 340 is symmetrically deformed by the applied force and moment. This makes it easy to measure the applied force and the moment on the basis of the deformation.

In particular, the rectangular deformable body 340 is positioned on the XY plane to as to set the center of the body to match with the origin O of the XYZ three-dimensional coordinate system. Each of the four force receiving portions 343a to 343d is arranged at a midpoint of each of sides of the rectangular deformable body 340, and each of four fixed portions is arranged at each of vertexes of the rectangular deformable body 340. With such a symmetrical configuration, the capacitive elements C1 to C8 are arranged symmetrically with respect to the X-axis and the Y-axis, making it possible to extremely easily measure the applied force and moment on the basis of the variation amount of the electrostatic capacitance values of each of the capacitive elements C1 to C8.

Main curved surfaces 345Apa to 345Hpa of the main curved portions 345Ap to 345Hp are formed by curved surfaces along an arc when observed along a closed loop shaped rectangular path of the rectangular deformable body 340. This makes it possible to further stabilize the elastic deformation generated in the main curved portions 345Ap to 345Hp due to the force and the moment applied to the force sensor 301c.

<<< §5. Force sensor according to fourth embodiment of the present invention >>>

Next, a force sensor according to a fourth embodiment of the present invention will be described.

<5-1. Structure of basic structure>

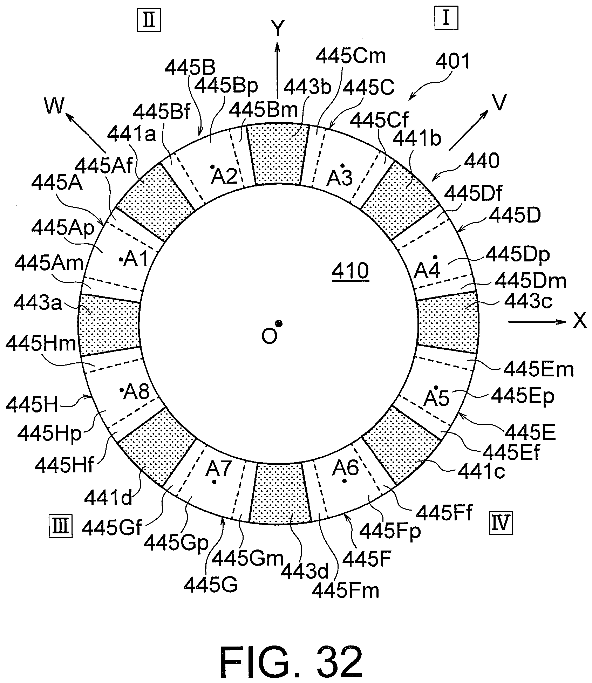

FIG. 32 is a schematic plan view illustrating a basic structure 401 adopted in a force sensor according to the fourth embodiment of the present invention. Unlike the third embodiment described above, the basic structure 401 of the present embodiment includes a doughnut-shaped annular deformable body 440. The annular deformable body 440 is a structure in which the outline of the inner periphery and the outline of the outer periphery are both circular and is arranged on the XY plane about the origin O as a center when viewed in the Z-axis direction. The annular deformable body 440 includes: four fixed portions 441a to 441d fixed with respect to the XYZ three-dimensional coordinate system along a circular closed loop shaped path; four force receiving portions 443a to 443d are alternately positioned with the fixed portions 441a to 441d in a closed loop shaped path and that receive action of the force and the moment; and a total of eight deformable portions 445A to 445H positioned one for each of portions between the fixed portions 441a to 441d and the force receiving portions 443a to 443d adjacent to each other in the closed loop shaped path.

As illustrated in FIG. 32, when the V-axis and the W-axis passing through the origin O and forming an angle of 45° with respect to the X-axis and the Y-axis are defined on the XY plane, each of the four fixed portions 441a to 441d is arranged at each of positions on the V-axis and the W-axis. Moreover, each of the four force receiving portions 443a to 443d is arranged on each of positions on the X-axis and the Y-axis. The distances from the origin O to each of the fixed portions 441a to 441d and to each of the force receiving portions 443a to 443d are equal to each other. As illustrated in FIG. 32, a deformable portion located in a region sandwiched between the negative X-axis and the positive W-axis is defined as a first deformable portion 445A, and subsequent portions of the eight deformable portions 445A to 445H will be referred to as a second deformable portion 445B, a third deformable portion 445C, ..., to an eighth deformable portion 445H clockwise along an annular path of the annular deformable body 440. Specifically, the structure of each of the deformable portions 445A to 445H is a curved structure similar to each of the deformable portions 45 to 48 in the first embodiment (refer to FIG. 21). In short, the annular deformable body 440 of the present embodiment has an annular shape obtained by curving each of the sides of the rectangular deformable body 340 (refer to FIG. 20) of the third embodiment. Therefore, the basic structure 401 according to the present embodiment is different from the third embodiment in that such an annular deformable body is adopted.

In addition, together with the adoption of the annular deformable body 440, each of the fixed body 410 and the force receiving body 420 is also configured to have an outline of the outer periphery as a circle having the origin O as a center. Note that, for the sake of convenience of explanation, illustration of the force receiving body 420 is omitted in FIG. 21. Since other configurations are substantially similar to the configuration of the third embodiment, components common to the third embodiment are denoted by the similar reference numerals in FIG. 32, and a detailed description thereof will be omitted.

<5-2. Application of basic structure>

Next, application of the basic structure 401 will be described. As described above, the annular deformable body 440 can be regarded as a body obtained by curving each of the sides of the rectangular deformable body 340 according to the third embodiment. Therefore, the increase or decrease of the separation distance between each of the measurement sites A1 to A8 of the deformable portions 445A to 445H and the fixed body 410 when the forces Fx, Fy, and Fz in each of the axial directions and the moments Mx, My, and Mz around each of the axes, on the XYZ three-dimensional coordinate system are applied to the force receiving portions 443a to 443d of the annular deformable body 440 is substantially the same as the increase or decrease of the separation distance in the third embodiment.

Note that, due to the change in the shape of the deformable body from a rectangular shape to a circular shape, action of the force +Fx in the positive direction on the X-axis to the force receiving portions 443a to 443d via the force receiving body 420 results in observation of elastic deformation at the curved portions 445Ap, 445Dp, 445Ep, and 445Hp of the first, fourth, fifth, and eighth deformable portions 445A, 445D, 445E, and 445H, respectively. Specifically, the first and eighth deformable portions 445A, 445H are slightly compression-deformed, leading to displacement of the corresponding first and eighth measurement sites A1 and A8 in the negative direction on the Z-axis. In contrast, the fourth and fifth deformable portions 445D and 445E are slightly tensile-deformed, leading to displacement of the corresponding fourth and fifth measurement sites A4 and A5 in the positive direction on the Z-axis. Similarly, when a force +Fy in the positive direction on the Y-axis is applied to the force receiving portions 443a to 443d via the force receiving body 420, the sixth and seventh deformable portions 445F and 445G are slightly compression-deformed, leading to displacement of the corresponding sixth and seventh measurement sites A6 and A7 in the negative direction on the Z-axis. In contrast, the second and third deformable portions 445B and 445C are slightly tensile-deformed, leading to displacement of the corresponding second and third measurement sites A2 and A3 in the positive direction on the Z-axis. In the case where the other forces Fz and moments Mx, My, and Mz are applied, the displacement in the Z-axis direction generated in each of the measurement sites A1 to A8 is similar to the case of the third embodiment.

FIG. 33 summarizes the increase and decrease in separation distances between each of the measurement sites A1 to A8 and the fixed body 410 when the forces Fx, Fy, and Fz in each of XYZ axial directions and the moments Mx, My, and Mz about each of the XYZ axes are applied to the force receiving body 420 of the basic structure 401 of the present embodiment. In FIG. 33, the sign "+" signifies that the separation distance between the measurement site A1 to A8 and the fixed body 410 increases, and the sign "-" signifies that the separation distance decreases. In addition, the sign "++" signifies that the separation distance widely increases, while the sign "--" signifies that the separation distance widely decreases. Furthermore, the bracketed signs "(+)" and "(-)" mean that the extent of increase and decrease of the separation distance between each of the measurement sites A1 to A8 and the fixed body 410 is slight.

(5-3. Configuration of force sensor)

Next, a configuration of the force sensor 401c having the basic structure 401 described in 5-1 and 5-2 will be described.

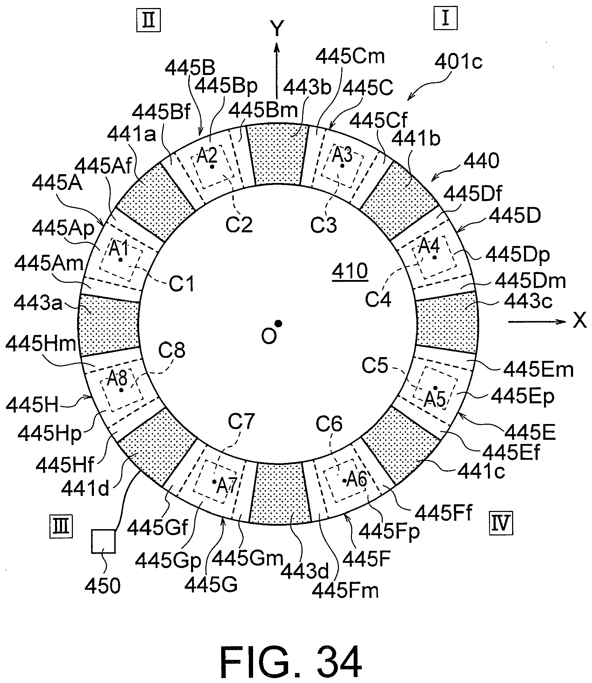

FIG. 34 is a schematic plan view illustrating the force sensor 301c according to the present embodiment adopting the basic structure 401 of FIG. 32. As illustrated in FIG. 34, the force sensor 401c includes the above-described basic structure 401, and a detection circuit 450 that detects the applied force and the moment on the basis of the displacement generated in each of the detection points A1 to A8 of the deformable portions 445A to 415H of the basic structure 401. As illustrated in FIG. 34, the detection circuit 450 according to the present embodiment includes a total of eight capacitive elements C1 to C8 each being arranged at each of the detection points A1 to A8 of the deformable portions 445A to 445H, and a measuring unit (not illustrated) connected to the capacitive elements C1 to C8 to measure the applied force on the basis of the variation amount in the electrostatic capacitance values of the capacitive elements C1 to C8. In FIG. 34, illustration of the wiring for electrically connecting each of the capacitive elements C1 to C8 to the detection circuit 450 is omitted. The configuration of each of the capacitive elements and the mode of attachment to the basic structure 401 and other configurations are substantially similar to those of the third embodiment. Accordingly, portions similar to the configuration of the third embodiment are denoted by substantially similar reference numerals in FIG. 34, and a detailed description thereof will be omitted.

<5-4. Application of force sensor>

As observed from the above description, the force sensor 401c behaves substantially similarly to the force sensor 301c according to the third embodiment toward the applied force and moment. In particular, in a case where the four components of the force Fz in the Z-axis direction, and the moments Mx, My, and Mz around each of the XYZ axes are applied to the force sensor 401c, variation of the electrostatic capacitance values of the capacitive elements C1 to C8 exhibits the same behavior as the case of the force sensor 301c according to the third embodiment.

In contrast, in a case where the forces Fx and Fy in the X- and Y-axis directions are applied corresponding to the difference in the shape of the deformable body, the variation of the electrostatic capacitance value of each of the capacitive elements C1 to C8 is slightly different from the case of the force sensor 301c according to the third embodiment. For example, when the force +Fx in the positive direction on the X-axis is applied to the force receiving body 420, each of the force receiving portions 443a to 443d of the annular deformable body 440 is displaced in the positive direction on the X-axis. At this time, with the displacement of the first force receiving portion 443a toward the center (origin O) of the annular deformable body 440, the first and eighth deformable portions 445A and 445H are slightly compressed in the radial direction of the annular deformable body 440. As a result, the first and eighth main curved portions 445Ap and 445Hp elastically deform to slightly decrease the radius of curvature, leading to a slight displacement of each of the corresponding detection points A1 and A8 in the negative direction on the Z-axis. Similarly, with the displacement of the third force receiving portion 443c so as to move away from the center (origin O) of the annular deformable body 440, the fourth and fifth deformable portions 445D and 445E are slightly pulled in the circumferential direction of the annular deformable body 440. As a result, the fourth and fifth main curved portions 445Dp and 445Ep elastically deform to slightly increase the radius of curvature, leading to slight displacement of the corresponding detection points A4 and A5 in the positive direction on the Z-axis.

In contrast, the elastic deformation generated in the remaining second, third, sixth and seventh deformable portions 445B, 445C, 445F, and 445G and the corresponding displacement of the measurement sites A2, A3, A6, and A7 are similar to the case of the third embodiment. The absolute values of the displacements of these measurement sites A2, A3, A6, and A7 are of course larger than the absolute values of the displacements of the measurement sites A1, A4, A5, and A8. In a case where a force in the negative direction on the X-axis is applied to the force receiving body 420 of the force sensor 401c, the direction of the force applied to each of the deformable portions 445A to 445H is reversed, resulting in a reversed direction of displacement of each of the detection points A1 to A8.

The case where the force Fy in the Y-axis direction is applied to the force receiving body 420 of the force sensor 401c corresponds to the case where the above-described force Fx in the X-axis direction is applied while being rotated 90° counterclockwise about the origin O as a center. Therefore, the force sensor 401c detects a slight displacement in the Z-axis direction also in the second, third, sixth and seventh measurement sites A2, A3, A6, and A7, at which no displacement is generated in a case where the force Fy in the Y-axis direction is applied to the force receiving body 320 of the force sensor 301c according to the third embodiment.

From the above, in the case of the force sensor 401c according to the present embodiment, with the action of the forces Fx, Fy, and Fz in each of the axial directions and the moments Mx, My, and Mz around each of the axes, in the XYZ three-dimensional coordinate system, the electrostatic capacitance values of the capacitive elements C1 to C8 respectively associated with the individual detection points A1 to A8 vary substantially similarly to the case of the third embodiment. Note that in the present embodiment, a slight displacement in the Z-axis direction is generated in the measurement sites A1, A4, A5, A8 when the force Fx in the X-axis direction is applied, leading to a slight variation in the electrostatic capacitance values of the capacitive elements C1, C4, C5, and C8. Similarly, a slight displacement in the Z-axis direction is generated in the measurement sites A2, A3, A6, A7 when the force Fy in the Y-axis direction is applied, leading to a slight variation in the electrostatic capacitance values of the capacitive elements C2, C3, C6, and C7.

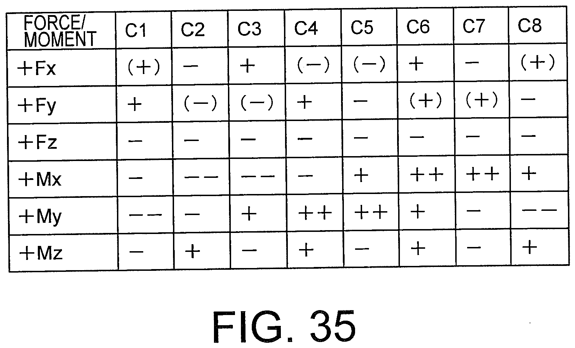

The increase and decrease of the electrostatic capacitance values of the capacitive elements C1 to C8 described above are summarized in FIG. 35. In FIG. 35, the sign "+" indicates an increase in the electrostatic capacitance value, and "-" indicates a decrease in the electrostatic capacitance value. In addition, the sign "++" signifies that the electrostatic capacitance value widely increases, while the sign "--" signifies that the electrostatic capacitance value widely decreases. Furthermore, the bracketed signs "(+)" and "(-)" signify slight variation in the electrostatic capacitance value.

<5-5. Calculation method of applied force and moment>

In view of the variation of the electrostatic capacitance values of the capacitive elements C1 to C8 as described above, the detection circuit 450 calculates the forces Fx, Fy, and Fz and the moments Mx, My, and Mz, applied to the force sensor 401c, using the following [Expression 3]. In [Expression 3], symbols C1 to C8 indicate the variation amounts in electrostatic capacitance values of the first to eighth capacitive elements C1 to C8, respectively.

[Expression 3]

$$Fx = -C2 + C3 + C6 - C7$$
$$Fy = C1 + C4 - C5 - C8$$
$$Fz = -C1 - C2 - C3 - C4 - C5 - C6 - C7 - C8$$
$$Mx = -C1 - C2 - C3 - C4 + C5 + C6 + C7 + C8$$
$$My = -C1 - C2 + C3 + C4 + C5 + C6 - C7 - C8$$
$$Mz = -C1 + C2 - C3 + C4 - C5 + C6 - C7 + C8$$

Alternatively, the detection circuit 450 may calculate applied forces Fx, Fy, and Fz and the moments Mx, My, and Mz selectively using the capacitive elements labeled with the signs "++" and "--" in FIG. 35 for Mx and My by the following [Expression 4]. Of course, this also applies to the third embodiment.

[Expression 4]

$$Fx = -C2 + C3 + C6 - C7$$
$$Fy = C1 + C4 - C5 - C8$$
$$Fz = -C1 - C2 - C3 - C4 - C5 - C6 - C7 - C8$$
$$Mx = -C2 - C3 + C6 + C7$$
$$My = -C1 - C2 + C3 + C4 + C5 + C6 - C7 - C8$$
$$Mz = -C1 + C2 - C3 + C4 - C5 + C6 - C7 + C8$$

This [Expression 3] is the same as [Expression 2] described in the third embodiment. As described above, the force sensor 401c includes the capacitive element in which the electrostatic capacitance value slightly varies when the forces Fx and Fy in the X- and Y-axis directions are applied, as indicated by the bracketed signs in FIG. 35. The variation amounts of the electrostatic capacitance value, however, are extremely small as compared with the variation amount of the electrostatic capacitance value of the capacitive element indicated by the non-bracketed reference numerals. Therefore, in calculating the applied force and the moment, the change in the electrostatic capacitance value of the capacitive element indicated by the bracketed signs can be handled as substantially zero.

In a case where the force and the moment applied to the force sensor 401c is in the negative direction, Fx, Fy, Fz, Mx, My, and Mz on the left side may be substituted by -Fx, -Fy, -Fz, -Mx, -My, and -Mz. Note that since the force Fz in the Z-axis direction is obtained by the sum of -C1 to -C8, it is necessary to pay attention to the fact that the force Fz is susceptible to the influence of a temperature change and common mode noise in the use environment of the force sensor 301c. In addition, correction calculation for canceling the cross-axis sensitivity can employ a method similar to the method in the third embodiment. This makes it possible to reduce the influence of the cross-axis sensitivity to substantially zero, leading to achievement of a highly accurate force sensor 401c.

Even with the force sensor 401c according to the present embodiment as described above, it is possible to achieve operational effects similar to the case of the force sensor 301c according to the third embodiment.

<5-6. Specific method of correction calculation>

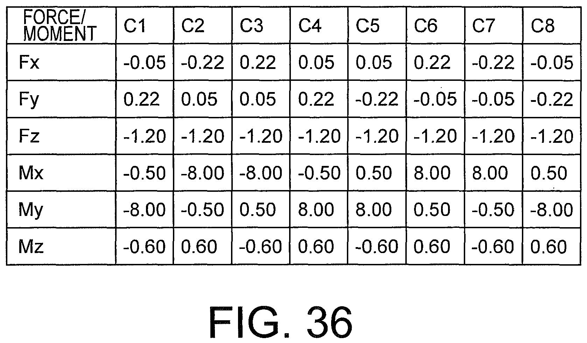

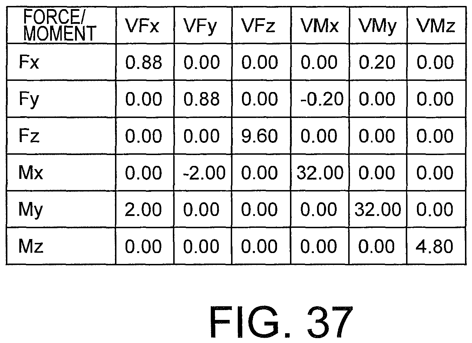

Now, a method of correction calculation will be described in detail. FIG. 36 is a table illustrating variation of the electrostatic capacitance value generated in each of the capacitive elements C1 to C8 when the forces Fx, Fy, and Fz in each of the axial directions and the moments Mx, My, and Mz in each of the axial directions, on the XYZ three-dimensional coordinate system, are applied to the force receiving body 420. FIG. 37 is a table listing cross-axis sensitivity of the force sensor 401c of FIG. 34 calculated on the basis of variations of each of the electrostatic capacitance values illustrated in FIG. 36.

The electrostatic capacitance value of each of the capacitive elements C1 to C8 varies as illustrated in FIG. 36 when the forces Fx, Fy, and Fz in each of the axial directions and the moments Mx, My, and Mz in each of the axial directions, on the XYZ three-dimensional coordinate system, are applied to the force receiving body 420. Note that the table of FIG. 36 and the table of FIG. 35 are different in signs in the fields corresponding to (+) and (-) in FIG. 35. Reasons for this are that FIG. 35 indicates the displacement at the points A1 to A8 of FIG. 34 while FIG. 36 illustrates actual changes in the electrostatic capacitance values of the capacitive elements of FIG. 34, and that FIG. 36 illustrates a result of finite element analysis and might include a calculation error due to mesh setting at the time of analysis, or the like. In any case, since correction calculation is performed in the measurement of the applied force and the moment, the above-described difference in the signs would not be a big problem.

Evaluation of cross-axis sensitivity of the force sensor 401c according to the present embodiment based on the numerical values illustrated in FIG. 36 is as illustrated in FIG. 37. Note that the cross-axis sensitivity in FIG. 37 has been calculated on the basis of the above-described [Expression 4]. Specifically, the numerical value 0.88 described in the cell at which a row Fx and a column VFx in FIG. 37 intersect is a numerical value obtained by substituting C2 = -0.22, C3 = C6 = 0.22, and C7 = -0.22 described in the row Fx of FIG. 36 into the first expression of [Expression 4], namely, Fx = - C2 + C3 + C6 - C7. Similarly, the numerical value 2.00 described in the cell at which a row My and a column VFx intersect is a numerical value obtained by substituting C2 = -0.50, C3 = C6 = 0.50, and C7 = -0.50 described in the row My of FIG. 36 into the first expression of [Expression 4], namely, Fx = - C2 + C3 + C6 - C7. Numerical values have been calculated for other cells in a similar manner.

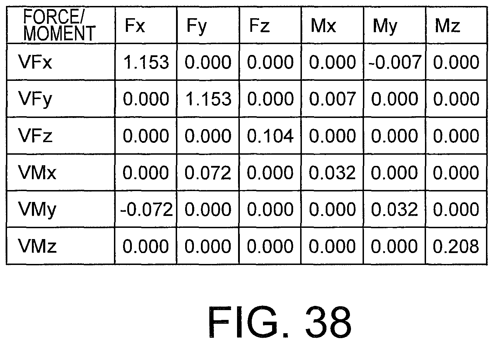

The table of FIG. 37 created as described above can be regarded as a matrix of 6 rows and 6 columns. The inverse matrix of this is illustrated in FIG. 38. By multiplying the output from the detection circuit 450 of the force sensor 401c by this inverse matrix, it is possible to cancel the cross-axis sensitivity.

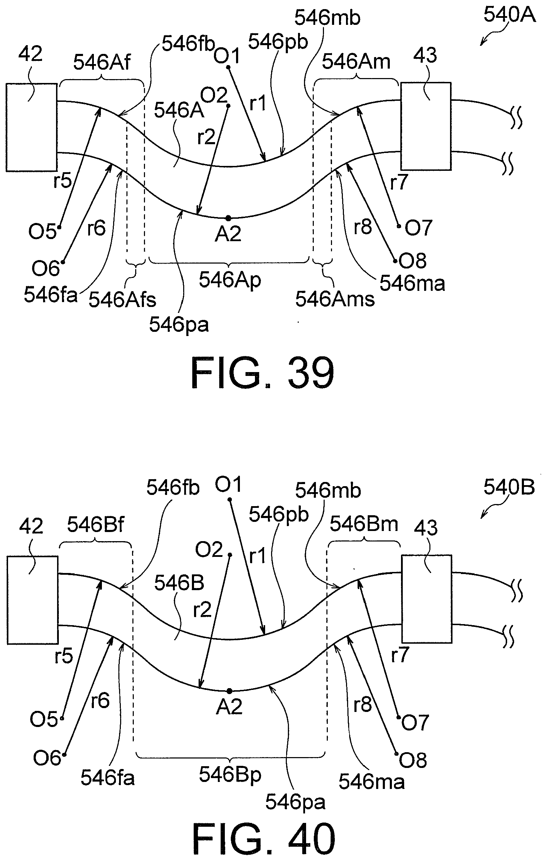

In each of the force sensors described above, the deformable body 40 illustrated in FIG. 4 is applied. Alternatively, it is also possible to adopt a deformable body having a different configuration from that of FIG. 4. FIGS. 39 and 40 are schematic side views respectively illustrating a portion of the deformable bodies 540A and 540B according to a modification of FIG. 4. Specifically, FIGS. 39 and 40 illustrate selected portions of the deformable bodies 540A and 540B that correspond to FIG. 4.

In the example illustrated in FIG. 39, a fixed portion-side linear portion 546Afs having mutually parallel planes of a Z-axis positive-side surface and the Z-axis negative-side surface is provided between a main curved portion 546Ap and a fixed portion-side curved portion 546Af. Furthermore, a force receiving portion-side linear portion 546Ams having mutually parallel planes of a Z-axis positive-side surface and the Z-axis negative-side surface is provided between the main curved portion 546Ap and a force receiving portion-side curved portion 546Am. Furthermore, the Z-axis positive-side surface of the deformable portion 546A has a curvature different from the example illustrated in FIG. 4. That is, while a Z-axis positive-side surface 546pb of the main curved portion 546Ap is a curved surface along an arc having a radius r1 about a point O1 as a center similarly to FIG. 4, a Z-axis positive-side surface 546fb of the fixed portion-side curved portion 546Af is a curved surface along an arc having a radius r5 about a point O5 as a center, being curved toward the positive side on the Z-axis, as illustrated in FIG. 39. Furthermore, as illustrated in FIG. 39, a Z-axis positive-side surface 546mb of the force receiving portion-side curved portion 546Am is a curved surface along an arc having a radius r7 about a point O7 as a center, being curved toward the positive side on the Z-axis.

Moreover, while a main curved surface 546pa of the main curved portion 546Ap is a curved surface along an arc having a radius r2 about a point O2 as a center similarly to FIG. 4, a fixed portion-side curved surface 546fa is a curved surface along an arc having a radius r6 about a point O6 as a center, being curved toward the positive direction on the Z-axis, as illustrated in FIG. 39. Furthermore, as illustrated in FIG. 39, a force receiving portion-side curved surface 546ma is a curved surface along an arc having a radius r8 about a point O8 as a center, being curved toward the positive direction on the Z-axis. Although not illustrated, the similar applies to remaining deformable portions 545A, 547A, and 548D.

That is, the Z-axis negative-side surface of the deformable body 540A illustrated in FIG. 39 has a configuration similar to the deformable body 40 in FIG. 4 except that the fixed portion-side linear portions 545Afs to 548Afs and the force receiving portion-side linear portions 545Ams to 548Ams are provided. In the illustrated example, the points O5 and O6 are arranged on a straight line parallel to the Z-axis, the points O7 and O8 are arranged on a straight line parallel to the Z-axis, and r5 = r6 = r7 = r8 is satisfied. In this case, the deformable portions 565A to 568A are respectively configured symmetrically with respect to the corresponding measurement sites A1 to A4, making it possible to easily calculate the applied force and the moment.

Note that the main curved portions 545Ap to 548Ap may be directly connected to the fixed portion-side curved portions 545Af to 548Af respectively without interposing the fixed portion-side linear portions 545Afs to 548Afs. Furthermore, the main curved portions 545Ap to 548Ap may be directly connected to the force receiving portion-side curved portions 545Am to 548Am respectively without interposing the force receiving portion-side linear portions 545Ams to 548Ams. An example of this is illustrated in FIG. 40. In FIG. 40, constituents corresponding to FIG. 39 are denoted by the similar reference numerals as in FIG. 39, and a detailed description thereof will be omitted.

Even with the force sensor that adopts the deformable bodies 540A and 540B respectively illustrated in FIGS. 39 and 40, it is possible to provide application similar to the case of the force sensor 1c adopting the deformable body 40 illustrated in FIG. 4.

While four or eight capacitive elements are arranged in each of the force sensors of §1 to §5, five to seven capacitive elements or nine or more capacitive elements may be arranged. In this case, it is also possible to provide application similar to the case of each of the above-described force sensors by outputting each of electric signals T1 to T3 in accordance with individual cases. In addition, while each of the force sensor of §1 to §5 has a configuration in which the fixed portions and the force receiving portions are all adjacent to each other, the present invention is not limited to such a mode. That is, some of the force receiving portions may be adjacent to each other, or some of the fixed portions may be adjacent to each other. In this case, however, it is necessary to provide at least one pair of the force receiving portion and the fixed portion adjacent to each other.

<<< §6. Modifications >>>

<First Modification>

In each of the force sensors described above, the main curved portion curved toward the negative side on the Z-axis and the fixed portion-side curved surface and the force receiving portion-side curved surface curved toward the positive side on the Z-axis are provided on the Z-axis negative-side surface of the deformable body. However, the present invention is not limited to this mode. For example, a main curved portion curved toward the positive side on the Z-axis, a fixed portion-side curved surface and a force receiving portion-side curved surface curved toward the negative side on the Z-axis may be provided on a Z-axis positive-side surface of the deformable body. In this case, the measurement sites A1 to A4 or A1 to A8 of each of the deformable bodies are defined on the positive side on the Z-axis of each of the main curved portion.

Alternatively, the deformable portion of the deformable body may be curved in the radial direction rather than the Z-axis direction. That is, the deformable body 40 illustrated in FIG. 1 may have a configuration in which each of the deformable portions 45 to 48 includes a main curved portion having a main curved surface curved toward the inside (radially inward) or outside (radially outward) with respect to a closed loop shaped (annular) path. In addition, each of the deformable portions 45 to 48 may include a fixed portion-side curved portion connecting these main curved portions with each of the fixed portions 41 and 42 and having a fixed portion-side curved surface curved toward the inside or outside with respect to a closed loop shaped path, and may include a force receiving portion-side curved portion connecting the main curved portion with the force receiving portions 43 and 44 and having a force receiving portion-side curved surface curved toward the inside or outside with respect to the closed loop shaped path.

Specifically, in a case where the main curved portion is curved radially toward the outside, the main curved surface, the fixed portion-side curved surface, and the force receiving portion-side curved surface are defined on the outer peripheral surface of the deformable body. At this time, the fixed portion-side curved surface and the force receiving portion-side curved surface may be curved radially toward the inside with respect to the closed loop shaped path. In this case, the measurement sites A1 to A4 or A1 to A8 of each of the deformable bodies are defined on the outer peripheral surface of the deformable body (radially outer surface of the main curved portion). Alternatively, in a case where the main curved portion is curved radially toward the inside, the main curved surface, the fixed portion-side curved surface, and the force receiving portion-side curved surface are defined on the inner peripheral surface of the deformable body. At this time, the fixed portion-side curved surface and the force receiving portion-side curved surface may be curved radially toward the outside with respect to the closed loop shaped path. In this case, the measurement sites A1 to A4 or A1 to A8 of each of the deformable bodies are defined on the inner peripheral surface of the deformable body (radially inner surface of the main curved portion).

<Second Modification>

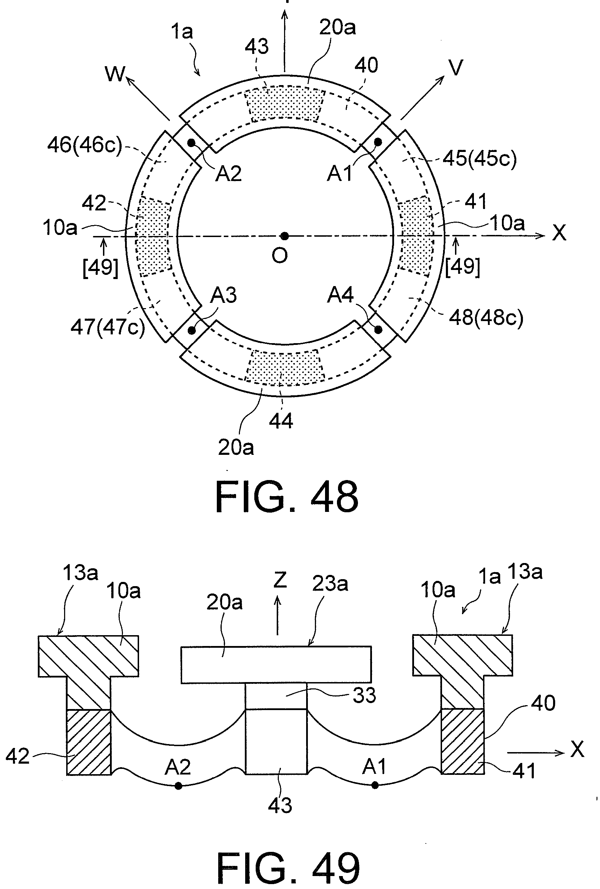

Next, a modification in which the fixed body 10 and the force receiving body 20 illustrated in FIG. 1 are modified will be described with reference to FIGS. 48 and 49. FIG. 48 is a schematic plan view illustrating a modification of the basic structure 1 in FIG. 1, and FIG. 49 is a cross-sectional view taken along line [49]-[49] in FIG. 48.

In the example illustrated in FIG. 1, the deformable body 40 is arranged sandwiched between the fixed body 10 and the force receiving body 20. In contrast, in the examples illustrated in FIGS. 48 and 49, the fixed body 10a and the force receiving body 20a are arranged on the same side with respect to the deformable body 40. Specifically, as illustrated in FIG. 49, two fixed bodies 10a and two force receiving bodies 20a are alternately arranged along a closed loop shaped path. Each of the fixed bodies 10a is connected to each of the fixed portion 41 and 42 of the deformable body 40 from the positive side on the Z-axis, and each of the force receiving bodies 20a is connected to each of the force receiving portions 43 and 44 of the deformable body 40 from the positive side on the Z-axis. Each of the fixed bodies 10a and each of the force receiving bodies 20a may be connected to the deformable body 40 from the negative side of the Z-axis. One of the fixed bodies 10a and each of the force receiving bodies 20a may be connected to the deformable body 40 from the positive side on the Z-axis and the other may be connected to the deformable body 40 from the negative side on the Z-axis.

Also, as illustrated in FIG. 49, the force receiving body 20a has a force receiving body surface 23a facing the positive direction on the Z-axis (upward), and the fixed body 10a has a fixed body surface 13a facing the positive direction on the Z-axis (upward). In this modification, the distance from the deformable body 40 to the force receiving body surface 23a different from the distance from the deformable body 40 to the fixed body surface 13a. More specifically, the fixed body surface 13a is arranged at a position farther from the deformable body 40, than the force receiving body surface 23a. In the illustrated example, each of the upper surface (Z-axis positive-side surface) of the fixed body 10a and the force receiving body 20a is a surface parallel to the XY plane, and the Z-coordinate of the upper surface of the fixed body 10a is greater than the Z-coordinate of the upper surface of the force receiving body 20a. This difference in Z-coordinates is set in accordance with the configuration of the attachment object to which the basic structure body 1a illustrated in FIGS. 48 and 49 is attached. Therefore, depending on the configuration of the attachment object, the Z-coordinate of the fixed body surface 13a may be smaller than the Z-coordinate of the force receiving body surface 23a, or the Z-coordinate of the fixed body surface 13a may be the same as and the Z-coordinate of the force receiving body surface 23a.

<Third Modification>

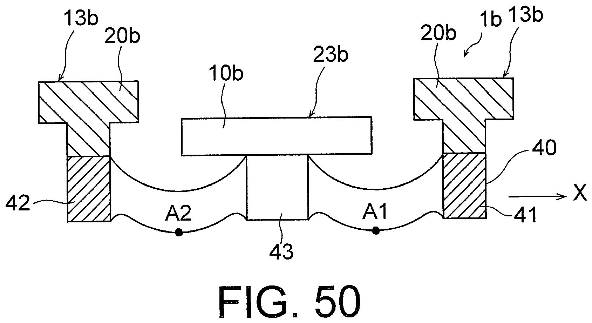

FIG. 50 is a schematic cross-sectional view illustrating another modification of the basic structure 1 of FIG. 1. In the example illustrated in FIG. 50, the fixed body 10b is integrally formed with the fixed portions 41 and 42 without interposing the connecting members 33 and 34 (refer to FIGS. 1 and 3). Even with this configuration, the application similar to the basic structure illustrated in FIG. 1 can be provided. Although not illustrated, the force receiving body 20b instead of the fixed body 10b may be formed integrally with each of the force receiving portions 43 and 44 without interposing the connecting members 31 and 32 (refer to FIG. 1). Alternatively, the fixed body 10b may be integrally formed with each of the fixed portions 41 and 42, and the force receiving body 20b may be integrally formed with each of the force receiving portions 43 and 44.

These modifications can also be adopted for the deformable body 40 illustrated in FIG. 16, the deformable body 640 illustrated in FIG. 18, and the deformable bodies 340 and 440 of the force sensors 301c and 401c illustrated in FIGS. 28 and 34, respectively. Functions similar to the function of each of the force sensor illustrated in §1 to §5 can be provided by the force sensor having such a deformable body.

<<< §7. Force sensor according to fourth embodiment of the present invention >>>

Next, a devise for firmly attaching each of the above-described force sensors to the attachment object such as a robot will be described.

In each of the force sensors described above, a fixed body is coupled to a robot main body, for example, and an end effector such as a gripper is coupled to the force receiving body. With this configuration, a force or torque applied to the end effector is measured by the force sensor. The coupling of the force sensor with the robot main body and the end effector is typically implemented by fastening screws or bolts to two to four fastening portions provided on the force receiving body and the fixed body of the force sensor.

Meanwhile, each of the force sensors described above is suitably adopted for measuring one or both of the force and the torque (moment) of high load. This easily leads to a problem of hysteresis, for which countermeasures are critical. In particular, countermeasures for hysteresis are critical in the force Fx in the X-axis direction, the force Fy in the Y-axis direction, and the moment Mz around the Z-axis.

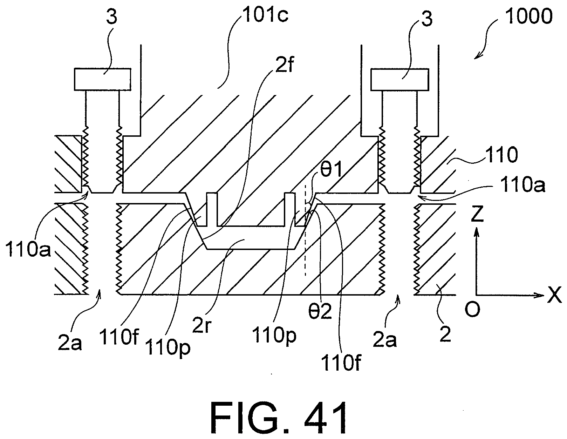

In order to avoid hysteresis, it is necessary to increase the fastening force of a fastening portion of the force sensor. This needs to increase the diameter of the bolt or increase the number of fastening portions. This case, however, leads to another problem of enlarged external dimension of the force sensor even though the problem of hysteresis is eliminated or reduced. In order to solve such a problem, a combination body 1000 is formed by the force sensor together with one or both of the robot main body and the end effector as illustrated in FIG. 41, making it possible to eliminate or reduce the problem of hysteresis without increasing the external dimension of the force sensor.

<7-1. First Example>

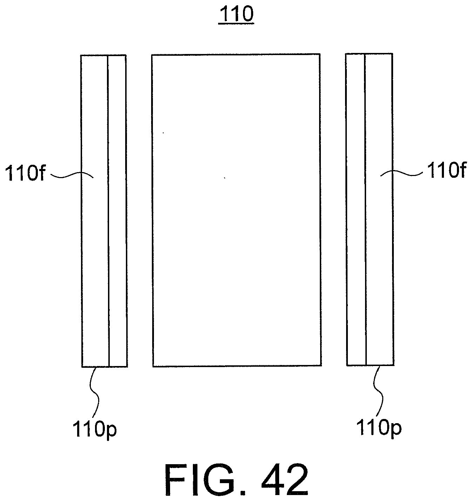

FIG. 41 is a schematic cross-sectional view illustrating the combination body 1000 obtained by a force sensor 101c according to a modification of FIG. 1 and an attachment object 2 to which the force sensor 101c is attached. Moreover, FIG. 42 is a schematic bottom view illustrating a sensor-side projection 110p of the force sensor 101c illustrated in FIG. 41 when viewed from the negative direction on the Z-axis.

As illustrated in FIG. 41, the force sensor 101c included in the combination body 1000 is configured to be attached to the attachment object 2 having an attachment recess 2r. The attachment object 2 the above-described robot main body, for example. A fixed body 110 of the force sensor 101c includes the sensor-side projection 110p to be accommodated in the attachment recess 2r in a region facing the attachment object 2. Furthermore, the fixed body 110 has a through hole 110a formed in its outer edge. A plurality of the through holes 110a may be arranged at equal intervals in the circumferential direction of the fixed body 110 at equal distances from the Z-axis. As illustrated in FIG. 40, an attachment hole 2a is formed in the attachment object 2 at a position corresponding to the through hole 110a. The inner peripheral surface of the attachment hole 2a includes threaded grooves. The through hole 110a and the attachment hole 2a are formed to position their center axes to be parallel to the Z-axis.

As illustrated in FIG. 41, an acute angle $\theta 1$ formed by an outer peripheral surface 110f of the sensor-side projection 110p with respect to an attachment direction (Z direction) when the force sensor 101c is attached to the attachment object 2 is smaller than an acute angle $\theta 2$ formed by an inner peripheral surface 2f of the attachment recess 2r with respect to the attachment direction. When the sensor-side projection 110p is accommodated in the attachment recess 2r of the attachment object 2, the sensor-side projection 110p is pressed toward the inside of the attachment recess 2r by the inner peripheral surface 2f of the attachment recess 2r. Moreover, as illustrated in FIG. 42, the sensor-side projection 110p is provided on the fixed body 110 as a pair of projections facing each other with an interval when viewed from the negative direction on the Z-axis (downward direction in FIG. 41). The other configuration of the force sensor 101c is the same as that of the force sensor 1c according to the first embodiment, and thus, a detailed description thereof will be omitted here.

The force sensor 101c is fixed to the attachment object 2 by a bolt 3 as a fixture. That is, the same number of bolts 3 as the through holes 110a are prepared, and these bolts 3 are inserted into the individual through holes 110a from the side opposite to the side where the attachment object 2 is present. Subsequently, each of the bolts 3 is screwed into the corresponding attachment hole 2a. In this process of screwing, the sensor-side projection 110p abuts the inner peripheral surface 2f of the attachment recess 2r. By further tightening the bolts 3 from this state, the sensor-side projection 110p is pressed by the inner peripheral surface 2f of the attachment recess 2r toward the inside of the attachment recess 2r, that is, toward the side on which the pair of projections forming the sensor-side projection 110p comes close to each other. With this pressing, the sensor-side projection 110p is elastically deformed (flexurally deformed) toward the inside of the attachment recess 2r. This elastic deformation of the sensor-side projection 110p is smoothly implemented by the relationship between the angle θ2 related to the inner peripheral surface 2f of the attachment recess 2r and the angle θ1 related to the outer peripheral surface 110f of the sensor-side projection 110p.

By further tightening the bolts 3, the sensor-side projection 110p further elastically deforms toward the inside of the inner peripheral surface 2f of the attachment recess 2r, so as to gradually reduce a gap between the force sensor 101c and the attachment object 2 to eventually reach zero. This completes attachment of the force sensor 101c to the attachment object 2. At this time, the outer peripheral surface 110f of the sensor-side projection 110p has substantially a same level of inclination as the inner peripheral surface 2f of the attachment recess 2r. As a result, due to a restoring force of the sensor-side projection 110p, a large force is applied between the sensor-side projection 110p and the attachment recess 2r.

By combining the force sensor 101c and the attachment object 2 to be configured as the above-described combination body 1000, the force sensor 101c can be firmly fixed without unsteadiness to the attachment object 2, and the problem of hysteresis is effectively eliminated or reduced. It is preferable, of course, that the above-described attachment mode is adopted also at a connecting site between a force receiving body (not illustrated) and an end effector.

Contrary to the above example, a sensor-side recess may be provided on the force sensor side and an attachment projection to be accommodated in the sensor-side recess may be provided on the attachment object side. In this case, a structure corresponding to the above-described sensor-side projection 110p may be adopted for the attachment projection and a structure corresponding to the above-described attachment recess 2r may be adopted for the sensor-side recess. In this case, like the above-described example, the force sensor can be firmly fixed without unsteadiness to the attachment object.

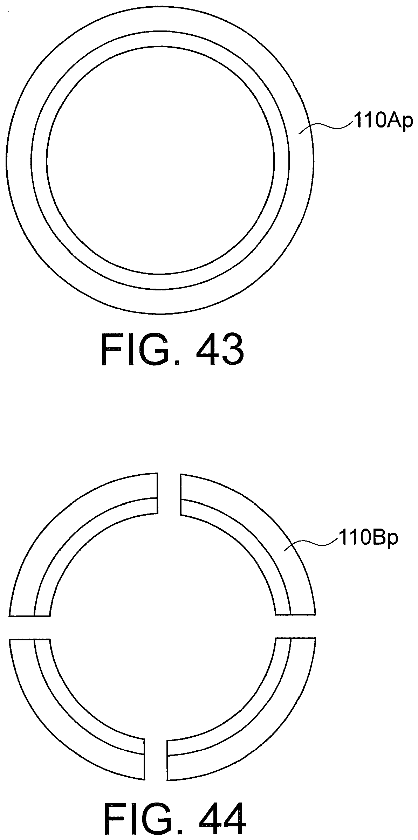

Moreover, the above description is an exemplary case where the sensor-side projection 110p is a pair of projections facing each other. The sensor-side protrusion 110p, however, is not limited to this example. For example, the attachment projections illustrated in FIGS. 43 and 44 can also be adopted. FIGS. 43 and 44 are schematic bottom views illustrating another example of the attachment projection of the force sensor. FIG. 43 illustrates a protrusion 110Ap continuously provided along an annular path, and FIG. 44 illustrates a protrusion 110Bp intermittently provided along an annular path. Even with the force sensor adopting these protrusions 110Ap and 110Bp, the force sensor can be firmly fixed without unsteadiness to the attachment object 2, similarly to the above-described example. In a case where the annular attachment projection illustrated in FIG. 43 or 44 is adopted, the attachment recess to be formed in the attachment object also has an annular shape, accordingly.

Furthermore, the attachment projections may be formed continuously or intermittently along various closed loop shaped paths having shapes such as a rectangle, a triangle, and a polygon.

<7-2. Second Example>

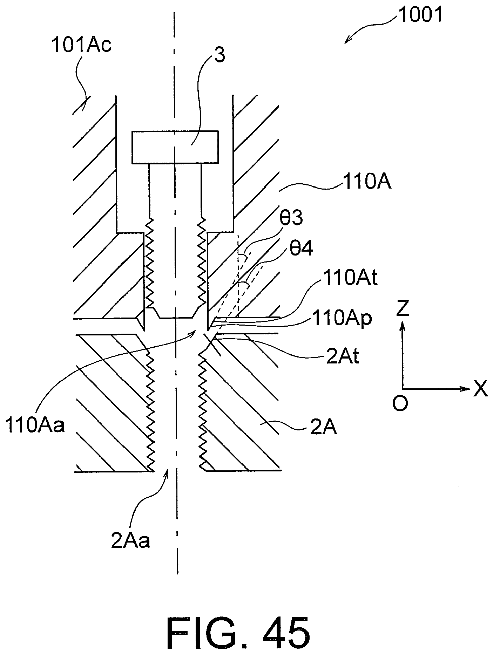

Next, another example for eliminating or reducing the hysteresis problem will be described with reference to FIG. 45.

FIG. 45 is a schematic cross-sectional view illustrating another combination body 1001 obtained by a force sensor 101Ac according to the modification of FIG. 1 and an attachment object 2A to which the force sensor is attached. As illustrated in FIG. 45, the force sensor 101Ac constituting the combination body 1001 has a configuration in which the protrusion 110Ap protruding toward the attachment object 2A is provided on an attachment object 2A-side (Z-axis negative side) edge of a through hole 110Aa of the fixed body 110A. The protrusion 110Ap may be provided continuously along the edge of the through hole 110Aa, or may be provided intermittently along the edge. The outer peripheral surface of the protrusion 110Ap includes a sensor-side tapered surface 110At tapered toward the attachment object 2A.

Furthermore, the attachment object 2A constituting the combination body 1001 is chamfered at a force sensor 101Ac-side edge of the attachment hole 2Aa, so as to be formed into a cone-shaped attachment-side tapered surface 2At. An acute angle θ3 formed by the above-described sensor-side tapered surface 110At with respect to an attachment direction (Z-axis direction) when the force sensor 101Ac is attached to the attachment object 2A is smaller than an acute angle θ4 formed by the attachment-side tapered surface 2At with respect to the attachment direction. While the sensor-side tapered surface 110At need not be constant over the entire circumference of the edge of the through hole 110Aa, the acute angle formed with respect to the attachment direction is constantly formed to be smaller than the acute angle formed by the corresponding attachment-side tapered surface 2At with respect to the attachment direction. The other configuration of the combination body 1001 is the same as the case of the combination body 1000 illustrated in FIG. 41, and thus a detailed description thereof will be omitted here. Note that in the present embodiment, there is no need to provide the sensor-side projection 110p or the attachment recess 2r described above.

This force sensor 101Ac is fixed to the attachment object 2A by a bolt 3 as a fixture. Specifically, the bolts 3 of the same number as the through holes 110Aa are prepared, and these bolts 3 are inserted into the through holes 110Aa from the side opposite to the side where the attachment object 2A is present. Subsequently, each of the bolts 3 is screwed into the corresponding attachment hole 2Aa. In the process of screwing, the sensor-side tapered surface 110At comes in contact with the attachment-side tapered surface 2At. By further tightening the bolts 3 from this state, the protrusion 110Ap presses the edge of the attachment hole 2Aa, that is, the attachment-side tapered surface 2At. In other words, the protrusion 110Ap is pressed toward the inside of the attachment hole 2Aa by the attachment-side tapered surface 2At. With this pressing, the protrusion 110Ap is elastically deformed (flexurally deformed) toward the inside of the attachment hole 2Aa. This elastic deformation of the protrusion 110Ap is smoothly implemented by the magnitude relation between the acute angle $\theta3$ with respect to the sensor-side tapered surface 110At and the acute angle $\theta4$ with respect to the attachment-side tapered surface 2At.

By further tightening the bolts 3, the protrusion 110Ap further elastically deforms toward the inside of the attachment hole 2Aa, so as to gradually reduce a gap between the force sensor 101Ac and the attachment object 2A to eventually reach zero. This completes attachment of the force sensor 101Ac to the attachment object 2A. At this time, the sensor-side tapered surface 110At of the protrusion 110Ap has substantially the same level of inclination as the attachment-side tapered surface 2At. As a result, due to a restoring force of the protrusion 110Ap, a large force is applied between the sensor-side tapered surface 110At and the attachment-side tapered surface 2At.

By combining the force sensor 101Ac and the attachment object 2A to be configured as the above-described combination body 1001, the force sensor 101Ac can be firmly fixed without unsteadiness to the attachment object 2A, and the problem of hysteresis is effectively eliminated or reduced. It is preferable, of course, that the above-described attachment mode is adopted also at a connecting site between a force receiving body (not illustrated) and an end effector.

<<< §8. Method of manufacturing deformable body >>>

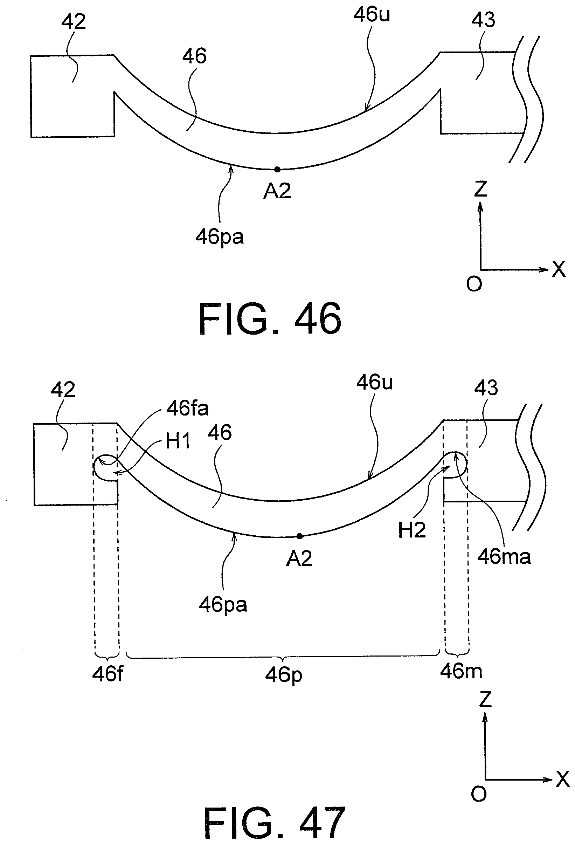

Next, an example of a method of manufacturing a deformable body will be described with reference to FIGS. 46 and 47. FIG. 46 and 47 are diagrams for illustrating a method of manufacturing the deformable body 40 illustrated in FIG. 1. FIG. 46 is a schematic side view illustrating the second deformable portion 46 before the force receiving portion-side curved portion 46m and the fixed portion-side curved portion 46f are formed. FIG. 47 is a schematic side view illustrating the second deformable portion 46 after the force receiving portion-side curved portion 46m and the fixed portion-side curved portion 46f are formed.

First, as illustrated in FIG. 46, prepared is the second deformable portion 46 in a state where the force receiving portion-side curved portion 46m and the fixed portion-side curved portion 46f are not formed. The second deformable portion 46 is curved toward the negative side of the Z-axis, and a main curved surface 46pa is provided on the Z-axis negative-side surface. Each of the connecting portion between the main curved surface 46pa and the fixed portion 42 and the connecting portion between the main curved surface 46pa and the force receiving portion 43 forms an acute angle.

Next, as illustrated in FIG. 47, through holes H1 and H2 extending in a direction orthogonal to the Z-axis (radial direction of the deformable body, the depth direction in FIG. 47) at the connecting portion between the second deformable portion 46 and the force receiving portion 43 and at the connecting portion between the second deformable portion 46 and the fixed portion 42, respectively. When viewed from the radial direction, these through holes H1 and H2 are formed such that the arc on the positive side on the Z-axis is smoothly connected with the main curved surface 46pa of the main curved portion 46p (fixed portion-side linear portions 545Afs to 548Afs and the force receiving portion-side linear portions 545Ams to 548Ams in the case of manufacturing the deformable body 540A illustrated in FIG. 39). As a result, as illustrated in FIG. 47, the Z-axis positive-side curved surface of the through hole H1 formed in the connecting portion between the second deformable portion 46 and the fixed portion 42 constitutes the fixed portion-side curved surface 46fa, while the Z-axis positive-side curved surface of the through hole H2 formed in the connecting portion between the second deformable portion 46 and the force receiving portion 43 constitutes the force receiving portion-side curved surface 46ma. Accordingly, as illustrated in FIG. 47, the Z-axis positive-side portion of the through hole H1 becomes the fixed portion-side curved portion 46f, and the Z-axis positive-side portion of the through hole H2 becomes the force receiving portion-side curved portion 46m.

While the above description is the method of forming the second deformable portion 46, by forming the first, third, and fourth deformable portions 45, 47, and 48 in a similar manner, it is possible to easily manufacture the deformable body 40. Furthermore, this manufacturing method can be adopted in the above-described deformable body of each of the force sensors. In this case, the manufacturing method can be appropriately modified in accordance with the shape of each of the deformable bodies. For example, the deformable body having the main curved surface, the fixed portion-side curved surface, and the force receiving portion-side curved surface, curved in radially inner or radially outer direction of the deformable body described in §6 has a configuration in which the above-described through holes H1 and H2 are formed in a direction parallel to the Z-axis. Furthermore, the deformable body in which the main curved surface, the fixed portion-side curved surface, and the force receiving portion-side curved surface are provided on the positive side on the Z-axis, that is, the deformable body in which the main curved surface is curved toward the positive side on the Z-axis and the fixed portion-side curved surface and the force receiving portion-side curved surface are curved toward the negative side on the Z-axis has a configuration of the above-described through holes H1 and H2, in which the Z-axis negative-side curved surface of the through hole H1 formed in the connecting portion between the second deformable portion 46 and the fixed portion 42 constitutes the fixed portion-side curved surface 46fa, and the Z-axis negative-side curved surface of the through hole H2 formed in the connecting portion between the second deformable portion 46 and the force receiving portion 43 constitutes the force receiving portion-side curved surface 46ma. Accordingly, the Z-axis negative-side portion of the through hole H1 becomes the fixed portion-side curved portion 46f, and the Z-axis negative-side portion of the through hole H2 becomes the force receiving portion-side curved portion 46m.

## Claims

1. A force sensor configured to detect at least one of a force in each axial direction and a moment around each axis in an XYZ three-dimensional coordinate system, the force sensor comprising:

   a closed loop shaped deformable body configured to generate elastic deformation by action of the force and the moment; and
   a detection circuit configured to output an electric signal indicating the applied force and the moment on the basis of the elastic deformation generated in the deformable body,
   wherein the deformable body includes: at least two fixed portions fixed with respect to the XYZ three-dimensional coordinate system; at least two force receiving portions positioned adjacent to the fixed portions in a closed loop shaped path of the deformable body and configured to receive action of the force and the moment; and a deformable portion positioned between the fixed portion and the force receiving portion adjacent to each other in the closed loop shaped path,
   the deformable portion includes:

   a main curved portion including a main curved surface curved in the Z-axis direction;
   a fixed portion-side curved portion connecting the main curved portion with the corresponding fixed portion and including a fixed portion-side curved surface curved in the Z-axis direction; and
   a force receiving portion-side curved portion connecting the main curved portion with the corresponding force receiving portion and including a force receiving portion-side curved surface curved in the Z-axis direction,
   the main curved surface and each of the fixed portion-side curved surface and the force receiving portion-side curved surface are provided on one of the positive side on the Z-axis and the negative side on the Z-axis of the deformable portion, the curved surfaces having mutually different curved directions, and
   the detection circuit outputs the electric signal on the basis of the elastic deformation generated in the main curved portion.

2. The force sensor according to claim 1,
   wherein the main curved surface, and the fixed portion-side curved surface and the force receiving portion-side curved surface are provided on the negative side on the Z-axis of the deformable portion,
   the main curved surface is curved toward the negative side on the Z-axis, and
   the fixed portion-side curved surface and the force receiving portion-side curved surface are curved toward the positive side on the Z-axis.

3. A force sensor configured to detect at least one of a force in each axial direction and a moment around each axis in an XYZ three-dimensional coordinate system, the force sensor comprising:

   a closed loop shaped deformable body configured to generate elastic deformation by action of the force and the moment; and
   a detection circuit configured to output an electric signal indicating the applied force and the moment on the basis of the elastic deformation generated in the deformable body,
wherein the deformable body includes: at least two fixed portions fixed with respect to the XYZ three-dimensional coordinate system; at least two force receiving portions positioned adjacent to the fixed portions in a closed loop shaped path of the deformable body and configured to receive action of the force and the moment; and a deformable portion positioned between the fixed portion and the force receiving portion adjacent to each other in the closed loop shaped path,
the deformable portion includes:

a main curved portion including a main curved surface curved toward the inside or outside of the closed loop shaped path;
a fixed portion-side curved portion connecting the main curved portion with the corresponding fixed portion and including a fixed portion-side curved surface curved toward the inside or outside of the closed loop shaped path; and
a force receiving portion-side curved portion connecting the main curved portion with the corresponding force receiving portion and including a force receiving portion-side curved surface curved toward the inside or outside of the closed loop shaped path,
the main curved surface and each of the fixed portion-side curved surface and the force receiving portion-side curved surface are provided on one of an inner peripheral surface and an outer peripheral surface of the deformable body, the curved surfaces having mutually different curved directions, and
the detection circuit outputs the electric signal on the basis of the elastic deformation generated in the main curved portion.

4. The force sensor according to any one of claims 1 to 3, further comprising:

a fixed body fixed with respect to the XYZ three-dimensional coordinate system; and
a force receiving body configured to move relative to the fixed body by the action of the force and the moment,
wherein the fixed body is connected to each of the fixed portions via a fixed body-side connecting member, and
the force receiving body is connected to each of the force receiving portions via a force receiving body-side connecting member.

5. The force sensor according to any one of claims 1 to 3, further comprising:

a fixed body fixed with respect to the XYZ three-dimensional coordinate system; and
a force receiving body configured to move relative to the fixed body by the action of the force and the moment,
wherein the fixed body is integrally formed with each of the fixed portions, and
the force receiving body is integrally formed with each of the force receiving portions.

6. The force sensor according to claim 4 or 5,
wherein the deformable body is arranged so as to surround an origin when viewed in the Z-axis direction, and
a through hole through which the Z-axis is inserted is formed in each of the fixed body and the force receiving body.

7. The force sensor according to any one of claims 1 to 6, wherein the deformable body has one of a circular shape and a rectangular shape about an origin as a center, when viewed in the Z-axis direction.

8. A force sensor configured to detect at least one of a force in each axial direction and a moment around each axis in an XYZ three-dimensional coordinate system, the force sensor comprising:

a fixed body fixed with respect to the XYZ three-dimensional coordinate system;
a closed loop shaped deformable body surrounding the Z-axis and configured to be connected to the fixed body to generate elastic deformation by action of the force and the moment;
a force receiving body connected to the deformable body and configured to move relative to the fixed body by the action of the force and the moment; and
a detection circuit configured to output an electric signal indicating the force and the moment applied to the force receiving body on the basis of the elastic deformation generated in the deformable body,
wherein the deformable body includes: at least two fixed portions connected to the fixed body; at least two force receiving portions connected to the force receiving body and positioned adjacent to the fixed portions in a circumferential direction of the deformable body; and a deformable portion positioned between the fixed portion and the force receiving portion adjacent to each other,

the deformable portion includes:

a main curved portion including a main curved surface curved in the Z-axis direction;
a fixed portion-side curved portion connecting the main curved portion with the corresponding fixed portion and including a fixed portion-side curved surface curved in the Z-axis direction; and
a force receiving portion-side curved portion connecting the main curved portion with the corresponding force receiving portion and including a force receiving portion-side curved surface curved in the Z-axis direction,

the main curved surface and each of the fixed portion-side curved surface and the force receiving portion-side curved surface are provided on one of the positive side on the Z-axis and the negative side on the Z-axis of the deformable portion, the curved surfaces having mutually different curved directions,
the detection circuit outputs the electric signal on the basis of the elastic deformation generated in the main curved portion,
the force receiving body includes a force receiving body surface facing one of the positive direction on the Z-axis and the negative direction on the Z-axis,
the fixed body includes a fixed body surface facing one of the positive direction on the Z-axis and the negative direction on the Z-axis, and
a distance from the deformable body to the force receiving body surface differs from a distance from the deformable body to the fixed body surface.

9. A force sensor configured to detect at least one of a force in each axial direction and a moment around each axis in an XYZ three-dimensional coordinate system, the force sensor comprising:

a fixed body fixed with respect to the XYZ three-dimensional coordinate system;
a closed loop shaped deformable body surrounding the Z-axis and configured to be connected to the fixed body to generate elastic deformation by action of the force and the moment;
a force receiving body connected to the deformable body and configured to move relative to the fixed body by the action of the force and the moment; and
a detection circuit configured to output an electric signal indicating the force and the moment applied to the force receiving body on the basis of the elastic deformation generated in the deformable body,
wherein the deformable body includes: at least two fixed portions connected to the fixed body; at least two force receiving portions connected to the force receiving body and positioned adjacent to the fixed portions in a circumferential direction of the deformable body; and a deformable portion positioned between the fixed portion and the force receiving portion adjacent to each other,
the deformable portion includes:

a main curved portion including a main curved surface curved toward the inside or outside of the closed loop shaped path;
a fixed portion-side curved portion connecting the main curved portion with the corresponding fixed portion and including a fixed portion-side curved surface curved toward the inside or outside of the closed loop shaped path; and
a force receiving portion-side curved portion connecting the main curved portion with the corresponding force receiving portion and including a force receiving portion-side curved surface curved toward the inside or outside of the closed loop shaped path,

the main curved surface and each of the fixed portion-side curved surface and the force receiving portion-side curved surface are provided on the inner peripheral surface or the outer peripheral surface of the deformable body, the curved surfaces having mutually different curved directions,
the detection circuit outputs the electric signal on the basis of the elastic deformation generated in the main curved portion,
the force receiving body includes a force receiving body surface facing one of the positive direction on the Z-axis and the negative direction on the Z-axis,
the fixed body includes a fixed body surface facing one of the positive direction on the Z-axis and the negative direction on the Z-axis, and
a distance from the deformable body to the force receiving body surface differs from a distance from the deformable body to the fixed body surface.

10. The force sensor according to claim 8 or 9,
wherein the force receiving body surface and the fixed body surface are parallel to the XY plane, and

a Z-coordinate value of the force receiving body surface differs from a Z-coordinate value of the fixed body surface.

11. The force sensor according to any one of claims 8 to 10,
wherein the deformable body surrounds one of the fixed body and the force receiving body, and
the other of the fixed body and the force receiving body surrounds the deformable body.

12. The force sensor according to any one of claims 8 to 11, wherein each of the fixed body, the force receiving body, and the deformable body has one of a circular shape and a rectangular shape about an origin as a center, when viewed in the Z-axis direction.

13. The force sensor according to any one of claims 8 to 12,
wherein the at least two fixed portions are integrally formed with the fixed body, and
the at least two force receiving portions are integrally formed with the force receiving body.

14. The force sensor according to any one of claims 1 to 13,
wherein the at least two force receiving portions and the at least two fixed portions are each provided in the number of n (n is a natural number of 2 or more), being alternately positioned along the closed loop shaped path of the deformable body, and
the deformable portions are provided in the number of 2n (n is a natural number of 2 or more) and each of the deformable portions are arranged between the force receiving portion and the fixed portion adjacent to each other.

15. The force sensor according to any one of claims 1 to 14, wherein the detection circuit includes a displacement sensor arranged in the main curved portion and outputs an electric signal indicating the applied force and the moment on the basis of a measurement value of the displacement sensor.

16. The force sensor according to claims 15,
wherein the displacement sensor includes a capacitive element having a displacement electrode arranged in the main curved portion and a fixed electrode arranged to face the displacement electrode and connected to the at least two fixed portions, and
the detection circuit outputs an electric signal indicating the applied force and the moment on the basis of a variation amount of an electrostatic capacitance value of the capacitive element.

17. The force sensor according to claim 15,
wherein the at least two force receiving portions and the at least two fixed portions are provided in the number of two for each,
each of the fixed portions is arranged symmetrically with each other about the Y-axis at a site where the deformable body overlaps with the X-axis when viewed in the Z-axis direction,
each of the force receiving portions is arranged symmetrically about the X-axis at a site where the deformable body overlaps with the Y-axis when viewed in the Z-axis direction,
four deformable portions are provided, each being arranged between the force receiving portion and the fixed portion adjacent to each other,
the displacement sensor includes four capacitive elements having four displacement electrodes each arranged at each of the main curved portions of each of the deformable portions and having four fixed electrodes each arranged to face each of the displacement electrodes and connected to each of the corresponding fixed portions,
each of the four capacitive elements is arranged at each of four sites at which the deformable body intersects the V-axis and the W-axis when viewed in the Z-axis direction, and
the detection circuit outputs an electric signal indicating the applied force and the moment on the basis of the variation amount of the electrostatic capacitance value of the four capacitive elements.

18. The force sensor according to claim 16 or 17,
wherein a deformable body-side support is connected to each of the main curved portions of the deformable body, and
the displacement electrodes is supported by the corresponding deformable body-side support.

19. A force sensor configured to detect at least one of a force in each axial direction and a moment around each axis in an XYZ three-dimensional coordinate system, the force sensor comprising:

a closed loop shaped deformable body configured to generate elastic deformation by the action of the force and the moment; and

a detection circuit configured to output an electric signal indicating the applied force and the moment on the basis of the elastic deformation generated in the deformable body,

wherein the deformable body includes: four fixed portions fixed with respect to the XYZ three-dimensional coordinate system; four force receiving portions positioned adjacent to the fixed portions in a closed loop shaped path of the deformable body and configured to receive action of the force and the moment; and a deformable portion positioned between each of the fixed portions and each of the force receiving portions adjacent to each other in the closed loop shaped path,

the deformable portion includes:

a main curved portion including a main curved surface curved in the Z-axis direction;

a fixed portion-side curved portion connecting the main curved portion with the corresponding fixed portion and including a fixed portion-side curved surface curved in the Z-axis direction; and

a force receiving portion-side curved portion connecting the main curved portion with the corresponding force receiving portion and including a force receiving portion-side curved surface curved in the Z-axis direction,

the main curved surface and each of the fixed portion-side curved surface and the force receiving portion-side curved surface are provided on one of the positive side on the Z-axis and the negative side on the Z-axis of each of the deformable portions, the curved surfaces having mutually different curved directions, and

the detection circuit outputs the electric signal on the basis of the elastic deformation generated in the main curved portion.

**20.** A force sensor configured to detect at least one of a force in each axial direction and a moment around each axis in an XYZ three-dimensional coordinate system, the force sensor comprising:

a closed loop shaped deformable body configured to generate elastic deformation by action of the force and the moment; and

a detection circuit configured to output an electric signal indicating the applied force and the moment on the basis of the elastic deformation generated in the deformable body,

wherein the deformable body includes: four fixed portions fixed with respect to the XYZ three-dimensional coordinate system; four force receiving portions positioned adjacent to the fixed portions in a closed loop shaped path of the deformable body and configured to receive action of the force and the moment; and a deformable portion positioned between the fixed portion and the force receiving portion adjacent to each other in the closed loop shaped path,

the deformable portion includes:

a main curved portion including a main curved surface curved toward the inside or outside of the closed loop shaped path;

a fixed portion-side curved portion connecting the main curved portion with the corresponding fixed portion and including a fixed portion-side curved surface curved toward the inside or outside of the closed loop shaped path; and

a force receiving portion-side curved portion connecting the main curved portion with the corresponding force receiving portion and including a force receiving portion-side curved surface curved toward the inside or outside of the closed loop shaped path,

the main curved surface and each of the fixed portion-side curved surface and the force receiving portion-side curved surface are provided on one of an inner peripheral surface and an outer peripheral surface of the deformable body, the curved surfaces having mutually different curved directions, and

the detection circuit outputs the electric signal on the basis of the elastic deformation generated in the main curved portion.

**21.** The force sensor according to claim 19 or 20,

wherein the four force receiving portions and the four fixed portions are alternately positioned along the closed loop shaped path of the deformable body, and

the deformable portions are provided in the number of eight, each being arranged between the force receiving portion and the fixed portion adjacent to each other.

**22.** The force sensor according to any one of claims 19 to 21, further comprising:

a fixed body fixed with respect to the XYZ three-dimensional coordinate system; and

a force receiving body configured to move relative to the fixed body by the action of the force and the moment, wherein each of the four fixed bodies is connected to each of the fixed portions via a fixed body-side connecting member, and

each of the four force receiving portions is connected to each of the force receiving bodies via a force receiving body-side connecting member.

23. The force sensor according to any one of claims 19 to 21, further comprising:

a fixed body fixed with respect to the XYZ three-dimensional coordinate system; and
a force receiving body configured to move relative to the fixed body by the action of the force and the moment, wherein the four fixed portions are integrally formed with the fixed body, and
the four force receiving portions are integrally formed with the force receiving body.

24. The force sensor according to any one of claims 19 to 23, wherein the closed loop shaped deformable body has one of a circular shape or a rectangular shape.

25. The force sensor according to any one of claims 19 to 24, wherein the detection circuit includes a displacement sensor arranged in the main curved portion and outputs an electric signal indicating the applied force and the moment on the basis of a measurement value of the displacement sensor.

26. The force sensor according to claim 25,
wherein the displacement sensor includes a capacitive element having a displacement electrode arranged in the main curved portion and a fixed electrode arranged to face the displacement electrode and connected to at least one of the four fixed portions, and
the detection circuit outputs an electric signal indicating the applied force and the moment on the basis of a variation amount of an electrostatic capacitance value of the capacitive element.

27. The force sensor according to claim 25,
wherein two of the four force receiving portions are arranged symmetrically about an origin on the X-axis when viewed in the Z-axis direction,
the remaining two of the four force receiving portions are arranged symmetrically about the origin on the Y-axis when viewed in the Z-axis direction, and
in a case where the V-axis and W-axis passing through the origin and forming an angle of 45° with respect to the X-axis and the Y-axis are defined on the XY plane,
two of the four fixed portions are arranged symmetrically about the origin on the V-axis when viewed in the Z-axis direction, and
the remaining two of the four fixed portions are arranged symmetrically about the origin on the W-axis when viewed in the Z-axis direction,
the deformable portions are provided in the number of eight, each being arranged between the force receiving portion and the fixed portion adjacent to each other,
the displacement sensor includes eight capacitive elements having eight displacement electrodes each arranged at each of the main curved portions of each of the deformable portions and having eight fixed electrodes each arranged to face each of the displacement electrodes and connected to each of the corresponding fixed portions, and
the detection circuit outputs an electric signal indicating the applied force and the moment on the basis of the variation amount of the electrostatic capacitance value of the eight capacitive elements.

28. The force sensor according to any one of claims 1 to 27, wherein the main curved surface of the main curved portion is formed with a smooth curved surface having no inflection point when observed along the closed loop shaped path.

29. The force sensor according to any one of claims 1 to 27, wherein the main curved surface of the main curved portion is formed with a curved surface along an arc when observed along the closed loop shaped path.

30. The force sensor according to any one of claims 1 to 27, wherein the main curved surface of the main curved portion is formed with a curved surface along an arc of an ellipse when observed along the closed loop shaped path.

31. The force sensor according to any one of claims 1 to 30, wherein the main curved portion include a non-curved linear section in at least one end region when observed along the closed loop shaped path.

32. A force sensor configured to detect at least one of a force in each axial direction and a moment around each axis in an XYZ three-dimensional coordinate system, the force sensor comprising:

a fixed body surrounding the Z-axis and fixed with respect to the XYZ three-dimensional coordinate system,
a closed loop shaped deformable body surrounding the Z-axis and connected to the fixed body, and configured to generate elastic deformation by action of the force and the moment,
a force receiving body surrounding the Z-axis and connected to the deformable body, and configured to move relative to the fixed body by the action of the force and the moment, and
a detection circuit configured to output an electric signal indicating the force and the moment applied to the force receiving body on the basis of elastic deformation generated in the deformable body,
wherein the deformable body includes: at least two fixed portions connected to the fixed body; at least two force receiving portions connected to the force receiving body and positioned adjacent to the fixed portion in a circumferential direction of the deformable body; and a deformable portion positioned between the fixed portion and the force receiving portion adjacent to each other,
the deformable portion includes a curved portion curved in a predetermined direction,
the detection circuit outputs the electric signal on the basis of elastic deformation generated in the curved portion,
the force receiving body includes a force receiving body surface facing one of the positive direction on the Z-axis and the negative direction on the Z-axis, and
the deformable body includes a deformable body surface facing the same direction as the force receiving body surface, with the Z-coordinate of the deformable body surface being different from the Z-coordinate of the force receiving body surface.

33. The force sensor according to claim 32, wherein the fixed body includes a fixed body surface facing the same direction as the force receiving body surface, and the Z-coordinate of the fixed body surface differs from the Z-coordinate of the deformable body surface and from the Z-coordinate of the force receiving body surface.

34. A force sensor configured to detect at least one of a force in each axial direction and a moment around each axis in an XYZ three-dimensional coordinate system, the force sensor comprising:

a fixed body surrounding the Z-axis and fixed with respect to the XYZ three-dimensional coordinate system;
a closed loop shaped deformable body surrounding the Z-axis and connected to the fixed body, and configured to generate elastic deformation by action of the force and the moment;
a force receiving body surrounding the Z-axis and connected to the deformable body, and configured to move relative to the fixed body by the action of the force and the moment; and
a detection circuit configured to output an electric signal indicating the force and the moment applied to the force receiving body on the basis of elastic deformation generated in the deformable body,
wherein the deformable body includes: at least two fixed portions connected to the fixed body; at least two force receiving portions connected to the force receiving body and positioned adjacent to the fixed portion in a circumferential direction of the deformable body; and a deformable portion positioned between the fixed portion and the force receiving portion adjacent to each other,
the deformable portion includes a curved portion curved in a predetermined direction,
the detection circuit outputs the electric signal on the basis of elastic deformation generated in the curved portion,
the fixed body includes a fixed body surface facing one of the positive direction on the Z-axis and the negative direction on the Z-axis, and
the deformable body includes a deformable body surface facing the same direction as the fixed body surface, with the Z-coordinate of the deformable body surface being different from the Z-coordinate of the fixed body surface.

35. The force sensor according to any one of claims 32 to 34, wherein each of the fixed body, the force receiving body, and the deformable body has one of a circular shape and a rectangular shape about an origin as a center, when viewed in the Z-axis direction.

36. The force sensor according to any one of claims 4 to 6, 8 to 13, 22 and 23, wherein the force receiving body and the fixed body are arranged so as to sandwich the deformable body.

37. The force sensor according to any one of claims 4 to 6, 8 to 13, 22, 23 and 32 to 35, wherein the force receiving body and the fixed body are arranged on the same side with respect to the deformable body.

**38.** The force sensor according to any one of claims 4 to 6, 8 to 13, 22, 23 and 32 to 37,
wherein one of the fixed body and the force receiving body includes a sensor-side projection in a region facing an attachment object to which the force sensor is attached,
the sensor-side projection is accommodated in an attachment recess formed in the attachment object when the force sensor is attached to the attachment object, and
the sensor-side projection is pressed toward the inside of the attachment recess by an inner peripheral surface of the attachment recess.

**39.** The force sensor according to any one of claims 4 to 6, 8 to 13, 22, 23 and 32 to 37,
wherein one of the fixed body and the force receiving body includes a sensor-side recess in a region facing an attachment object to which the force sensor is attached,
the sensor-side recess accommodates an attachment projection formed in the attachment object when the force sensor is attached to the attachment object, and
an inner peripheral surface of the sensor-side recess presses the attachment projection toward the inside of the sensor-side recess.

**40.** A force sensor to be attached to an attachment object having an attachment recess and configured to detect at least one of a force in each axial direction and a moment around each axis in an XYZ three-dimensional coordinate system, the force sensor comprising:

a deformable body configured to generate elastic deformation by action of the force and the moment;
a fixed body connected to the deformable body and fixed with respect to XYZ three-dimensional coordinates; and
a force receiving body connected to the deformable body and configured to move relative to the fixed body by the action of the force and the moment,
wherein one of the fixed body and the force receiving body includes a sensor-side projection to be accommodated in the attachment recess, in a region facing the attachment object, and
the sensor-side projection is pressed toward the inside of the attachment recess by an inner peripheral surface of the attachment recess when the sensor-side projection is accommodated in the attachment recess.

**41.** The force sensor according to claim 40, wherein an acute angle formed by an outer peripheral surface of the sensor-side projection with respect to an attachment direction when the force sensor is attached to the attachment object is smaller than an acute angle formed by the inner peripheral surface of the attachment recess with respect to the attachment direction.

**42.** The force sensor according to claim 40 or 41, wherein the sensor-side projection is provided to face each other with an interval when viewed in an attachment direction when the force sensor is attached to the attachment object, or is provided continuously or intermittently along a closed loop shaped path.

**43.** A force sensor to be attached to an attachment object having an attachment projection and configured to detect at least one of a force in each axial direction and a moment around each axis in the XYZ three-dimensional coordinate system, the force sensor comprising:

a deformable body configured to generate elastic deformation by action of the force and the moment;
a fixed body connected to the deformable body and fixed with respect to XYZ three-dimensional coordinates; and
a force receiving body connected to the deformable body and configured to move relative to the fixed body by the action of the force and the moment,
wherein one of the fixed body and the force receiving body includes a sensor-side recess to be accommodated in the attachment projection, in a region facing the attachment object, and
an inner peripheral surface of the sensor-side recess presses the attachment projection toward the inside of the sensor-side recess when the sensor-side recess accommodates the attachment projection.

**44.** The force sensor according to claim 43, wherein an acute angle formed by an inner peripheral surface of the sensor-side recess with respect to an attachment direction when the force sensor is attached to the attachment object is greater than an acute angle formed by the outer peripheral surface of the attachment projection with respect to the attachment direction.

**45.** The force sensor according to claim 43 or 44, wherein the attachment projection is provided to face each other with an interval when viewed in an attachment direction when the force sensor is attached to the attachment object, or is provided continuously or intermittently along a closed loop shaped path.

46. A combination body comprising: the force sensor according to any one of claims 38 to 45; and the attachment object to which the force sensor is attached.

47. A force sensor to be attached to an attachment object having an attachment hole and configured to detect at least one of a force in each axial direction and a moment around each axis in an XYZ three-dimensional coordinate system, the force sensor comprising:

a deformable body configured to generate elastic deformation by action of the force and the moment;
a fixed body connected to the deformable body and fixed with respect to XYZ three-dimensional coordinates; and
a force receiving body connected to the deformable body and configured to move relative to the fixed body by the action of the force and the moment,
wherein one of the fixed body and the force receiving body includes a through hole through which a fixture for attaching the force sensor to the attachment object passes,
an attachment object-side edge of the through hole includes a protrusion protruding toward the attachment object, and
the protrusion presses an edge of the attachment hole when the force sensor is attached to the attachment object.

48. The force sensor according to claim 47,
wherein a cone-shaped attachment-side tapered surface is formed at the edge of the attachment hole,
a sensor-side tapered surface tapered toward the attachment object is formed on an outer peripheral surface of the protrusion,
the sensor-side tapered surface presses the attachment-side tapered surface when the force sensor is attached to the attachment object, and
an acute angle formed by the sensor-side tapered surface with respect to an attachment direction when the force sensor is attached to the attachment object is smaller than an acute angle formed by the attachment-side tapered surface with respect to the attachment direction.

49. A combination body comprising:

the force sensor according to claim 47 or 48; and
the attachment object to which the force sensor is attached.

FIG. 1

FIG. 2

FIG. 3

# FIG. 4

FIG. 5

FIG. 6A

FIG. 6B

FIG. 7

FIG. 8A

FIG. 8B

FIG. 9

FIG. 10A

FIG. 10B

FIG. 11

FIG. 12A

FIG. 12B

# FIG. 13

# FIG. 14

|     | C1 | C2 | C3 | C4 |
| --- | --- | --- | --- | --- |
| Mx | − | − | + | + |
| My | + | − | − | + |
| Mz | − | + | − | + |
| Fz | − | − | − | − |

# FIG. 15

FIG. 16

FIG. 17

FIG. 18

640

642  646(646c)  645(645c)  641

A2  643  A1

FIG. 19A

640

641  648(648c)  647(647c)  642

A4  644  A3

FIG. 19B

FIG. 20

FIG. 21A

FIG. 21B

FIG. 21C

FIG. 21D

FIG. 22

+Fx

FIG. 23

EP 3 550 276 A1

FIG. 24

FIG. 25

+Mz

FIG. 26

| FORCE/MOMENT | A1 | A2 | A3 | A4 | A5 | A6 | A7 | A8 |
|---|---|---|---|---|---|---|---|---|
| +Fx | 0 | + | − | 0 | 0 | − | + | 0 |
| +Fy | − | 0 | 0 | − | + | 0 | 0 | + |
| +Fz | + | + | + | + | + | + | + | + |
| +Mx | + | ++ | ++ | + | − | −− | −− | − |
| +My | ++ | + | − | −− | −− | − | + | ++ |
| +Mz | + | − | + | − | + | − | + | − |

# FIG. 27

FIG. 28

FIG. 29

| FORCE/ MOMENT | C1 | C2 | C3 | C4 | C5 | C6 | C7 | C8 |
|---|---|---|---|---|---|---|---|---|
| Fx | 0 | − | + | 0 | 0 | + | − | 0 |
| Fy | + | 0 | 0 | + | − | 0 | 0 | − |
| Fz | − | − | − | − | − | − | − | − |
| Mx | − | − − | − − | − | + | + + | + + | + |
| My | − − | − | + | + + | + + | + | − | − − |
| Mz | − | + | − | + | − | + | − | + |

# FIG. 30

| FORCE/ MOMENT | Fx | Fy | Fz | Mx | My | Mz |
|---|---|---|---|---|---|---|
| VFx | 4 | 0 | 0 | 0 | 4 | 0 |
| VFy | 0 | 4 | 0 | -4 | 0 | 0 |
| VFz | 0 | 0 | 8 | 0 | 0 | 0 |
| VMx | 0 | -4 | 0 | 8 | 0 | 0 |
| VMy | 4 | 0 | 0 | 0 | 8 | 0 |
| VMz | 0 | 0 | 0 | 0 | 0 | 8 |

# FIG. 31

FIG. 32

| FORCE/MOMENT | A1 | A2 | A3 | A4 | A5 | A6 | A7 | A8 |
|---|---|---|---|---|---|---|---|---|
| +Fx | (−) | + | − | (+) | (+) | − | + | (−) |
| +Fy | − | (+) | (+) | − | + | (−) | (−) | + |
| +Fz | + | + | + | + | + | + | + | + |
| +Mx | + | ++ | ++ | + | − | −− | −− | − |
| +My | ++ | + | − | −− | −− | − | + | ++ |
| +Mz | + | − | + | − | + | − | + | − |

# FIG. 33

FIG. 34

| FORCE/ MOMENT | C1 | C2 | C3 | C4 | C5 | C6 | C7 | C8 |
|---|---|---|---|---|---|---|---|---|
| +Fx | (+) | − | + | (−) | (−) | + | − | (+) |
| +Fy | + | (−) | (−) | + | − | (+) | (+) | − |
| +Fz | − | − | − | − | − | − | − | − |
| +Mx | − | − − | − − | − | + | + + | + + | + |
| +My | − − | − | + | + + | + + | + | − | − − |
| +Mz | − | + | − | + | − | + | − | + |

# FIG. 35

| FORCE/ MOMENT | C1 | C2 | C3 | C4 | C5 | C6 | C7 | C8 |
|---|---|---|---|---|---|---|---|---|
| Fx | -0.05 | -0.22 | 0.22 | 0.05 | 0.05 | 0.22 | -0.22 | -0.05 |
| Fy | 0.22 | 0.05 | 0.05 | 0.22 | -0.22 | -0.05 | -0.05 | -0.22 |
| Fz | -1.20 | -1.20 | -1.20 | -1.20 | -1.20 | -1.20 | -1.20 | -1.20 |
| Mx | -0.50 | -8.00 | -8.00 | -0.50 | 0.50 | 8.00 | 8.00 | 0.50 |
| My | -8.00 | -0.50 | 0.50 | 8.00 | 8.00 | 0.50 | -0.50 | -8.00 |
| Mz | -0.60 | 0.60 | -0.60 | 0.60 | -0.60 | 0.60 | -0.60 | 0.60 |

# FIG. 36

| FORCE/ MOMENT | VFx | VFy | VFz | VMx | VMy | VMz |
|---|---|---|---|---|---|---|
| Fx | 0.88 | 0.00 | 0.00 | 0.00 | 0.20 | 0.00 |
| Fy | 0.00 | 0.88 | 0.00 | -0.20 | 0.00 | 0.00 |
| Fz | 0.00 | 0.00 | 9.60 | 0.00 | 0.00 | 0.00 |
| Mx | 0.00 | -2.00 | 0.00 | 32.00 | 0.00 | 0.00 |
| My | 2.00 | 0.00 | 0.00 | 0.00 | 32.00 | 0.00 |
| Mz | 0.00 | 0.00 | 0.00 | 0.00 | 0.00 | 4.80 |

# FIG. 37

| FORCE/MOMENT | Fx | Fy | Fz | Mx | My | Mz |
|---|---|---|---|---|---|---|
| VFx | 1.153 | 0.000 | 0.000 | 0.000 | -0.007 | 0.000 |
| VFy | 0.000 | 1.153 | 0.000 | 0.007 | 0.000 | 0.000 |
| VFz | 0.000 | 0.000 | 0.104 | 0.000 | 0.000 | 0.000 |
| VMx | 0.000 | 0.072 | 0.000 | 0.032 | 0.000 | 0.000 |
| VMy | -0.072 | 0.000 | 0.000 | 0.000 | 0.032 | 0.000 |
| VMz | 0.000 | 0.000 | 0.000 | 0.000 | 0.000 | 0.208 |

# FIG. 38

FIG. 39

FIG. 40

FIG. 41

<u>110</u>

110f

110f

110p

110p

# FIG. 42

110Ap

## FIG. 43

110Bp

## FIG. 44

FIG. 45

42

46

46u

43

A2

46pa

Z

O → X

# FIG. 46

42

46fa

H1

46

46u

43

46p

46pa

A2

H2

46ma

46f

46p

46m

Z

O → X

# FIG. 47

# FIG. 48

# FIG. 49

FIG. 50

## INTERNATIONAL SEARCH REPORT

| International application No. |
|---|
| PCT/JP2018/004518 |

### A. CLASSIFICATION OF SUBJECT MATTER
Int.Cl. G01L5/16(2006.01)i, G01L1/14(2006.01)i

According to International Patent Classification (IPC) or to both national classification and IPC

### B. FIELDS SEARCHED

Minimum documentation searched (classification system followed by classification symbols)
Int.Cl. G01L5/16, G01L1/14

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 4963138 B1 (TRI-FORCE MANAGEMENT CORPORATION) 27 June 2012, fig. 29-34 & US 8966996 B2 (fig. 29-34) & CN 103430000 B (fig. 29-34) & WO 2013/014803 A1 (fig. 29-34) | 3-7 |
| X | | 9-18 |
| X | | 20-49 |
| A | | 1-2 |
| A | | 8, 19 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 March 2018 (07.03.2018) | 20 March 2018 (20.03.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

EP 3 550 276 A1

**INTERNATIONAL SEARCH REPORT**

International application No.

PCT/JP2018/004518

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
    The invention group in claims 1-39 has a feature of a deformation part in a force sensor.
    The invention group in claims 40-49 has a feature of mounting a force sensor.
    Therefore, this international patent application includes the above-described two invention groups.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017008843 W
- JP 2017539470 A

- JP 2004354049 A